# EUROPEAN PATENT APPLICATION

(11) **EP 4 827 035 A1**
(43) Date of publication of application: **21.10.2026**
(21) Application number: 24916790.9
(22) Date of filing: 30.12.2024
(51) Int. Cl.: H04L 5/00

(54) **COMMUNICATION METHOD AND DEVICE, AND SYSTEM**

(30) Priority: 08.01.2024 CN 202410037213
(71) Applicant: Huawei Technologies Co., Ltd., Shenzhen, Guangdong 518129 (CN)
(72) Inventor: BI, Xiaoyan, Shenzhen, Guangdong 518129 (CN); JIANG, Chenglong, Shenzhen, Guangdong 518129 (CN)
(74) Representative: Huawei European IPR
(86) International application number: PCT/CN2024/143990
(87) International publication number: WO 2025/148743

(57) **Abstract**

A communication method, apparatus, and system are provided, which supports flexible changes in a quantity of ports for reference signals when RF channels are dynamically disabled. A network device sends, on some or all resources in a base reference signal resource, a reference signal of m₁ ports. The base reference signal resource may be used to transmit a reference signal of a maximum of M ports, and supports channel estimation for a maximum of K ports. The m₁ ports used for the reference signals are from the M ports. A terminal may perform channel estimation based on base channel estimation assistance information and the reference signal, and then send CSI. In the method, m₁ ≤ k₁ ≤ K, and m₁ ≤ M ≤ K. That is, by using the base channel estimation assistance information, the terminal can perform channel estimation based on a reference signal of a small quantity of ports, to obtain a channel of a large quantity of ports. As a quantity of ports for reference signals sent over an air interface decreases, and port multiplexing is considered, air interface overhead introduced by the reference signals is reduced.

## Description

This application claims priority to Chinese Patent Application No. 202410037213.5, filed with the China National Intellectual Property Administration on January 8, 2024 and entitled "COMMUNICATION METHOD, APPARATUS, AND SYSTEM", which is incorporated herein by reference in its entirety.

### TECHNICAL FIELD

This application relates to the field of wireless communication, and in particular, to a communication method, apparatus, and system.

### BACKGROUND

In massive multiple-input multiple-output (massive multiple-input multiple-output, Massive MIMO) systems, using a large quantity of antennas can improve wireless capacity and coverage. To send and receive data, achieve system synchronization, and provide feedback on channel state information, channel estimation plays an increasingly critical role. Channel estimation is the process of reconstructing or restoring a received signal to compensate for signal distortion caused by channel fading and noise-induced attenuation. It leverages reference signals known in advance to both the transmitting end and receiving end to track channel changes in the time domain and frequency domain. These reference signals (reference signals, RSs) are also referred to as pilots (pilots). Currently, common reference signals include, for example, the channel state information reference signal (channel state information reference signal, CSI-RS) used to measure downlink channels, and the sounding reference signal (sounding reference signal, SRS) used to measure uplink channels.

In some scenarios, such as energy-saving scenarios, radio frequency (radio frequency, RF) channels may be dynamically disabled based on service requirements. This necessitates support for a large and dynamically changing quantity of antenna ports. However, when there are a large quantity of ports, current standards do not support dynamic changes in the quantity of ports when RF channels are dynamically disabled, resulting in limited flexibility.

### SUMMARY

This application provides a communication method, apparatus, and system, to enable flexible selection of reference signal resources for transmitting reference signals, thereby supporting dynamic changes in a quantity of ports when RF channels are dynamically disabled.

According to a first aspect, a communication method is provided. The communication method may be applied to a communication apparatus. The communication apparatus may be, for example, a terminal device, may be a component (for example, a chip, a chip system, or a processor) configured in the terminal device, or may be a logical module, software, or the like that can implement all or some functions of the terminal device. This is not limited in this application.

For example, the method includes: receiving, on a first resource, a first reference signal, where the first resource is from a first base reference signal resource, the first base reference signal resource is used to transmit a reference signal of a maximum of M ports, the reference signal of the M ports supports channel estimation for a maximum of K ports, the first reference signal is a reference signal of m₁ ports, the m₁ ports are from the M ports, m₁ is less than or equal to M, M is less than or equal to K, and m₁, M, and K are positive integers; determining, based on the first reference signal and first channel estimation assistance information, first channel state information CSI, where the first CSI corresponds to a channel of k₁ ports, the first channel estimation assistance information is determined based on base channel estimation assistance information corresponding to the first base reference signal resource, the base channel estimation assistance information is used to estimate, based on a channel measurement result of the M ports, a channel of the K ports, the first channel estimation assistance information is used to estimate, based on a channel measurement result of the m₁ ports, the channel of the k₁ ports, the k₁ ports are from the K ports, k₁ is a positive integer greater than or equal to m₁ and less than or equal to K; and sending the first CSI.

According to a second aspect, a communication method is provided. The communication method may be applied to a communication apparatus. The communication apparatus may be, for example, a network device, may be a component (for example, a chip, a chip system, or a processor) configured in the network device, or may be a logical module, software, or the like that can implement all or some functions of the network device. This is not limited in this application.

For example, the method includes: sending, on a first resource, a first reference signal, where the first resource is from a first base reference signal resource, the first base reference signal resource includes R reference signal resource units for transmitting a reference signal of M ports, the reference signal of the M ports supports channel estimation for K ports, K is less than or equal to a sum of quantities of ports supported for channel estimation by the R reference signal resource units, respectively, and is greater than a quantity of ports supported for channel estimation by any one of the R reference signal resource units, the first reference signal is a reference signal of m₁ ports, the m₁ ports are from the M ports, m₁ is less than or equal to M, M is less than or equal to K, and m₁, R, M, and K are positive integers; and receiving first channel state information CSI, where the first CSI corresponds to a channel of k₁ ports, the k₁ ports are from the K ports, and k₁ is a positive integer greater than or equal to m₁ and less than or equal to K.

In conclusion, the following relationships may be obtained: k₁ ≤ K, m₁ ≤ M, m₁ ≤ k₁, and M ≤ K.

It is not difficult to learn that there is a nesting relationship between the m₁ ports and the M ports, and between the k₁ ports and the K ports. The nesting relationship may be applied between the first channel estimation assistance information and the base channel estimation assistance information. Therefore, based on the nesting relationship, the first channel estimation assistance information may be obtained from the base channel estimation assistance information.

Based on the foregoing technical solution, the network device may flexibly select, based on service requirements, some or all resources from the first base reference signal resource to transmit the first reference signal. A terminal may obtain, based on the received first reference signal, the first channel estimation assistance information from the base channel estimation assistance information, and then estimate a channel of K or less than K ports. This can support flexible changes in a quantity of ports when RF channels are dynamically disabled. Because a quantity of ports corresponding to the first reference signal may be M or less than M, and M is less than or equal to K, a channel of a large quantity of ports may be estimated based on a reference signal of a small quantity of ports. As a quantity of ports for reference signals sent over an air interface decreases, and port multiplexing is considered, air interface overhead introduced by the reference signals is reduced.

With reference to the first aspect or the second aspect, in some possible implementations, the first base reference signal resource includes R reference signal resource units, K is less than or equal to a sum of quantities of ports supported for channel estimation by the R reference signal resource units, respectively, and is greater than a quantity of ports supported for channel estimation by any one of the R reference signal resource units, and R is a positive integer.

In other words, a quantity of ports supported for channel estimation by an *r*^{th} reference signal resource unit of the R reference signal resource units is N*ᵣ*, and K may satisfy max{N₁, $\left.{N}_{2}, …,{N}_{R}\right\} < K \leq {\sum }_{r = 1}^{R} {N}_{r}$, where *r* = 1, 2, 3, ..., R.

In other words, a quantity of ports included in an *r*^{th} reference signal resource unit of the R reference signal resource units is N*ᵣ*, and K is less than or equal to a sum of quantities of ports respectively included in the R reference signal resource units (or K is a total quantity of ports included in the R reference signal resources), and is greater than a quantity of ports included in any one of the R reference signal resource units.

In other words, a quantity of ports included in an *r*^{th} reference signal resource unit of the R reference signal resource units is N*ᵣ*, and K may satisfy $max \left\{{N}_{1}, {N}_{2}, …,{N}_{R}\right\} < K \leq {\sum }_{r = 1}^{R} {N}_{r}$, where *r* = 1, 2, 3, ..., R.

That is, the first base reference signal resource may be configured using a reference signal resource unit as a granularity. In addition, a plurality of reference signal resource units of a same base reference signal resource may be combined to obtain more ports, so that a channel of more ports may be estimated through a combination of the plurality of reference signal resource units.

With reference to the first aspect or the second aspect, in some possible implementations, the first resource includes S reference signal resource units of the R reference signal resource units, k₁ is a quantity of ports supported for channel estimation by the S reference signal resource units, k₁ is greater than a quantity of ports supported for channel estimation by any one of the S reference signal resource units, and S is a positive integer less than or equal to R.

Correspondingly, in some possible implementations of the first aspect, the receiving, on the first resource, the first reference signal includes: receiving, on the S reference signal resource units, the first reference signal.

In some possible implementations of the second aspect, the sending, on the first resource, the first reference signal includes: sending, on the S reference signal resource units, the first reference signal.

The network device may select S reference signal resource units from the R reference signal resource units to send a reference signal. The S reference signal resource units are an example of the first resource. It may be understood that k₁ is a quantity of ports supported for channel estimation by the S reference signal resource units, namely, a total quantity of ports included in the S reference signal resource units.

The network device may preconfigure the R reference signal resource units for the terminal, or may configure the S reference signal resource units for the terminal before sending the first reference signal.

With reference to the first aspect, in some possible implementations of the first aspect, before receiving, on the first resource, the first reference signal, the method further includes: receiving first information.

Correspondingly, with reference to the second aspect, in some possible implementations of the second aspect, before sending, on the first resource, the first reference signal, the method further includes: sending first information.

The first information indicates one or more of the following of each of the R reference signal resource units: a resource pattern, a port pattern, a quantity of ports supported for channel estimation, or channel estimation assistance information. An *r*^{th} reference signal resource unit of the R reference signal resource units is used to transmit a reference signal of L*ᵣ* ports. The reference signal of the L*ᵣ* ports supports channel estimation for N*ᵣ* ports. N*ᵣ* is a quantity of ports supported for channel estimation by the *r*^{th} reference signal resource unit. L*ᵣ* is a positive integer less than or equal to M. N*ᵣ* is a positive integer less than or equal to K and greater than or equal to L*ᵣ*. *r* is a positive integer from 1 to R. The resource pattern of the *r*^{th} reference signal resource unit indicates a mapping relationship between a reference signal of each of the L*ᵣ* ports and a time-frequency resource. The port pattern of the *r*^{th} reference signal resource unit indicates indexes of the L*ᵣ* ports in the N*ᵣ* ports. The channel estimation assistance information of the *r*^{th} reference signal resource unit is used to estimate, based on a channel measurement result of the L*ᵣ* ports, a channel of the N*ᵣ* ports. The base channel estimation assistance information is determined based on the channel estimation assistance information respectively corresponding to the R reference signal resources.

The network device preconfigures the R reference signal resource units for the terminal via the first information. The terminal may obtain, based on the first information, one or more of the following: a resource pattern, a port pattern, a quantity of ports supported for channel estimation, and base channel estimation assistance information. The resource pattern may be used by the terminal to determine a time-frequency position at which the first reference signal is received. The port pattern may be used to determine indexes of the m₁ ports for the first reference signal in the M ports. The base channel estimation assistance information may be used by the terminal to determine the first channel estimation assistance information. The base channel estimation assistance information may be further used to determine a maximum quantity of ports supported for channel estimation by the first base reference signal resource.

All the foregoing items may be configured by the network device, or some of the foregoing items may be configured by the network device while the other items are determined by the terminal based on the items indicated by the network device, or all the foregoing items may be determined by the terminal, for example, based on prior information. This is not limited in this application.

The first base reference signal resource includes the R reference signal resource units. Therefore, when subsequently sending a reference signal by using the first base reference signal resource, the network device does not need to configure a reference signal resource for the terminal each time. Therefore, signaling overhead can be reduced.

With reference to the first aspect, in some possible implementations of the first aspect, the method further includes: receiving second information, where the second information indicates the S reference signal resource units of the R reference signal resource units.

Correspondingly, with reference to the second aspect, in some possible implementations of the second aspect, the method further includes: sending second information, where the second information indicates the S reference signal resource units of the R reference signal resource units.

The network device may indicate the S reference signal resource units via the second information, so that the terminal receives, on the S reference signal resource units, the first reference signal.

In a possible design, the second information indicates a bitmap, where the bitmap includes R bits corresponding to the R reference signal resource units, and a value of each bit indicates whether a corresponding bit belongs to the S reference signal resource units.

Certainly, the S reference signal resource units may be indicated by the network device via the second information, or may be determined by the terminal, for example, based on a predefined rule. This is not limited in this application.

With reference to the first aspect, in some possible implementations of the first aspect, the method further includes: receiving indication information of each of the S reference signal resource units.

Correspondingly, with reference to the second aspect, in some possible implementations of the second aspect, the method further includes: sending indication information of each of the S reference signal resource units.

Indication information of an *s*^{th} reference signal resource unit of the S reference signal resource units indicates one or more of the following of the *s*^{th} reference signal resource unit: a resource pattern, a port pattern, a quantity of ports supported for channel estimation, channel estimation assistance information, or a concatenation identifier. An *rₛ*^{th} reference signal resource unit of the S reference signal resource units is used to transmit a reference signal of *L_{rₛ}* ports. The reference signal of the L*_{rₛ}* ports supports channel estimation for N*_{rₛ}* ports. N*_{rₛ}* is a quantity of ports supported for channel estimation by the *rₛ*^{th} reference signal resource unit. L*_{rₛ}* is a positive integer less than or equal to M. N*_{rₛ}* is a positive integer less than or equal to K and greater than or equal to L*_{rₛ}*. *rₛ* represents an identifier, in the R reference signal resource units, of the *s*^{th} reference signal resource unit of the S reference signal resource units. The resource pattern of the *rₛ*^{th} reference signal resource unit indicates a mapping relationship between a reference signal of each of the L*_{rₛ}* ports and a time-frequency resource. The port pattern of the *rₛ*^{th} reference signal resource unit indicates indexes of the L *_{rₛ}* ports in the N*_{rₛ}* ports. The channel estimation assistance information of the *rₛ*^{th} reference signal resource unit is used to estimate, based on a channel measurement result of the L *_{rₛ}* ports, a channel of the N*_{rₛ}* ports. The base channel estimation assistance information is determined based on the channel estimation assistance information respectively corresponding to the R reference signal resource units. The S reference signal resource units have a same concatenation identifier to indicate that channel matrices estimated based on the first reference signal transmitted on the S reference signal resource units support concatenation.

If a channel corresponding to each reference signal resource unit is represented by using a channel matrix, the terminal may determine, based on the same concatenation identifier, that channel matrices respectively corresponding to the S reference signal resource units support concatenation, so that a channel matrix of the k₁ ports can be obtained through concatenation, that is, a channel of the k₁ ports can be estimated.

Before sending the first reference signal, the network device may indicate the S reference signal resource units to the terminal, so that the terminal receives, based on indication information of the S reference signal resource units, the first reference signal. In other words, before sending a reference signal each time, the network device may indicate, to the terminal, a reference signal resource unit used for sending the reference signal.

With reference to the first aspect or the second aspect, in some possible implementations, the first CSI includes a precoding matrix indicator (precoding matrix indicator, PMI) corresponding to the channel of the k₁ ports, or indicates a channel estimation result corresponding to the channel of the k₁ ports.

In this application, the channel estimation result is a result obtained from channel estimation, and indicates a channel, for example, the channel of the k₁ ports herein; and the PMI indicates a precoding matrix, for example, a precoding matrix corresponding to the channel of the k₁ ports herein. In the following, unless otherwise specified, both the channel estimation result and the PMI may be understood with reference to descriptions herein.

Further, in some possible implementations of the first aspect, the first channel estimation assistance information includes channel estimation assistance information that is in the base channel estimation assistance information and that respectively corresponds to the S reference signal resource units. The determining, based on the first reference signal and the first channel estimation assistance information, the first CSI includes: performing channel estimation based on the first reference signal received on each of the S reference signal resource units and channel estimation assistance information that is in the base channel estimation assistance information and that corresponds to each reference signal resource unit, to obtain channels respectively corresponding to the S reference signal resource units; obtaining, based on the channels respectively corresponding to the S reference signal resource units, the channel of the k₁ ports; and determining, based on the channel of the k₁ ports, the first CSI.

Whether the terminal indicates the PMI or the channel estimation result via the first CSI may be determined by the terminal, may be configured by the network device, or may be predefined in a protocol. This is not limited in this application.

When the first base reference signal resource is divided into R reference signal resource units, the channel estimation assistance information corresponding to each reference signal resource unit may be a part of base channel estimation assistance information corresponding to the first base reference signal resource. If the base channel estimation assistance information is represented as a matrix, the channel estimation assistance information corresponding to each reference signal resource unit may be a submatrix of the matrix. The first channel estimation assistance information may include the channel estimation assistance information respectively corresponding to the S reference signal resource units, that is, may include S submatrices that are in the matrix and that respectively correspond to the S reference signal resource units. In other words, the first channel estimation assistance information may be determined based on the channel estimation assistance information respectively corresponding to the S reference signal resource units.

With reference to the first aspect, in some possible implementations of the first aspect, a concatenation rule includes: horizontally concatenating, from left to right in ascending order of identifiers corresponding to a plurality of reference signal resource units, channel matrices respectively corresponding to the plurality of reference signal resource units.

As described above, a plurality of reference signal resource units of a same base reference signal resource may be combined to obtain more ports, so that a channel of more ports may be estimated through a combination of the plurality of reference signal resource units. If a channel corresponding to each reference signal resource unit is represented by using a channel matrix, the concatenation rule may be used to restrict a manner of concatenating channel matrices respectively corresponding to a plurality of reference signal resource units. Based on the concatenation rule, the terminal may concatenate channel matrices respectively corresponding to the S reference signal resource units, to obtain a channel matrix of the k₁ ports, that is, to estimate a channel of the k₁ ports.

With reference to the first aspect or the second aspect, in some possible implementations, k₁ is an integer greater than 1, the k₁ ports include at least one reference port, and a time-frequency resource corresponding to each of the at least one reference port is included in at least two of the S reference signal resource units.

Further, in some possible implementations of the first aspect, the obtaining, based on the channels respectively corresponding to the S reference signal resource units, the channel of the k₁ ports includes: concatenating, by using each of the at least one reference port as a reference and according to the concatenation rule, the channel matrices respectively corresponding to the S reference signal resource units, to obtain the channel of the k₁ ports, where the channel matrices indicate channels.

The channel matrices are concatenated by using the reference port as a reference, so that higher estimation accuracy can be achieved.

Because each reference port is included in at least two reference signal resource units, k₁ is less than a sum of quantities of ports respectively included in the S reference signal resource units.

Optionally, the at least one reference port is determined according to a first rule, where the first rule is predefined in a protocol, or is indicated by the network device; or the at least one reference port is indicated by the network device.

With reference to the first aspect or the second aspect, in some possible implementations, the first base reference signal resource is one of the T base reference signal resources.

Correspondingly, in some possible implementations of the first aspect, before receiving, on the first resource, the reference signal, the method further includes: receiving third information. In some possible implementations of the second aspect, before sending, on the first resource, the reference signal, the method further includes: sending third information.

The third information indicates one or more of the following of each of the T base reference signal resources: a resource pattern, a maximum quantity of ports supported for channel estimation, and base channel estimation assistance information. A *t*^{th} base reference signal resource of the T base reference signal resources is used to transmit a reference signal of a maximum of M*ₜ* ports. The reference signal transmitted using the *t*^{th} base reference signal resource supports channel estimation for a maximum of K*ₜ* ports. K*ₜ* is a maximum quantity of ports supported for channel estimation by the *t*^{th} base reference signal resource. M*ₜ* is a positive integer less than or equal to M. K*ₜ* is a positive integer greater than or equal to M*ₜ*. *t* is a positive integer from 1 to T. The resource pattern of the *t*^{th} base reference signal resource indicates a mapping relationship between a reference signal of each of the M*ₜ* ports and a time-frequency resource. The base channel estimation assistance information of the *t*^{th} base reference signal resource is used to estimate, based on a channel measurement result of the M*ₜ* ports, a channel of the K*ₜ* ports.

The network device preconfigures the T base reference signal resources for the terminal via the third information. The terminal may obtain, based on the third information, one or more of the following: a resource pattern, a port pattern, a maximum quantity of ports supported for channel estimation, and base channel estimation assistance information. The resource pattern may be used by the terminal to determine a time-frequency position at which the first reference signal is received. The port pattern may be used to determine indexes of the m₁ ports for the first reference signal in the M ports. The base channel estimation assistance information may be used by the terminal to determine the first channel estimation assistance information. The base channel estimation assistance information may be further used to determine a maximum quantity of ports supported for channel estimation by the first base reference signal resource.

All the foregoing items may be configured by the network device, or some of the foregoing items may be configured by the network device while the other items are determined by the terminal based on the items indicated by the network device, or all the foregoing items may be determined by the terminal, for example, based on prior information. This is not limited in this application.

When subsequently sending a reference signal by using a resource in any one of the T base reference signal resources, the network device does not need to configure a reference signal resource for the terminal each time. Therefore, signaling overhead can be reduced.

With reference to the first aspect or the second aspect, in some possible implementations, T is a positive integer greater than 1, and at least two of the T base reference signal resources satisfy: Maximum quantities of ports for transmitting reference signals are different, and/or maximum quantities of ports supported for channel estimation are different.

When the maximum quantities of ports supported for channel estimation are the same, a larger maximum quantity of ports for transmitting reference signals indicates more accurate channel estimation, and a smaller maximum quantity of ports for reference signals indicates more reduced air interface overhead. Therefore, appropriate base reference signal resources may be selected based on different service requirements.

Therefore, different service requirements can be met by configuring a plurality of base reference signal resources that satisfy the foregoing conditions.

With reference to the first aspect, in some possible implementations of the first aspect, before receiving, on the first resource, the first reference signal, the method further includes: receiving fourth information, where the fourth information indicates an identifier of the first base reference signal resource of the T base reference signal resources.

Correspondingly, with reference to the second aspect, in some possible implementations of the second aspect, before sending, on the first resource, the first reference signal, the method further includes: sending fourth information, where the fourth information indicates an identifier of the first base reference signal resource of the T base reference signal resources.

The identifier of the first base reference signal resource is indicated, so that the terminal determines a base reference signal resource actually used to transmit a reference signal.

With reference to the first aspect or the second aspect, in some possible implementations, the first CSI is a PMI corresponding to the channel of the k₁ ports, or the first CSI is a channel estimation result indicating the channel of the k₁ ports.

Whether the terminal indicates the PMI or the channel estimation result via the first CSI may be determined by the terminal, may be configured by the network device, or may be predefined in a protocol. This is not limited in this application.

In a possible case, m₁ is equal to M, and k₁ is less than K.

In some possible implementations of the first aspect, the determining, based on the base channel estimation assistance information corresponding to the first base reference signal resource, the first channel estimation assistance information includes: determining, based on indexes of the k₁ ports in the K ports, the first channel estimation assistance information from the base channel estimation assistance information corresponding to the first base reference signal resource.

Therefore, a channel of a maximum of K ports may be estimated based on the channel measurement result of the M ports.

In another possible case, m₁ is less than M, and k₁ is less than K.

In some possible implementations of the first aspect, the determining, based on the base channel estimation assistance information corresponding to the first base reference signal resource, the first channel estimation assistance information includes: determining, based on indexes of the m₁ ports in the M ports and the indexes of the k₁ ports in the K ports, the first channel estimation assistance information from the base channel estimation assistance information corresponding to the first base reference signal resource.

Therefore, a channel of a maximum of K ports may be estimated based on a channel measurement result of less than M ports. Because the quantity m₁ of ports is less than M, air interface overhead can be further reduced.

With reference to the first aspect, in some possible implementations of the first aspect, the method further includes: receiving fifth information, where the fifth information indicates the indexes of the m₁ ports in the M ports, or an extraction rule for extracting the m₁ ports from the M ports.

Correspondingly, with reference to the second aspect, in some possible implementations of the second aspect, the method further includes: sending fifth information, where the fifth information indicates the indexes of the m₁ ports in the M ports, or an extraction rule for extracting the m₁ ports from the M ports.

The terminal may obtain, based on the fifth information, the indexes of the m₁ ports in the M ports. Alternatively, the terminal may determine, according to the extraction rule indicated by the fifth information, the indexes of the m₁ ports in the M ports, thereby determining rows, which the first channel estimation assistance information is from, of the base channel estimation assistance information. Actually, the terminal does not necessarily determine, according to the extraction rule, the indexes of the m₁ ports in the M ports. The terminal may directly extract, according to the extraction rule, m₁ rows from the base channel estimation assistance information.

With reference to the first aspect, in some possible implementations of the first aspect, the method further includes: receiving sixth information, where the sixth information indicates the indexes of the k₁ ports in the K ports.

Correspondingly, with reference to the second aspect, in some possible implementations of the second aspect, the method further includes: sending sixth information, where the sixth information indicates the indexes of the k₁ ports in the K ports.

The terminal may determine, based on the indexes indicated by the sixth information, a port for a channel requiring channel estimation.

With reference to the first aspect, in some possible implementations of the first aspect, the method further includes: receiving, on a second resource, a second reference signal, where the second resource is from the first base reference signal resource, the second reference signal is a reference signal of m₂ ports, the m₂ ports are from the m₁ ports, and m₂ is a positive integer less than or equal to m₁; determining, based on the first channel estimation assistance information, second channel estimation assistance information, where the second channel estimation assistance information is used to estimate, based on a channel measurement result of the m₂ ports, a channel of k₂ ports, the k₂ ports are from the k₁ ports, and k₂ is a positive integer greater than or equal to m₂ and less than or equal to k₁; determining, based on the second reference signal and the second channel estimation assistance information, second CSI, where the second CSI corresponds to the channel of the k₂ ports; and sending the second CSI.

Correspondingly, with reference to the second aspect, in some possible implementations of the second aspect, the method further includes: sending, on a second resource, a second reference signal, where the second resource is from the first base reference signal resource, the second reference signal is a reference signal of m₂ ports, the m₂ ports are from the m₁ ports, and m₂ is a positive integer less than or equal to m₁; and receiving the second CSI, where the second CSI corresponds to a channel of k₂ ports, the k₂ ports are from the k₁ ports, and k₂ is a positive integer greater than or equal to m₂ and less than or equal to k₁.

In conclusion, the following relationships may be obtained: m₂ ≤ m₁, k₂ ≤ k₁, and k₂ ≥ m₂.

It is not difficult to learn that there is also a nesting relationship between the m₂ ports and the m₁ ports, and between the k₂ ports and the k₁ ports. The nesting relationship may be applied between the second channel estimation assistance information and the first channel estimation assistance information. Therefore, based on the nesting relationship, the second channel estimation assistance information may be obtained from the first channel estimation assistance information. In this way, computing overhead can be reduced, and execution efficiency can be improved. In addition, because there is the nesting relationship between the m₁ ports and the M ports, and between the k₁ ports and the K ports, there is also a nesting relationship between the m₂ ports and the M ports, and between the k₂ ports and the K ports. The nesting relationship may be applied between the second channel estimation assistance information and the base channel estimation assistance information. Therefore, based on the nesting relationship, the second channel estimation assistance information may alternatively be obtained from the base channel estimation assistance information. In this way, the terminal does not need to store the first channel estimation assistance information, thereby reducing storage overhead.

In addition, the network device may reuse a same base reference signal resource, for example, the first base reference signal resource, in a plurality of rounds of channel estimation. In this way, the network device does not need to indicate, via the second information, an actually used base reference signal resource before performing channel estimation each time, thereby reducing signaling overhead.

According to a third aspect, this application provides a communication apparatus, including a module or a unit configured to implement the method according to any one of the first aspect and the possible implementations of the first aspect. Each module or unit may implement a corresponding function by executing a computer program.

According to a fourth aspect, this application provides a communication apparatus, including a processor. The processor is configured to perform the communication method according to any one of the first aspect and the possible implementations of the first aspect.

The apparatus may further include a memory configured to store instructions and data. The memory is coupled to the processor, and when executing the instructions stored in the memory, the processor may implement the method described in the foregoing aspects. The apparatus may further include a communication interface. The communication interface is used by the apparatus to communicate with another device. For example, the communication interface may be a transceiver, a circuit, a bus, a module, or another type of communication interface.

For example, the apparatus in the third aspect or the fourth aspect is a terminal, or a component in the terminal, for example, a chip, a chip system, or a processor.

According to a fifth aspect, this application provides a communication apparatus, including a module or a unit configured to implement the method according to any one of the second aspect and the possible implementations of the second aspect. Each module or unit may implement a corresponding function by executing a computer program.

According to a sixth aspect, this application provides a communication apparatus, including a processor. The processor is configured to perform the communication method according to any one of the second aspect and the possible implementations of the second aspect.

The apparatus may further include a memory configured to store instructions and data. The memory is coupled to the processor, and when executing the instructions stored in the memory, the processor may implement the method described in the foregoing aspects. The apparatus may further include a communication interface. The communication interface is used by the apparatus to communicate with another device. For example, the communication interface may be a transceiver, a circuit, a bus, a module, or another type of communication interface.

For example, the apparatus in the fifth aspect or the sixth aspect is a network device, or a component in the network device, for example, a chip, a chip system, or a processor.

According to a seventh aspect, this application provides a chip system. The chip system includes at least one processor, configured to support implementation of a function according to any one of the first aspect and the possible implementations of the first aspect, for example, receiving or processing a signal and/or information in the method.

In a possible design, the chip system further includes a memory, the memory is configured to store program instructions and data, and the memory is located inside or outside the processor.

The chip system may include a chip, or may include a chip and another discrete device.

According to an eighth aspect, this application provides a chip system. The chip system includes at least one processor, configured to support implementation of a function according to any one of the second aspect and the possible implementations of the second aspect, for example, receiving or processing a signal and/or information in the method.

In a possible design, the chip system further includes a memory, the memory is configured to store program instructions and data, and the memory is located inside or outside the processor.

The chip system may include a chip, or may include a chip and another discrete device.

According to a ninth aspect, a communication system is provided, including a network device and a terminal. The terminal may be configured to implement the method according to any one of the first aspect and the possible implementations of the first aspect, and the network device may be configured to implement the method according to any one of the second aspect and the possible implementations of the second aspect.

According to a tenth aspect, this application provides a computer-readable storage medium, including a computer program. When the computer program is run on a computer, the computer is caused to implement the method in any possible implementation of the foregoing aspects.

According to an eleventh aspect, this application provides a computer program product. The computer program product includes a computer program (also referred to as code or instructions). When the computer program is run, a computer is caused to perform the method in any possible implementation of the foregoing aspects.

The technical solutions of the third aspect to the eleventh aspect of this application correspond to the technical solutions of the first aspect and the second aspect of this application, and beneficial effect achieved in the aspects and corresponding feasible implementations are similar. Details are not described again.

### BRIEF DESCRIPTION OF DRAWINGS

FIG. 1 is a diagram of an architecture of a communication system to which a communication method provided in this application is applicable;
FIG. 2 is a diagram in which air interface overhead of a CSI-RS changes with a quantity of ports;
FIG. 3 is a diagram of channel estimation assistance information;
FIG. 4 is a schematic flowchart of a communication method according to an embodiment of this application;
FIG. 5 is another schematic flowchart of a communication method according to an embodiment of this application;
FIG. 6 is a diagram of channel concatenation according to an embodiment of this application;
FIG. 7a and FIG. 7b are another diagram of channel concatenation according to an embodiment of this application;
FIG. 8 is still another schematic flowchart of a communication method according to an embodiment of this application;
FIG. 9 is yet another schematic flowchart of a communication method according to an embodiment of this application;
FIG. 10 is yet another schematic flowchart of a communication method according to an embodiment of this application;
FIG. 11 is a diagram of base channel estimation assistance information and first channel estimation assistance information;
FIG. 12 is another diagram of base channel estimation assistance information and first channel estimation assistance information;
FIG. 13 is a diagram of a relationship between a channel matrix of m₁ ports that is measured by a terminal and a channel matrix of k₁ ports that is estimated by the terminal;
FIG. 14 is another diagram of a relationship between a channel matrix of m₁ ports that is measured by a terminal and a channel matrix of k₁ ports that is estimated by the terminal;
FIG. 15 is a schematic block diagram of a communication apparatus according to an embodiment of this application;
FIG. 16 is another block diagram of a communication apparatus according to an embodiment of this application;
FIG. 17 is a diagram of a structure of a terminal according to an embodiment of this application; and
FIG. 18 is a diagram of a structure of a network device according to an embodiment of this application.

### DESCRIPTION OF EMBODIMENTS

The following describes technical solutions of this application with reference to the accompanying drawings.

For ease of understanding of embodiments of this application, the following several descriptions are first provided.

First, in this application, indicating includes explicitly indicating (also referred to as directly indicating) and implicitly indicating (also referred to as indirectly indicating). Explicitly indicating information A means including the information A. Implicitly indicating information A means indicating the information A by using a correspondence between the information A and information B and by directly indicating the information B, where the correspondence between the information A and the information B may be predefined, prestored, pre-sintered, or preconfigured. Alternatively, indicating information A may be performed by using information B and a preset rule.

Second, in this application, that information C is used to determine information D includes that the information D is determined based only on the information C, and also includes that the information D is determined based on the information C and other information. In addition, that the information C is used to determine the information D may further include an indirect determining case, for example, a case in which the information D is determined based on information E, and the information E is determined based on the information C.

Third, in this application, "at least one" indicates one or more, "a plurality of" indicates two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific indicated meaning may be understood with reference to the context. "At least one of the following items (pieces)" or a similar expression thereof means any combination of these items, including any combination of singular items (pieces) or plural items (pieces). For example, at least one of a, b, or c may represent a, b, c, a and b, a and c, b and c, or a, b, and c. a, b, and c each may be singular or plural.

Fourth, in embodiments of this application, prefix words such as "first" and "second" are merely used for distinguishing and describing different things belonging to a same name category, and are not intended to limit a sequence, sizes, or a quantity of things. For example, "first information" and "second information" are merely different information, and have no time sequence relationship, magnitude relationship, or priority relationship.

Fifth, "sending" and "receiving" in this application indicate a signal transmission direction. For example, "sending information to a terminal" may be understood as a destination of the information being the terminal, and may include direct sending through an air interface or indirect sending by another unit or module through an air interface. "Receiving information from a network device" may be understood as a source of the information being the network device, and may include direct receiving from the network device through an air interface, or indirect receiving from the network device from another unit or module through an air interface. "Sending" may alternatively be understood as "outputting" of a chip interface, and "receiving" may alternatively be understood as "inputting" of the chip interface.

In other words, sending and receiving may be performed between devices, for example, between a terminal and a network device; or sending or receiving may be performed inside a device, for example, between components, modules, chips, software modules, or hardware modules inside the device through a bus, a cable, or an interface.

Sixth, in embodiments of this application, both "when" and "if" mean that an apparatus performs corresponding processing in an objective situation, are not intended to limit time, do not require the apparatus to necessarily have a determining action during implementation, and do not mean another limitation.

Seventh, in this application, a word such as "example", "for example", "such as", or "like" indicates an example, an illustration, or a description. Any embodiment or design scheme described as "example", "for example", "such as", or "like" in this application should not be explained as being more preferred or having more advantages than another embodiment or design scheme. Specifically, use of the word "example", "for example", "such as", or "like" is intended to present a relative concept in a specific manner.

Eighth, in this specification, downlink channel estimation is used as an example to describe the method provided in this application. However, this should not constitute a limitation on a scenario to which this solution is applicable. In uplink channel measurement, a network device may configure, for a terminal, a reference signal resource group corresponding to a plurality of CCs, and then receive, on a plurality of reference signal resources in the reference signal resource group, reference signals, and perform channel measurement and reporting. A person skilled in the art may obtain a procedure of uplink channel measurement by making simple variations based on a same concept and embodiments of this specification. For brevity, details are not described in this specification.

Ninth, in this specification, for ease of description, various pieces of information are represented by matrices. For example, a channel may be represented by a channel matrix **H**, a resource pattern may be represented by a matrix **P**_{RE}, a port pattern may be represented by a matrix **P**ₚₒᵣₜ, and base channel estimation assistance information may be represented by a matrix **P**⁺. Further examples are not listed. It should be understood that the matrix is merely a possible mathematical representation of the information, and should not constitute any limitation on this application. For example, the information may alternatively be represented by vectors, arrays, or other forms, and matrix operations may be correspondingly converted into operations in other forms, such as vector operations. This is not limited in this application.

Tenth, for ease of description, in this specification, indexes or identifiers may be consecutively numbered starting from 1. For example, T base reference signal resources include a first base reference signal resource to a T^{th} base reference signal resource. Certainly, specific implementation is not limited thereto. For example, consecutive numbering may start from 0. In this case, the T base reference signal resources include a 0^{th} base reference signal resource to a (T - 1)^{th} base reference signal resource.

Eleventh, channel estimation is a process of reconstructing or restoring a received signal to compensate for signal distortion caused by channel fading and noise-induced attenuation. It leverages reference signals known in advance to both a transmitting end and a receiving end to track channel changes in time domain and frequency domain. In this specification, the reference signal is, for example, a CSI-RS. A transmitting end of the CSI-RS may be a network device, and a receiving end of the CSI-RS may be a terminal. For ease of description, in the following, a process from sending, by the network device, a reference signal (for example, a CSI-RS) to feeding back, by the terminal based on the received reference signal, CSI is referred to as one round of channel estimation.

Certainly, the reference signal may alternatively be another reference signal, for example, an SRS. In this case, a transmitting end of the SRS may be a terminal, and a receiving end of the SRS may be a network device. A process from sending, by the terminal, a reference signal (for example, an SRS) to feeding back, by the network device based on the received reference signal, CSI is also referred to as one round of channel estimation.

Twelfth, this application relates to a channel estimation result and a channel measurement result. The channel measurement result is a channel obtained by measuring a reference signal. For example, a channel of m₁ ports may be obtained by measuring a reference signal of m₁ ports. The channel estimation result is a channel estimated based on a channel measurement result, usually a channel of more ports. For example, a channel of k₁ (k₁ ≥ m₁) ports is estimated based on a channel (or a channel measurement result) of m₁ ports.

In addition, for ease of understanding and description, content indicated by CSI is distinguished and named using a channel measurement result, a channel estimation result, and a PMI. A difference between the channel measurement result and the channel estimation result is described above, and details are not described again. The PMI indicates a precoding matrix, for example, a precoding matrix corresponding to a channel of k₁ ports.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a universal mobile telecommunications system (universal mobile telecommunications system, UMTS), a worldwide interoperability for microwave access (worldwide interoperability for microwave access, WiMAX) communication system, a fifth generation (5th generation, 5G) mobile communication system, or a new radio access technology (new radio access technology, NR). The 5G mobile communication system may include non-standalone (non-standalone, NSA) networking and/or standalone (standalone, SA) networking. The technical solutions provided in this application may be further applied to a future communication system, for example, a 6th generation (6th generation, 6G) mobile communication system. This is not limited in this application.

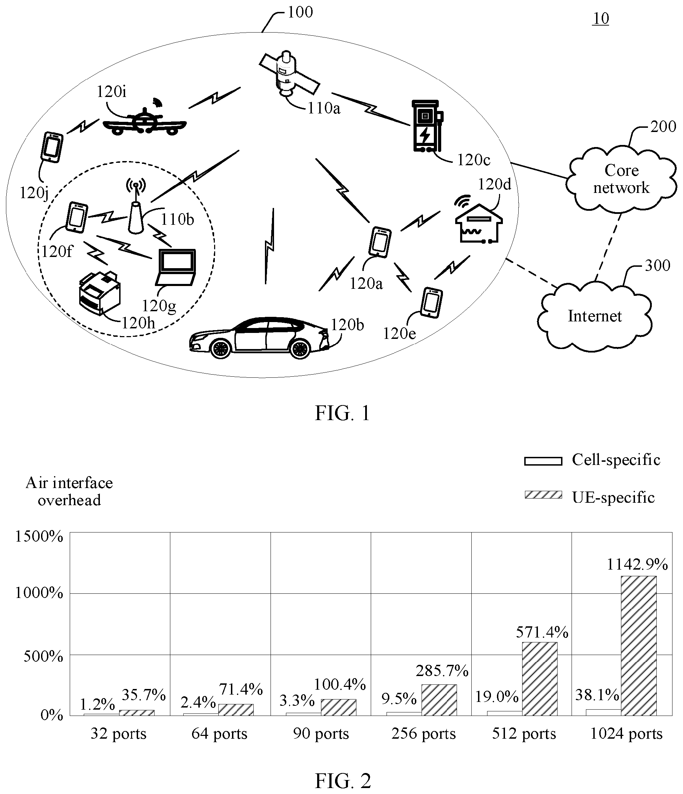

FIG. 1 is a diagram of an architecture of a communication system to which a communication method provided in this application is applicable. FIG. 1 is a diagram of a possible and non-limiting system architecture. As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 sometimes may also be referred to as an access network device, a RAN entity, an access node, or the like, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 via the network element 120i, the network element 120i is a base station. However, for a base station 110a, the network element 120i is a terminal. Both the RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a roadside unit (roadside unit, RSU).

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, smart office, smart wearables, smart transportation, a smart city, or the like. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like.

In embodiments of this application, the terminal and the network device may be hardware devices, or may be software functions running on dedicated hardware or software functions running on general-purpose hardware, for example, virtualized functions instantiated on a platform (for example, a cloud platform), or may be entities including dedicated or general-purpose hardware devices and software functions. Specific forms of the terminal and the network device are not limited in this application.

Wireless communication systems have undergone evolution and research from the first generation analog communication to 5G NR and existing 6G technologies. In this complex evolution process, high throughput and massive connectivity have remained core challenges for wireless communication networks. In a plurality of 5G NR and 6G solutions, a massive MIMO technology that can significantly improve a system capacity is still used as a key technology to satisfy requirements for high-rate transmission. In the technology, an array gain, multiplexing and diversity gains, and an interference cancellation gain in space can be obtained for a signal by using a resource in a space dimension without increasing system bandwidth, exponentially improving a capacity and spectral efficiency of a communication system.

In massive MIMO, using a large quantity of antennas can improve wireless capacity and coverage. To ensure system performance, both a transmitting end and a receiving end may perform channel estimation, channel measurement, and the like via a reference signal. As a quantity of antennas increases, air interface overhead introduced by reference signals also increases dramatically.

A CSI-RS is used as an example. In Release 15 (Release 15, R15) of the 3rd generation partnership project (3rd generation partnership project, 3GPP) standard, quantities of ports supported for the CSI-RS include {1, 2, 4, 8, 12, 16, 24, 32}, and a mapping relationship between a reference signal of each port and a time-frequency resource may be defined by a resource pattern (pattern). A group of time-frequency resources may be multiplexed for CSI-RSs of a plurality of ports in a code division, frequency division, or time division manner. In Release 19 (Release 19), it is considered to extend a maximum quantity of ports supported for the CSI-RS to 64. It can be learned that as a quantity of ports increases, air interface resources also increase.

FIG. 2 is a diagram in which air interface overhead of a CSI-RS changes with a quantity of ports. In FIG. 2, it is assumed that a frequency-domain density of the CSI-RS is 0.5 RE/port/RB, a duration is 10 transmission time intervals (transmission time interval, TTI), an uplink-downlink subframe ratio is 1:4, a quantity of UEs is 30, and the air interface overhead increases dramatically as the quantity of ports for the CSI-RS increases. As shown in the figure, when the quantity of ports for the CSI-RS is 32, the air interface overhead is as follows: cell-specific (cell-specific) overhead accounts for 1.2%, and UE-specific (UE-specific) overhead accounts for 35.7%; when the quantity of ports for the CSI-RS increases to 64, the air interface overhead is as follows: cell-specific overhead accounts for 2.4%, and UE-specific overhead accounts for 71.4%; and when the quantity of ports for the CSI-RS increases to 90, the air interface overhead is as follows: cell-specific overhead accounts for 3.3%, and UE-specific overhead accounts for 100.4%. It can be learned that, to achieve a larger quantity of ports (for example, 128/256/512/1024/...) for the CSI-RS, the air interface overhead increases dramatically, making a conventional evolution path unsustainable.

In addition, in some scenarios, such as energy-saving scenarios, RF channels may be dynamically disabled based on service requirements. This necessitates support for a large and dynamically changing quantity of antenna ports. However, when there are a large quantity of ports, current standards do not support dynamic changes in the quantity of ports as RF channels are dynamically disabled, resulting in limited flexibility.

In view of this, this application provides a method, to enable flexible selection of reference signal resources for transmitting reference signals based on requirements. In the method, a base reference signal resource and corresponding channel estimation assistance information are defined. The channel estimation assistance information may be used to assist a terminal in estimating, based on a reference signal of a small quantity of ports, a channel of a large quantity of ports (for example, a maximum of K ports, where K is a positive integer greater than or equal to M). In this way, a network device may flexibly select, based on service requirements, some or all resources in the base reference signal resource to transmit a reference signal. The terminal may perform channel estimation based on the channel estimation assistance information and the received reference signal. Therefore, flexible changes in a quantity of ports can be supported when RF channels are dynamically disabled, and air interface resource overhead of reference signals is reduced accordingly.

The following describes in detail the method provided in this application with reference to the accompanying drawings.

To better understand the method provided in embodiments of this application, the following briefly describes terms in this application.
1. Antenna port: a logical concept that may be briefly referred to as a port. There is no direct correspondence between one antenna port and one physical antenna. The antenna port is usually associated with a reference signal, and the antenna port may be understood as a transceiver interface on a channel through which the reference signal passes. For a low-frequency system, one antenna port may correspond to one or more antenna array elements. The array elements jointly send a reference signal. A receiving end may consider the array elements as a whole, and does not need to distinguish between the array elements. For a high-frequency system, an antenna port may correspond to one beam. Similarly, a receiving end only needs to consider the beam as an interface, and does not need to distinguish between array elements.
2. Channel estimation assistance information: information that may be used to assist channel estimation. In this application, the channel estimation assistance information may be used to assist a terminal in estimating, based on a reference signal of a small quantity of ports, a channel of a large quantity of ports.

The channel estimation assistance information may be obtained based on a channel. For example, a channel is denoted as a matrix **H**, and the matrix **H** may be referred to as a channel matrix. For each receive port, the channel matrix **H** includes N_{TX} columns, where N_{TX} represents a quantity of send ports, namely, a quantity of ports for reference signals. For example, the channel matrix **H** has dimensions of N_{RE} × N_{TX}, where N_{RE} represents a quantity of REs for transmitting reference signals. The channel may be obtained based on prior information. The channel may be, for example, a downlink channel obtained by estimating an uplink channel based on uplink-downlink reciprocity, may be a channel in a historical time period, or may be a channel predicted by an artificial intelligence (artificial intelligence, AI) model. This is not limited in this application.

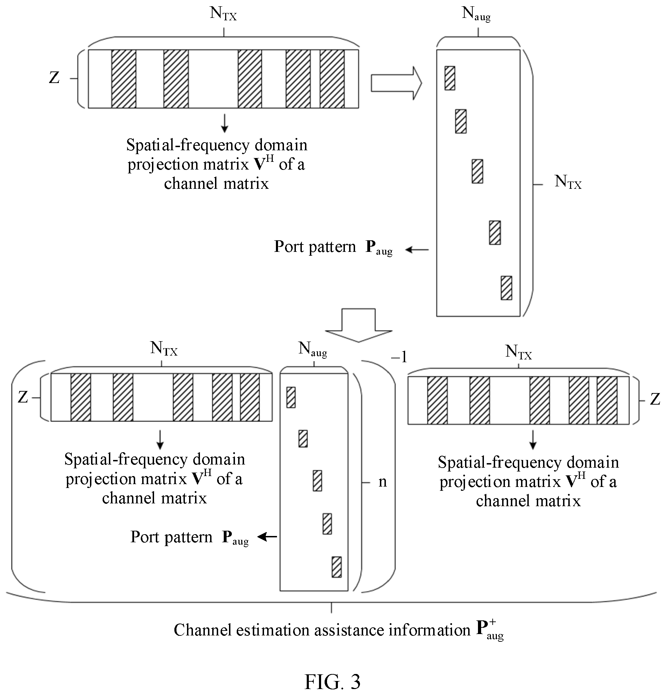

FIG. 3 shows an example of channel estimation assistance information. For example, singular value decomposition (singular value decomposition, SVD) is performed on the channel matrix **H** to obtain a spatial domain projection matrix **V**^{H} of the channel. The matrix **V**^{H} has dimensions Z × N_{TX}, that is, includes N_{TX} column vectors, where each column vector is a spatial domain basis vector corresponding to one of N_{TX} ports. The matrix **V**^{H} is a matrix formed by Z row vectors in a right unitary matrix that is obtained by performing SVD on the channel matrix **H**, where Z is a rank (rank) of the channel. However, this application is not limited thereto. Alternatively, the matrix **V**^{H} may be formed by N_{TX} codewords that are determined from a predefined codebook based on prior information, and each of the N_{TX} codewords is a spatial domain basis vector corresponding to one of the N_{TX} ports.

A maximal linearly independent set of column vectors is obtained from the matrix **V**^{H}. The maximal linearly independent set includes, for example, Z column vectors. Considering a specific amount of redundancy, N_{aug} (N_{aug} is an integer greater than or equal to Z) column vectors may be selected from the matrix **V**^{H}, and the N_{aug} column vectors include the Z column vectors (namely, the maximal linearly independent set). The subscript aug in N_{aug} represents augmented (augmented). A matrix **P**_{aug} may be obtained based on positions of the N_{aug} column vectors in the **V**^{H}. The matrix **P**_{aug} has dimensions N_{TX} × N_{aug}, where N_{aug} is a positive integer less than or equal to N_{TX}. As shown in the figure, in each row of the matrix **P**_{aug}, a quantity of non-zero elements (for example, "1") does not exceed 1, and in each column of the matrix **P**_{aug}, a quantity of non-zero elements (for example, "1") is 1. The matrix **P**_{aug} includes N_{aug} non-zero elements (for example, "1"), where each non-zero element is located in one column of the matrix **P**_{aug}, and all other elements are zero. This indicates that N_{aug} important ports are selected from the N_{TX} ports to send a reference signal. Positions of the N_{aug} non-zero elements in respective columns of the matrix **P**_{aug} correspond to the positions of the N_{aug} columns in the **V**^{H}, and may indicate indexes of the N_{aug} ports in the N_{TX} ports. Therefore, the matrix **P**_{aug} may also be referred to as a matrix indicating a port pattern of a reference signal.

Channel estimation assistance information **P**⁺ may be obtained based on the matrix **V**^{H} and the matrix **P**_{aug}. The **P**⁺ satisfies: (**V**^{H}**P**_{aug})⁻¹**V**^{H}, and has dimensions N_{aug} × N_{TX}. One column vector in the **P**⁺ is channel estimation assistance sub-information corresponding to one of the N_{TX} ports. Based on the channel estimation assistance sub-information, a network device may send reference signals through the N_{aug} ports corresponding to N_{aug} spatial domain basis vectors of the maximal linearly independent set. The terminal estimates, based on the channel estimation assistance information **P**⁺ and the reference signals received from the N_{aug} ports, a channel of the N_{TX} ports.

Specifically, the reference signals received by the terminal are reference signals sent by the network device through the N_{aug} ports. Therefore, the reference signals received by the terminal are reference signals that pass through a channel corresponding to the N_{aug} ports. The terminal may measure, based on a reference signal, a channel **H** ' . The **H** ' satisfies: **H** ' = **H** · P_{aug} . The **H** ' has dimensions of N_{TX} × N_{aug}. Then, the channel **H** ' may be multiplied by the channel estimation assistance information **P**⁺ , to obtain an estimated value **Ĥ** of the channel of the N_{TX} ports. The **Ĥ** satisfies: **H** = **H** · **P**_{aug} · **P**⁺ = **H** · **P**_{aug} ·(V^{H} · **P**_{aug})⁻¹V^{H}.

It is not difficult to learn that, although a quantity of ports N_{aug} for sending reference signals may be less than or equal to N_{TX}, because the N_{aug} ports are obtained by computing the maximal linearly independent set of the **V**^{H}, a remaining port is correlated with at least one of the N_{aug} ports, and a channel of another port may be estimated based on the N_{aug} ports. The channel estimation assistance information **P**⁺ satisfies: (**V**^{H}**P**_{aug}) ⁻¹**V**^{H}, which is analogous to performing a matrix division operation on the **V**^{H}. When performing channel estimation, the terminal multiplies a measured channel (namely, **HP**_{aug}) by the channel estimation assistance information **P**⁺, obtaining: **HP**_{aug}(**V**^{H}**P**_{aug}) ⁻¹**V**^{H}. In this way, the channel matrix **H** corresponding to the **V**^{H} may be obtained, that is, the channel of the N_{TX} ports may be reconstructed.

It should be understood that the method for channel estimation based on the channel estimation assistance information is a method for channel estimation based on a sparse theory.

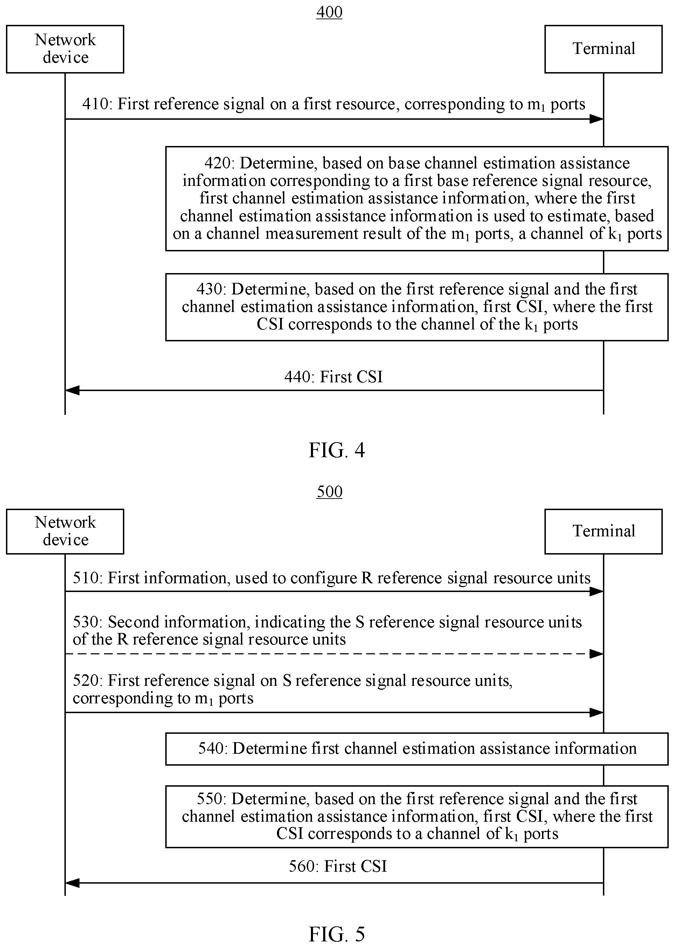

The following describes in detail the communication method provided in this application with reference to the embodiments shown in FIG. 4, FIG. 5, FIG. 8, FIG. 9, and FIG. 10. It should be understood that in the procedures shown in the accompanying drawings, the method is described by using interaction between a network device and a terminal as an example. The network device in FIG. 4 may alternatively be replaced with a component (for example, a chip, a chip system, or a processor) configured in the network device, or a logical module, software, or the like that can implement all or some functions of the network device. The terminal may be replaced with a component (for example, a chip, a chip system, or a processor) configured in the terminal, or a logical module, software, or the like that can implement all or some functions of the terminal.

FIG. 4 is a schematic flowchart of a communication method according to an embodiment of this application. The communication method 400 shown in FIG. 4 includes step 401 to step 410. The following describes in detail steps in the method 400.

In step 410, the network device sends, on a first resource, a first reference signal. Correspondingly, the terminal receives, on the first resource, the first reference signal.

For example, in a RAN in which a CU, a DU, and an RU are deployed, a specific implementation of step 410 may be: A CU-CP generates a first reference signal, and sends the first reference signal to the terminal through the DU and the RU. In an ORAN, a specific implementation of step 410 may be: An O-CU-CP generates a first reference signal, and sends the first reference signal to the terminal through an O-DU and an O-RU.

The first resource is from a first base reference signal resource. In other words, the first resource is some or all resources in the first base reference signal resource. Because the first base reference signal resource may include resources in three dimensions: time domain, frequency domain, and spatial domain, the first resource is some or all resources in the first base reference signal resource. Specifically, resources occupied by the first resource in time-frequency domain are some or all resources in the first base reference signal resource, and/or resources occupied by the first resource in spatial domain are some or all resources in the first base reference signal resource. That resources occupied by the first resource in spatial domain are some or all resources in the first base reference signal resource may alternatively be replaced with that ports included in the first resource are some or all of ports included in the first base reference signal resource.

In this application, the first base reference signal resource includes K ports, where K is a positive integer. Some or all of the K ports may be used to transmit reference signals. For example, the first base reference signal resource may be used to transmit a reference signal of a maximum of M ports, where M is a positive integer less than or equal to K.

It can be learned, based on the process of obtaining the port pattern in the foregoing term description, that M (which may correspond to N_{aug} in the foregoing term description) ports may be important ports selected from K (which may correspond to N_{TX} in the foregoing term description) ports, and (K - M) ports excluding the M ports from the K ports are correlated with at least one of the M ports. Therefore, the reference signal of the M ports may support channel estimation for a maximum of K ports. In other words, the reference signal of the M ports may be used to estimate a channel of a maximum of K ports. That is, a maximum quantity of ports supported for channel estimation by the first base reference signal resource is K.

Because the first resource is from the first base reference signal resource, a quantity of ports for the first reference signal transmitted on the first resource may not be greater than M, and is denoted as m₁ in this specification, where m₁ is a positive integer less than or equal to M. It may be understood that the m₁ ports are from the M ports. In other words, the m₁ ports are some or all of the M ports. Based on the foregoing description, it is not difficult to learn that a reference signal of the m₁ ports may be used to estimate a channel of some or all of the K ports, for example, k₁ ports, where k₁ is a positive integer less than or equal to K and greater than or equal to m₁.

In this application, the first base reference signal resource may be considered as a preconfigured reference signal resource (which may be specifically preconfigured by the network device). The network device may preconfigure the first base reference signal resource for the terminal via signaling, or may indicate, to the terminal when channel estimation needs to be performed, a resource actually used to transmit a reference signal. This is not limited in this application.

It should be understood that the first base reference signal resource may be one of one or more base reference signal resources. In other words, the network device may preconfigure one or more base reference signal resources, and each base reference signal resource involves two quantities of ports: a maximum quantity of ports for transmitting reference signals (briefly referred to as a maximum quantity of ports for reference signals, for example, M) and a maximum quantity of ports supported for channel estimation (briefly referred to as a maximum quantity of supported ports or a quantity of included ports, for example, K). In this embodiment, the first base reference signal resource is merely used as an example for description, and should not constitute any limitation on this application.

It should be noted that the "maximum quantity of ports for transmitting reference signals" by the base reference signal resource may be understood as: It can be learned, from the foregoing description with reference to the channel estimation assistance information, that a matrix (namely, the foregoing matrix **P**_{aug}) indicating a port pattern of a reference signal may be determined based on a maximal linearly independent set of a spatial domain projection matrix of a channel, and a quantity of non-zero elements in the matrix is denoted as the maximum quantity of ports for transmitting reference signals by the base reference signal resource, each non-zero element in the matrix is located in one column, and each column corresponds to one port. In other words, the maximum quantity of ports for transmitting reference signals by the base reference signal resource may be a quantity of columns of the matrix. The first base reference signal resource is used as an example. A maximum quantity of ports for transmitting reference signals by the first base reference signal resource is M, that is, a matrix indicating a port pattern of a reference signal includes M columns. It should be understood that, this does not mean that the network device can only send reference signals through M ports. The network device may alternatively send reference signals through more than M ports, which achieves a small gain, and may introduce air interface overhead, making it unnecessary.

Correspondingly, the "maximum quantity of ports supported" for channel estimation by the base reference signal may be a quantity of rows of the matrix indicating the port pattern of the reference signal. If a resource is defined as a resource in three dimensions: time domain, frequency domain, and spatial domain, the "maximum quantity of ports supported" for channel estimation by the base reference signal resource may be referred to as a quantity of ports included in the base reference signal resource. The first base reference signal resource is used as an example. A maximum quantity of ports supported for channel estimation by the first base reference signal resource is K. In other words, the first base reference signal resource includes K ports.

In step 420, the terminal determines, based on base channel estimation assistance information corresponding to the first base reference signal resource, first channel estimation assistance information.

The channel estimation assistance information has been described in the foregoing term description. In this embodiment, for ease of distinction and description, channel estimation assistance information corresponding to the first base reference signal resource is denoted as base channel estimation assistance information, and channel estimation assistance information used to perform channel estimation based on the first reference signal is denoted as first channel estimation assistance information.

The base channel estimation assistance information may be represented by a matrix, and dimensions of the matrix may correspond to the maximum quantity M of ports for transmitting reference signals and the maximum quantity K of ports supported for channel estimation of the first base reference signal resource. In an example, the base channel estimation assistance information is a matrix of dimensions M × K. The base channel estimation assistance information may be used to estimate, based on a channel measurement result of the M ports, the channel of the K ports. Estimating, based on the channel measurement result of the M ports, the channel of the K ports may be understood as: The channel measurement result obtained by measuring the reference signal of the M ports is the channel of the M ports, and then the channel of the K ports may be obtained by reconstructing the channel of the M ports based on the base channel estimation assistance information. Same or similar descriptions in the following may be understood based on this, and details are not described again.

The base channel estimation assistance information may be preconfigured by the network device for the terminal via signaling, may be determined by the terminal using the calculation method in the foregoing term description, may be historical channel estimation assistance information, or may be pre-stored in a device before delivery. This is not limited in this application.

Because the first resource is some or all resources in the first base reference signal resource, the first channel estimation assistance information may be determined based on the base channel estimation assistance information. It is not difficult to learn, based on the dimensions M × K of the base channel estimation assistance information, that the first channel estimation assistance information may be a matrix of dimensions m₁ × k₁, and the matrix may be a matrix that is determined from the base channel estimation assistance information and that corresponds to the m₁ ports and the k₁ ports. The first channel estimation assistance information may be used to estimate, based on a channel measurement result of the m₁ channels, a channel of the k₁ ports.

With reference to different embodiments, the following describes in detail configuration of the first base reference signal and determining of the first channel estimation assistance information under different values of m₁ and k₁. Therefore, a specific implementation process of step 420 is not described in detail herein.

In step 430, the terminal determines, based on the first reference signal and the first channel estimation assistance information, first CSI, where the first CSI corresponds to a channel of the k₁ ports.

In this application, the first CSI may indicate the channel of the k₁ ports, for example, may be a channel estimation result indicating the channel of the k₁ ports; or the first CSI may indicate a precoding matrix corresponding to the channel of the k₁ ports, for example, may be a PMI corresponding to the channel of the k₁ ports.

The channel corresponding to the k₁ ports may be obtained based on the first reference signal and the first channel estimation assistance information. As described above, the first channel estimation assistance information may be used to estimate, based on a channel measurement result of the m₁ ports, the channel of the k₁ ports. That is, the terminal may obtain a channel of the m₁ ports by measuring the first reference signal, and then obtain the channel of the k₁ ports by reconstructing the channel of the m₁ ports based on the first channel estimation assistance information.

In another possible implementation, the terminal may measure, based on the reference signal of the m₁ ports, the channel corresponding to the m₁ ports, and then estimate, by using a least square (least square, LS) method or an interpolation method, the channel corresponding to the k₁ ports. In this case, the terminal may determine, based on the reference signals (namely, first reference signals) of the m₁ ports, the channel of the m₁ ports, and then determine the channel of the k₁ ports without reference to the first channel estimation assistance information. Both the least square method and the interpolation method are existing technologies. Therefore, details are not described herein.

After the channel of the k₁ ports is determined, the channel of the k₁ ports may be quantized to obtain the channel estimation result indicating the channel of the k₁ ports.

The precoding matrix corresponding to the channel of the k₁ ports may be determined based on the channel of the k₁ ports. The terminal may estimate the channel of the k₁ ports using the method provided above, and then perform SVD on a channel matrix of the k₁ ports to obtain a precoding matrix adapted to the channel matrix of the k₁ ports. Then, the terminal quantizes the precoding matrix by using the PMI, for example, quantizes the precoding matrix using a type I (type I) or type II (type II) codebook feedback scheme defined in the 3GPP technical specification (technical specification, TS) 38.214. Both a manner in which the terminal obtains, based on the channel matrix, the precoding matrix and a manner in which the terminal quantizes the precoding matrix are existing technologies. Therefore, details are not described herein.

In step 440, the terminal sends the first CSI to the network device. Correspondingly, the network device receives the first CSI from the terminal.

For example, in a RAN in which a CU, a DU, and an RU are deployed, a specific implementation of step 440 may be: The RU receives the first CSI, and forwards the received first CSI to the DU for processing. In an ORAN, a specific implementation of step 440 may be: An O-RU receives the first CSI, performs partial physical layer processing on the first CSI, and forwards the processed first CSI to an O-DU for processing.

The terminal may send, by using an uplink resource, the first CSI to the network device. For example, the first CSI is carried in uplink control information (uplink control information, UCI).

Optionally, the method further includes: The network device determines, based on the first CSI, the precoding matrix corresponding to the channel of the k₁ ports.

It should be understood that an operation that may be performed by the network device based on the first CSI is an internal implementation of the network device. An operation performed by the network device after receiving the first CSI is not limited in this application.

In an example, the network device may determine, based on the first CSI, the precoding matrix corresponding to the channel of the k₁ ports. As described in step 430, the first CSI determined by the terminal based on the first reference signal may be a PMI corresponding to the channel of the k₁ ports, or may be a channel estimation result that may indicate the channel corresponding to the k₁ ports. Depending on different content of the first CSI, operations of determining the precoding matrix by the network device are different.

If the first CSI is the PMI corresponding to the channel of the k₁ ports, the network device may directly determine, based on the PMI, the precoding matrix.

If the first CSI is the channel estimation result indicating the channel of the k₁ ports, the network device may determine, based on the channel estimation result, the channel matrix of the k₁ ports, and then determine, based on the channel matrix, the precoding matrix corresponding to the channel of the k₁ ports.

It should be understood that, for a specific manner of determining, based on the channel matrix of the k₁ ports, the corresponding precoding matrix, refer to existing technologies. For example, a conjugate transpose of a right unitary matrix obtained by performing SVD on the channel matrix of the k₁ ports may be determined as the precoding matrix. A specific process is not described in detail herein.

Based on the foregoing technical solution, the network device may flexibly select, based on service requirements, some or all resources in a base reference signal resource to transmit a reference signal. The terminal may estimate a channel based on channel estimation assistance information corresponding to the base reference signal resource and a received reference signal. Therefore, flexible changes in a quantity of ports can be supported when RF channels are dynamically disabled, and air interface resource overhead of reference signals is reduced accordingly.

In this application, the base reference signal resource is defined in a plurality of different manners.

In one manner, the base reference signal resource is divided into a plurality of resources (denoted as reference signal resource units) of a finer granularity, and the network device may flexibly select one or more reference signal resource units from the plurality of reference signal resource units to transmit a reference signal. Each reference signal resource unit may correspond to one piece of channel estimation assistance information, and channel estimation assistance information respectively corresponding to the plurality of reference signal resource units is concatenated to obtain base channel estimation assistance information corresponding to the base reference signal resource. The terminal may perform channel estimation based on channel estimation assistance information corresponding to each reference signal resource unit actually used during transmission of a reference signal. The method provided in this application is described in the following embodiments shown in FIG. 5, FIG. 8, and FIG. 9 with reference to the manner.

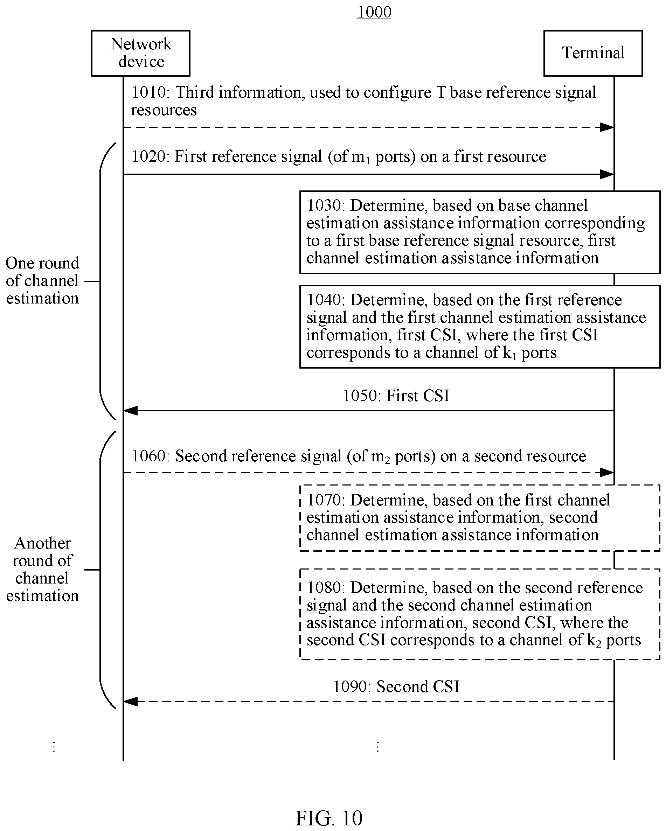

In another manner, the base reference signal resource is configured as a whole. The network device may select some or all of ports in the base reference signal resource to send a reference signal. The base reference signal resource corresponds to the base channel estimation assistance information. The terminal may estimate, based on a port for a reference signal that is actually used during transmission of a reference signal, a channel of any quantity of ports, where the quantity is within a range of a maximum quantity of supported ports. The method provided in this application is described in the following embodiment shown in FIG. 10 with reference to the manner.

The following describes the foregoing two manners in more detail with reference to different embodiments.

FIG. 5 is another schematic flowchart of a communication method according to an embodiment of this application. In the method shown in FIG. 5, a first base reference signal resource is divided into R (R is a positive integer greater than 1) reference signal resource units of a finer granularity. A network device preconfigures the first base reference signal resource for a terminal via signaling. During channel estimation, the network device may transmit a first reference signal by using S (S is a positive integer less than or equal to R) reference signal resource units of the R reference signal resource units.

The method 500 shown in FIG. 5 may include step 510 to step 560. The following describes in detail steps in the method 500.

In step 510, the network device sends first information to the terminal, where the first information is used to configure R reference signal resource units. Correspondingly, the terminal receives the first information from the network device.

For example, in a RAN in which a CU, a DU, and an RU are deployed, a specific implementation of step 510 may be: A CU-CP generates first information, and sends the first information to the terminal through the DU and the RU. In an ORAN, a specific implementation of step 510 may be: An O-CU-CP generates first information, and sends the first information to the terminal through an O-DU and an O-RU.

In this embodiment, the first base reference signal resource is divided into R reference signal resource units. Therefore, that the first information is used to configure the R reference signal resource units may be replaced with that the first information is used to configure the first base reference signal resource. In other words, the first information may also be referred to as configuration information of the R reference signal resource units, or configuration information of the first base reference signal resource.

For example, the first information indicates one or more of the following of each reference signal resource unit: an identifier, a resource pattern, a port pattern, a quantity of ports supported for channel estimation, or channel estimation assistance information. In other words, configuration of each of the R reference signal resource units by the network device includes an indication of one or more of the following: an identifier, a resource pattern, a port pattern, a quantity of ports supported for channel estimation, or channel estimation assistance information.

For ease of understanding, the following uses a *r*^{th} reference signal resource unit as an example to describe configuration of the reference signal resource unit by the first information. It should be understood that the *r*^{th} reference signal resource unit is any one of the R reference signal resource units, where *r* may be any integer from 1 to R. The *r*^{th} reference signal resource unit includes N*ᵣ* ports, and may be used to transmit a reference signal of L*ᵣ* ports, and the reference signal of the L*ᵣ* ports may be used to estimate a channel of the N*ᵣ* ports, where L*ᵣ* ≥ N*ᵣ*, and L*ᵣ* and N*ᵣ* are positive integers.

**Identifier**: Different identifiers may be used to identify different reference signal resource units. Each identifier corresponds to one reference signal resource unit.

**Resource pattern**: Because the *r*^{th} reference signal resource unit includes the N*ᵣ* ports, and may be used to transmit the reference signal of the L*ᵣ* ports, a resource pattern of the *r*^{th} reference signal resource unit may indicate a mapping relationship between a reference signal of each of the L*ᵣ* ports and a time-frequency resource. That is, time-frequency resources (more specifically, REs) to which the reference signal of each of the L*ᵣ* ports is mapped may be determined based on the resource pattern, so that the terminal receives the reference signal at corresponding positions.

**Port pattern**: Because the *r*^{th} reference signal resource unit may be used to transmit the reference signal of the L*ᵣ* ports and estimate a channel matrix of the N*ᵣ* ports, and the L*ᵣ* ports are included in the N*ᵣ* ports, a port pattern may indicate indexes of the L*ᵣ* ports in the N*ᵣ* ports. It may be understood that the port pattern implicitly indicates a quantity of ports for transmitting reference signals and a quantity of ports supported for channel estimation of the *r*^{th} reference signal resource unit.

When the first information indicates the resource pattern and the port pattern, in a possible implementation, the resource pattern and the port pattern are indicated by indicating a matrix **P***ᵣ*. The matrix **P***ᵣ* satisfies: **P***ᵣ* = **P**_{port,*r*} ⊗ **P**_{RE,*r*}, **P**_{port,*r*} represents a port pattern of the *r*^{th} reference signal resource unit, **P**_{RE,*r*} represents a resource pattern of the *r*^{th} reference signal resource unit, and ⊗ represents Kronecker product (Kronecker product). Because **P***ᵣ* = **P**_{port,*r*} ⊗ **P**_{RE,*r*} , **P***ᵣ* is referred to as a pattern corresponding to the *r*^{th} reference signal resource unit in this specification.

The following describes the matrix **P**_{port,*r*} and the matrix **P**_{RE,*r*} in detail.

For example, a quantity of REs included in the *r*^{th} reference signal resource unit is N_{RE,*r*}, and a quantity of ports supported for channel estimation is N*ᵣ*. For each receive port, a channel matrix **H***ᵣ* that can be observed is a matrix of dimensions N_{RE,*r*} × N*ᵣ*. The matrix **P**_{port,*r*} and the matrix **P**_{RE,*r*} may be obtained by performing spatial domain processing and time-frequency domain processing on a channel, respectively.

### (1) Spatial domain processing

The network device may perform spatial domain orthogonal-triangular (orthogonal-triangular, QR) decomposition on the channel matrix **H***ᵣ*, to obtain the matrix **P**_{port,*r*} . The matrix **P**_{port,*r*} has dimensions of N*ᵣ* × L*ᵣ*, and includes L*ᵣ* non-zero elements, and all other elements are zero. The L*ᵣ* non-zero elements are located in L*ᵣ* columns of the matrix **P**_{port,*r*} , that is, each non-zero element is located in one column of the matrix **P**_{port,*r*} . The L*ᵣ* non-zero elements correspond to the L*ᵣ* ports, and a position of each non-zero element in a column in which the non-zero element is located may indicate an index of a corresponding port in the N*ᵣ* ports. This indicates that L*ᵣ* important ports are selected from the N*ᵣ* ports. For example, if a non-zero element is in a first row of a column in which the non-zero element is located, it indicates that a port corresponding to the non-zero element is a first port of the L*ᵣ* ports, that is, an index of the port can be determined. It should be understood that the matrix **P**_{port,*r*} is equivalent to the matrix **P**_{aug} in the foregoing term description of the channel estimation assistance information.

The channel matrix **H***ᵣ* may be right multiplied by the matrix **P**_{port,*r*} , to obtain a matrix **H*ᵣ***', where **H***ᵣ*' = **H***ᵣ***P**_{port***,**r*} . The matrix **H*ᵣ***' has dimensions of N_{RE,*r*} × L*ᵣ*, that is, a quantity of ports is reduced from N*ᵣ* to L*ᵣ*, which is analogous to achieving port dimensionality reduction in spatial domain through precoding.

### (2) Time-frequency domain processing

Time QR decomposition may be further performed on a transpose of the matrix **H*ᵣ***', to obtain the matrix **P**_{RE,*r*}. The matrix **P**_{RE,*r*} has dimensions of N_{RE,*r*} × N'_{RE,*r*}, where N'_{RE,*r*} is less than N_{RE,*r*}. The matrix **P**_{RE,*r*} includes N'_{RE,*r*} non-zero elements, and all other elements are zero. The N'_{RE,*r*} non-zero elements are located in N'_{RE,*r*} columns of the matrix **P**_{RE,*r*} , that is, each non-zero element is located in one column of the matrix **P**_{RE,*r*} . The N'_{RE,*r*} non-zero elements correspond to N'_{RE,*r*} REs, and a position of each non-zero element in a column in which the non-zero element is located may indicate an index of a corresponding RE in N_{RE,*r*} REs. This indicates that N'_{RE,*r*} important REs are selected from the N_{RE,*r*} REs. In this way, resource overhead of reference signals in time-frequency domain can be reduced.

It should be understood that the foregoing describes a process of obtaining the matrix **P**_{port,*r*} and the matrix **P**_{RE,*r*} (or the port pattern and the resource pattern) by using an example in which spatial domain processing is performed before time-frequency domain processing. However, this should not constitute any limitation on this application. In an actual processing process, the network device may perform time-frequency domain QR decomposition on the channel matrix **H***ᵣ*, followed by spatial domain QR decomposition, to obtain the **P**_{port,*r*} and the **P**_{RE,*r*} , and then obtain the **P***ᵣ*. Alternatively, the network device may obtain the port pattern and the resource pattern in another manner. This is not limited in this application. The network device may obtain, based on the foregoing process, a matrix {**P***ᵣ*} corresponding to each base reference signal resource, and indicate the matrix to the terminal via the first information.

Because **P***ᵣ* = **P**_{port,*r*} ⊗ **P**_{RE,*r*} , dimensions of the **P***ᵣ* can be obtained as: (N*ᵣ* × N_{RE,*r*}) × (L*ᵣ* × N'_{RE,*r*}).

It should be further understood that the port pattern and the resource pattern may alternatively be indicated by indicating the matrix **P**_{port,*r*} and the matrix **P**_{RE,*r*} , and are not necessarily indicated by indicating the matrix **P***ᵣ*.

In another implementation, the network device may not indicate the resource pattern and the port pattern of each base reference signal resource via the first information, but the terminal determines the resource pattern and the port pattern of each base reference signal resource. The terminal may obtain, based on the foregoing process, a matrix {**P***ᵣ*} corresponding to each base reference signal resource, obtain matrices { **P**_{port,*r*} } and { **P**_{RE,*r*} } corresponding to each base reference signal resource, or obtain a resource pattern and a port pattern corresponding to each base reference signal resource. Alternatively, the terminal may obtain a historical port pattern and resource pattern of a reference signal resource that occupies a same position as each base reference signal resource. This is not limited in this application.

Alternatively, the network device may indicate the **P**_{port,*r*} or the **P**_{RE,*r*} to the terminal via the first information, and the terminal determines, based on the received first information, the other matrix.

It should be noted that subscripts port and RE of the **P**_{port,*r*} and the **P**_{RE,*r*} herein are merely used to distinguish between a spatial domain (that is, a port) resource and a time-frequency domain resource (for example, a time-frequency unit). The time-frequency unit may include but is not limited to a resource element (resource element, RE). For example, one time-frequency unit may include a plurality of REs, and the plurality of REs may be used by a plurality of ports to send reference signals. In other words, the plurality of ports may multiplex the plurality of REs (for example, time division multiplexing or frequency division multiplexing), or the plurality of REs may be multiplexed by the plurality of ports.

**Channel estimation assistance information**: The channel estimation assistance information has been described in the foregoing term description, and the channel estimation assistance information may be represented by a matrix. In this embodiment, channel estimation assistance information corresponding to each reference signal resource unit may be represented as a matrix having smaller dimensions than the base channel estimation assistance information. Because the *r*^{th} reference signal resource unit may be used to transmit the reference signal of the L*ᵣ* ports and estimate the channel matrix of the N*ᵣ* ports, channel estimation assistance information corresponding to the *r*^{th} reference signal resource unit may be represented as a matrix of L*ᵣ* × N*ᵣ*.

The network device may indicate, to the terminal via the first information, channel estimation assistance information corresponding to each reference signal resource unit. The base channel assistance information corresponding to each reference signal resource unit may alternatively be determined by the terminal rather than being indicated via the first information. Alternatively, the terminal may calculate, based on the method provided in the foregoing term description, the channel estimation assistance information corresponding to each reference signal resource unit. Alternatively, the terminal may obtain historical channel estimation assistance information of a reference signal resource that occupies a same position as each reference signal resource unit.

**Quantity of ports supported for channel estimation**: a quantity of ports of a channel matrix that can be estimated via a reference signal transmitted using the base reference signal resource. For example, a quantity of ports supported for channel estimation by the *r*^{th} reference signal resource unit is N*ᵣ*. In other words, the *r*^{th} reference signal resource unit may be used to estimate the channel of the N*ᵣ* ports.

Because dimensions of channel estimation assistance information of each reference signal resource unit are related to the quantity of ports supported for channel estimation, and a quantity of columns of the channel estimation assistance information of the *r*^{th} reference signal resource unit may be the quantity of ports supported for channel estimation by the *r*^{th} reference signal resource unit. Therefore, the channel estimation assistance information may indicate the quantity of ports supported for channel estimation. In other words, the channel estimation assistance information of the *r*^{th} reference signal resource unit is a possible form of indicating the quantity of ports supported for channel estimation by the *r*^{th} reference signal resource unit.

It should be understood that the R reference signal resource units may be predefined, for example, resource patterns, port patterns, base channel estimation assistance information, and the like of the R reference signal resource units are pre-stored in a device before delivery, so there is no need for the network device to indicate the R reference signal resource units to the terminal via the first information.

In addition, it should be further noted that, in this embodiment, the first base reference signal resource is divided into R reference signal resource units, a port pattern corresponding to the first base reference signal resource may be determined based on port patterns respectively corresponding to the R reference signal resource units, and a resource pattern corresponding to the first base reference signal resource may be determined based on resource patterns respectively corresponding to the R reference signal resource units.

For example, patterns respectively corresponding to the R reference signal resource units are sequentially denoted as **P**₁, **P**₂, ..., and **P**_{R} , and a pattern corresponding to the first base reference signal resource may be represented as **P**_{#1}, where the **P**_{#1} satisfies: ${P}_{# 1} = {P}_{port , # 1} ⊗ {P}_{RE , # 1} = \left[\begin{matrix}{P}_{1} \\ {P}_{2} \\ ⋮ \\ {P}_{R}\end{matrix}\right] .$

The port pattern **P**_{port,#1} and the resource pattern **P**_{RE,#1} may respectively satisfy: ${P}_{port , # 1} = \left[\begin{matrix}{P}_{port , 1} & 0 & 0 & 0 \\ 0 & {P}_{port , 2} & 0 & 0 \\ 0 & 0 & ⋱ & 0 \\ 0 & 0 & 0 & {P}_{port , R}\end{matrix}\right] , and {P}_{RE , # 1} = {P}_{RE , 1} = {P}_{RE , 2} = ⋯ = {P}_{RE , R} .$

**P**_{RE,#1} = **P**_{RE,1} = **P**_{RE,2} = ··· = **P**_{RE,R} indicates that time-frequency resources occupied by the R reference signal resource units are the same, and different ports may be distinguished through port multiplexing.

Base channel estimation assistance information corresponding to the first base reference signal resource may be determined based on channel estimation assistance information respectively corresponding to the R reference signal resource units.

For example, channel estimation assistance information respectively corresponding to the R reference signal resource units is sequentially denoted as **P**₁⁺, ${P}_{2}^{+}$, ..., and ${P}_{R}^{+}$, and the base channel estimation assistance information corresponding to the first base reference signal resource may be represented as a matrix ${P}_{# 1}^{+}$, where the ${P}_{# 1}^{+}$ satisfies: ${P}_{# 1}^{+} = \left[\begin{matrix}{P}_{1}^{+} & 0 & 0 & 0 \\ 0 & {P}_{2}^{+} & 0 & 0 \\ 0 & 0 & ⋱ & 0 \\ 0 & 0 & 0 & {P}_{R}^{+}\end{matrix}\right] .$

In the matrices shown above, the subscript #1 indicates that the matrix corresponds to the first base reference signal resource, and the subscripts 1 to R indicate that the matrices correspond to a first to an R^{th} reference signal resource units.

Because the *r*^{th} reference signal resource unit is one of the R reference signal resource units, the R reference signal resource units (namely, the first base reference signal) include K ports. In other words, the R reference signal resource units may be used to estimate a channel of K ports. K is less than or equal to a sum of quantities of ports supported for channel estimation by the R reference signal resource units, respectively, and is greater than or equal to a quantity of ports supported for channel estimation by any one of the R reference signal resource units, that is, $max \left\{{N}_{1}, {N}_{2}, …,{N}_{R}\right\} < K \leq {\sum }_{r = 1}^{R} {N}_{r}$.

The R reference signal resource units may be used to transmit a reference signal of M ports, where M is less than or equal to a sum of quantities of ports for transmitting reference signals by the R reference signal resource units, respectively, and is greater than a quantity of ports for transmitting reference signals by any one of the R reference signal resource units, that is, max{L₁, $\left.{L}_{2}, …,{L}_{R}\right\} < M \leq {\sum }_{r = 1}^{R} {L}_{r}$.

It is not difficult to learn that, when any plurality of reference signal resource units of the R reference signal resource units are combined to transmit reference signals, a quantity of ports for the transmitted reference signals may be related to a sum of quantities of ports for transmitting reference signals by the plurality of reference signal resource units respectively, and a quantity of ports supported for channel estimation is related to a sum of quantities of ports respectively supported by the plurality of reference signal resource units, or to a sum of quantities of ports respectively included in the plurality of reference signal resources. In other words, in this embodiment, quantities of ports respectively included in reference signal resource units may be summed, and quantities of ports for transmitting reference signals by the reference signal resource units, respectively, may be summed.

Further, the R reference signal resource units include one or more common ports. Each common port may specifically mean that a corresponding time-frequency resource is included in at least two reference signal resource units, that is, the common port is a port included in different reference signal resource units but corresponding to a same time-frequency resource. The common port may be referred to as a reference port (or referred to as a base port, a shared port, or the like), and may be used as a reference for channel concatenation in a subsequent channel estimation process. Because a channel concatenation process is described in the following with reference to step 550, details are not described herein.

If the R reference signal resource units include one or more reference ports, a quantity K of ports included in the first base reference signal resource is less than a sum of quantities of ports respectively included in the R reference signal resource units, that is, $K < {\sum }_{r = 1}^{R} {N}_{r}$; and a quantity M of ports for transmitting reference signals by the first base reference signal resource is less than a sum of quantities of ports for transmitting reference signals by the R reference signal resource units, respectively, that is, $M < {\sum }_{r = 1}^{R} {L}_{r}$.

If the R reference signal resource units do not include a reference port, a quantity K of ports included in the first base reference signal resource is less than a sum of quantities of ports respectively included in the R reference signal resource units, that is, $K = {\sum }_{r = 1}^{R} {N}_{r}$; and a quantity M of ports for transmitting reference signals by the first base reference signal resource is less than a sum of quantities of ports for transmitting reference signals by the R reference signal resource units, respectively, that is, $M = {\sum }_{r = 1}^{R} {L}_{r}$.

Optionally, the quantities of ports supported for channel estimation receptively by the R reference signal resource units are the same, or quantities of ports respectively included in the R reference signal resource units are the same.

In an example, the first base reference signal resource includes 1024 ports, and a quantity of ports supported for channel estimation is 1024. The first base reference signal resource is divided into 16 reference signal resource units, that is, R = 16. Each reference signal resource unit includes 64 ports, and a quantity of ports supported for channel estimation is 64.

Optionally, quantities of ports for transmitting reference signals by the R reference signal resources, respectively are the same.

In an example, the first base reference signal resource may be used to transmit a reference signal of 640 ports, and the first base reference signal resource is divided into 16 reference signal resource units, that is, R = 16. In this case, each reference signal resource unit is used to transmit a reference signal of 40 ports.

Certainly, the quantities of ports supported for channel estimation by the R reference signal resource units, respectively, may alternatively be different. For example, a quantity of ports supported for channel estimation by one reference signal resource unit is 64, and a quantity of ports supported for channel estimation by another reference signal resource unit is 128.

The quantities of ports for transmitting reference signals by the R reference signal resource units, respectively, may alternatively be different. For example, one reference signal resource unit is used to transmit a reference signal of 40 ports, and another reference signal resource unit is used to transmit a reference signal of 100 ports.

In other words, granularities of the R reference signal resource units may be the same or may be different. This is not limited in this application.

The network device may configure, for the terminal, one or more base reference signal resources, for example, T base reference signal resources, where T is a positive integer. Each base reference signal resource may be configured in the foregoing manner. The network device may configure the T base reference signal resources via the first information, or may configure the T base reference signal resources via T pieces of configuration information (including the first information). This is not limited in this application.

Further, when T is greater than 1, the network device may further indicate an identifier of the first base reference signal resource of the T base reference signal resources.

Optionally, the method further includes: The network device sends fourth information to the terminal, where the fourth information indicates an identifier of the first base reference signal resource of the T base reference signal resources. Correspondingly, the terminal receives the fourth information from the network device.

Each of the T base reference signal resources may be used to transmit a reference signal of one or more ports, and supports channel estimation for one or more ports. A *t*^{th} base reference signal resource of the T base reference signal resources is used as an example. The *t*^{th} base reference signal resource may be used to transmit a reference signal of M*ₜ* ports, and supports channel estimation for K*ₜ* ports, where K*ₜ* ≥ M*ₜ*, and K*ₜ* and M*ₜ* are positive integers.

Any two of the T base reference signal resources satisfy: Quantities of ports for transmitting reference signals are different, and/or quantities of ports supported for channel estimation are different. That is, for any two different values *t*₁ and *t*₂ of *t*, K_{*t*1} ≠ K_{*t*2}, and/or M_{*t*1} ≠ M_{*t*2}.

In step 520, the network device sends, on S reference signal resource units, the first reference signal. Correspondingly, the terminal receives, on the S reference signal resources, the first reference signal.

Similar to step 410, in a RAN in which a CU, a DU, and an RU are deployed, a specific implementation of step 520 may be: A CU-CP generates a first reference signal, and sends the first reference signal to the terminal through the DU and the RU. In an ORAN, a specific implementation of step 520 may be: An O-CU-CP generates a first reference signal, and sends the first reference signal to the terminal through an O-DU and an O-RU.

The S reference signal resource units are from the R reference signal resource units, that is, from the first base reference signal resource. In this embodiment, the first reference signal is transmitted using the S reference signal resource units. In other words, the S reference signal resource units are an example of a first resource.

A quantity m₁ of ports for the first reference signal is less than or equal to a sum of quantities of ports for transmitting reference signals by the S reference signal resource units, respectively.

Optionally, before step 520, the method further includes step 530, in which the network device sends second information to the terminal, where the second information indicates S reference signal resource units of the R reference signal resource units. Correspondingly, the terminal receives the second information from the network device.

In other words, before transmitting the first reference signal via the S reference signal resource units, the network device may indicate the S reference signal resource units to the terminal via signaling, so that the terminal receives, on corresponding resources, the first reference signal.

In an example, the second information indicates a bitmap (bitmap). For example, the second information may be a bitmap, may be a high-radix value indicating a bitmap, or may be an index indicating a bitmap. The bitmap may include R bits that are in one-to-one correspondence with the R reference signal resource units. A value of each bit indicates whether a corresponding reference signal resource unit belongs to the S reference signal resource units, or whether the corresponding reference signal resource unit is used to transmit the first reference signal.

For example, the first base reference signal resource includes 16 (namely, R = 16) reference signal resource units, and the network device indicates a bitmap "0111 1000 0000 0000" via the second information, which means that the S reference signal resource units are a second, third, fourth, and fifth reference signal resource units of the 16 reference signal resource units.

The network device may directly send the bitmap "0111 1000 0000 0000" as the second information. Alternatively, the network device may represent the bitmap "0111 1000 0000 0000" using a high-radix value (for example, a decimal or hexadecimal value), and send the high-radix value as the second information. Alternatively, the network device sends, as the second information, an index corresponding to the bitmap "0111 1000 0000 0000" or a high-radix value of the bitmap "0111 1000 0000 0000", thereby reducing overhead of the second information. If an index corresponding to a bitmap or a high-radix value of the bitmap is used as the second information, the network device and the terminal may pre-negotiate a correspondence between different bitmaps or different high-radix values of the bitmaps and different indexes. For example, the correspondence is predefined in a protocol, or is indicated in advance via signaling. This is not limited in this application.

It may be understood that, if the network device uses indicates the S reference signal resource units of the R reference signal resource units via a bitmap, the network device may not need to indicate identifiers of the R reference signal resource units via the first information.

In another example, the second information is identifiers of the S reference signal resource units in the R reference signal resource units. In other words, the network device indicates the S reference signal resource units via the identifiers of the S reference signal resource units. For example, the R reference signal resource units may be distinguished by different identifiers, and each identifier is used to identify one reference signal resource unit. The terminal may determine, based on the identifiers of the S reference signal resource units, the S reference signal resource units from the preconfigured R reference signal resource units.

Certainly, the first resource used by the network device to send the first reference signal may not be indicated via the second information. For example, the network device and the terminal may pre-negotiate reference signal resource units in the first base reference signal resource that are to be used. For example, the network device and the terminal may determine, according to a same rule, reference signal resource units in the first base reference signal resource that are used for each transmission of a reference signal. For example, based on a quantity of ports for a channel that needs to be estimated, one or more reference signal resource units may be sequentially selected, in ascending order of identifiers, from the R reference signal resource units as the reference signal resource units used for each transmission of a reference signal. For another example, based on a quantity of ports for a channel that needs to be estimated, one or more reference signal resource units may be selected, based on a principle of selecting a minimum quantity of reference signal resource units, from the R reference signal resource units as the reference signal resource units used for each transmission of a reference signal. Further examples are not listed.

In this embodiment, the network device may transmit the first reference signal via each of the S reference signal resource units. The first reference signal received by the terminal on each of the S reference signal resource units is a signal that has passed through a channel **H***_{rₛ}*'. The channel **H***_{rₛ}*' satisfies: **H***_{rₛ}'* = **H***_{rₛ}·***P***_{rₛ}*, where *rₛ* represents an identifier, in the R reference signal resource units, of an *s*^{th} reference signal resource unit of the S reference signal resource units, **H***_{rₛ}* is a channel matrix corresponding to a *rₛ*^{th} reference signal resource unit, and **P***_{rₛ}* represents a port pattern of the *rₛ*^{th} reference signal resource unit.

That the S reference signal resource units are the second, third, fourth, and fifth reference signal resource units of the 16 reference signal resource units is used as an example. The network device transmits, on the second, third, fourth, and fifth reference signal resource units, the first reference signal. The first reference signal received by the terminal on the second, third, fourth, and fifth reference signal resource units is a signal that has passed through channels **H**₂', **H**₃', **H**₄', and **H**₅', where **H**₂' = **H**₂·**P**_{port,2} , **H**₃' = **H**₃·**P**_{port,3} , **H**₄' = **H**₄·**P**_{port,4} , and **H**₅' = **H**₅·**P**p_{ort,5}.

In another implementation, the first reference signal transmitted via the S reference signal resource units may be represented by the following formula: **H**·**P**_{A}·x. **H** is a channel matrix, **P**_{A} is a matrix of dimensions K × m₁, and may be used to reduce dimensions of a channel matrix from K ports to m₁ ports, or select m₁ ports from K ports. The **P**_{A} satisfies: ${P}_{port , A} = \left[\begin{matrix}{P}_{port , 2} & 0 & 0 & 0 \\ 0 & {P}_{port , 3} & 0 & 0 \\ 0 & 0 & {P}_{port , 4} & 0 \\ 0 & 0 & 0 & {P}_{port , 5}\end{matrix}\right]$. **P**_{port,A} represents a port pattern corresponding to the first resource, and indicates indexes of the m₁ ports in M ports. It may be understood that the port pattern corresponding to the first resource is determined based on port patterns respectively corresponding to the second, third, fourth, and fifth reference signal resource units. **P**_{port,A} is used to reduce dimensions of a channel from M ports to m₁ ports, or select m₁ ports from M ports. The first reference signal received by the terminal is a signal that has passed through a channel **H**', where $H ′ = H ⋅ {P}_{port , A} = H ⋅ \left[\begin{matrix}{P}_{port , 2} & 0 & 0 & 0 \\ 0 & {P}_{port , 3} & 0 & 0 \\ 0 & 0 & {P}_{port , 4} & 0 \\ 0 & 0 & 0 & {P}_{port , 5}\end{matrix}\right]$. It may be understood that the channel **H'** is a channel matrix of the m₁ ports.

Herein, the subscript A is added to distinguish the matrix from the foregoing first base reference signal resource and matrices corresponding to reference signal resource units, and represents the port pattern corresponding to the first resource (for example, the second, third, fourth, and fifth reference signal resource units).

It should be noted that, because the first reference signal sent by the network device on the S reference signal resource units may be used to obtain S channels that can be concatenated, the network device may send the first reference signal by using a same sending parameter, and the terminal may receive the first reference signal by using a same receiving parameter.

In addition, because the S reference resource units are not necessarily consecutive in time domain, the operation of sending the first reference signal by the network device in step 502 may be one sending operation, or may be a plurality of sending operations. Correspondingly, the operation of receiving the first reference signal by the terminal may be one receiving operation, or may be a plurality of receiving operations. A quantity of operations of sending and receiving the first reference signal is not limited in this application.

Further, considering a time-varying characteristic of a channel and high mobility of the terminal, a maximum interval between the S reference signal resource units in time domain is not greater than a preset threshold. In other words, in the S reference signal resources, an interval between a first reference signal resource unit and a last reference signal resource unit is not greater than a preset threshold. That is, a time interval between sending the first reference signal for the first time and sending the first reference signal for the last time is not greater than the preset threshold, or a time interval between receiving the first reference signal for the first time and receiving the first reference signal for the last time is not greater than the preset threshold. Through the constraint on the time interval, a channel estimated by the terminal based on the received first reference signal can more accurately reflect a current channel state.

In step 540, the terminal determines first channel estimation assistance information.

In this embodiment, the first channel estimation assistance information is used to estimate, based on a reference signal of the m₁ ports, a channel of k₁ ports.

The terminal may determine, based on positions of the S reference signal resource units in the R reference signal resources, the first channel estimation assistance information. For example, in the foregoing example, the first resource includes four reference signal resource units, which are the second, third, fourth, and fifth reference signal resource units in the 16 reference signal resource units. Therefore, the first channel estimation assistance information may be obtained based on channel estimation assistance information respectively corresponding to the second, third, fourth, and fifth reference signal resource units. For ease of distinction from channel estimation assistance information corresponding to each reference signal resource unit described above, the first channel estimation assistance information is denoted as a matrix ${P}_{A}^{+}$ herein, where the ${P}_{A}^{+}$ satisfies: ${P}_{A}^{+} = \left[\begin{matrix}{P}_{2}^{+} & 0 & 0 & 0 \\ 0 & {P}_{3}^{+} & 0 & 0 \\ 0 & 0 & {P}_{4}^{+} & 0 \\ 0 & 0 & 0 & {P}_{5}^{+}\end{matrix}\right] .$

It may be understood that the first channel estimation assistance information includes channel estimation assistance information respectively corresponding to the S reference signal resource units. The channel estimation assistance information corresponding to each reference signal resource unit is from the base channel estimation assistance information corresponding to the first base reference signal resource. Therefore, the first channel estimation assistance information is determined based on channel estimation assistance information respectively corresponding to some reference signal resource units, which may also be referred to as determining the first channel estimation assistance information based on the base channel estimation assistance information corresponding to the first base reference signal resource.

In addition, the first channel estimation assistance information may be represented in a form of a matrix ${P}_{A}^{+}$, or may be represented in a form of a submatrix (for example, ${P}_{2}^{+} , {P}_{3}^{+}$, ${P}_{4}^{+}$, and ${P}_{5}^{+}$) included in the matrix. This is not limited in this application.

In step 550, the terminal determines, based on the first reference signal and the first channel estimation assistance information, first CSI, where the first CSI corresponds to the k₁ ports.

As described above, the first CSI may indicate the channel of the k₁ ports, for example, may be a channel estimation result indicating the channel of the k₁ ports; or the first CSI may indicate a precoding matrix corresponding to the channel of the k₁ ports, for example, may be a PMI corresponding to the channel of the k₁ ports.

In this embodiment, the terminal may obtain a channel of the m₁ ports by measuring the first reference signal, and then determine, based on the first channel estimation assistance information, the channel of the k₁ ports. In this embodiment, the first reference signal is transmitted through the S reference signal resource units. Therefore, channel estimation may be performed based on the first reference signal transmitted on the S reference signal resource units.

As described above, the first channel estimation assistance information includes the channel estimation assistance information respectively corresponding to the S reference signal resource units in the base channel estimation assistance information. Correspondingly, step 550 may specifically include: performing channel estimation based on the first reference signal received on each of the S reference signal resource units and channel estimation assistance information corresponding to each reference signal resource unit in the first channel estimation assistance information, to obtain channels respectively corresponding to the S reference signal resource units; obtaining, based on the channels respectively corresponding to the S reference signal resource units, the channel of k₁ ports; and determining, based on the channel of the k₁ ports, the first CSI.

For ease of understanding, in the following, a specific process of determining the channel of the k₁ ports is first described for a case in which ports corresponding to reference signals respectively transmitted on the S reference signal resource units do not include a reference port, and then a reference port is introduced to further describe the specific process of determining the channel of the k₁ ports.

It should be understood that, in the following example process, a matrix is used as a possible expression form of a channel, and concatenation of channel matrices is used as an example to describe a process of channel concatenation. However, this should not constitute any limitation on this application. A channel may alternatively be represented in another form, for example, a vector, an array, or the like. This is not limited in this application. In this case, the foregoing example process of channel concatenation is applicable.

That the S reference signal resource units are the second, third, fourth, and fifth reference signal resource units of the 16 reference signal resource units is used as an example. For example, the second, third, fourth, and fifth reference signal resource units are separately used to transmit a reference signal of 40 ports, and separately support channel estimation for 64 ports. In addition, ports for reference signals transmitted through the reference signal resource units do not overlap, and ports corresponding to a channel that can be estimated do not overlap either. In this case, the terminal may receive a reference signal of 160 (namely, m₁ = 160) ports on the four reference signal resource units, and estimate a channel of 256 (namely, k₁ = 256) ports.

Channels estimated by the terminal based on the first reference signal received on the reference signal resource units are **H · P**_{port,2} , **H · P**_{port,3} , **H · P**_{port,4} , and **H · P**_{port,5} . Based on the channels respectively corresponding to the S reference signal resource units and the channel estimation assistance information ${P}_{2}^{+} , {P}_{3}^{+} , {P}_{4}^{+}$, and ${P}_{5}^{+}$ corresponding to each reference signal resource unit in the first channel estimation assistance information, channels **Ĥ**₂, **Ĥ**₃, **Ĥ**₄, and **Ĥ**₅ respectively corresponding to the second, third, fourth, and fifth reference signal resource units may be obtained, where ${\hat{H}}_{2} = H ⋅ {P}_{port , 2} ⋅ {P}_{2}^{+} , {\hat{H}}_{3} = H ⋅ {P}_{port , 3} ⋅ {P}_{3}^{+} , {\hat{H}}_{4} = H ⋅ {P}_{port , 4} ⋅ {P}_{4}^{+}$, and ${\hat{H}}_{5} = H ⋅ {P}_{port , 5} ⋅ {P}_{5}^{+}$. The **Ĥ**₂, **Ĥ**₃, **Ĥ**₄, and **Ĥ**₅ may be concatenated according to a preset concatenation rule, to obtain the channel **Ĥ**_{A} of the k₁ ports.

Optionally, the concatenation rule may be: horizontally and sequentially concatenating, from left to right in ascending order of identifiers of a plurality of reference signal resource units, channels respectively corresponding to the plurality of reference signal resource units.

For example, in this embodiment, the channels respectively corresponding to the S reference signal resource units are horizontally concatenated from left to right in ascending order of the identifiers of the reference signal resource units, to obtain a channel **Ĥ**_{A}, where ${\hat{H}}_{A} = \left[{\hat{H}}_{2} {\hat{H}}_{3} {\hat{H}}_{4} {\hat{H}}_{5}\right] .$

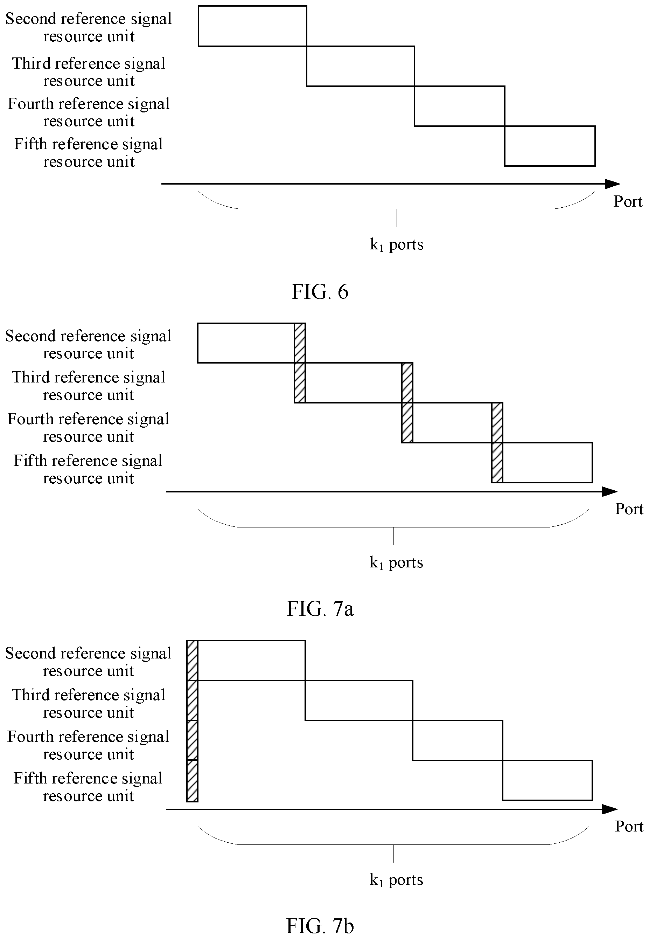

FIG. 6 is a diagram of channel concatenation according to an embodiment of this application. As shown in the figure, in ascending order of identifiers of the second, third, fourth, and fifth reference signal resource units, channels corresponding to the reference signal resource units are horizontally concatenated from left to right, to obtain the channel of the k₁ ports.

In another implementation, port patterns and the channel estimation assistance information that respectively correspond to the S reference signal resource units may be first concatenated according to the foregoing concatenation rule. Channel estimation assistance information obtained after concatenation is the first channel estimation assistance information ${P}_{A}^{+}$, where the ${P}_{A}^{+}$ satisfies: ${P}_{A}^{+} = \left[\begin{matrix}{P}_{2}^{+} & 0 & 0 & 0 \\ 0 & {P}_{3}^{+} & 0 & 0 \\ 0 & 0 & {P}_{4}^{+} & 0 \\ 0 & 0 & 0 & {P}_{5}^{+}\end{matrix}\right]$, and a port pattern obtained after concatenation satisfies: ${P}_{port , A} = \left[\begin{matrix}{P}_{port , 2} & 0 & 0 & 0 \\ 0 & {P}_{port , 3} & 0 & 0 \\ 0 & 0 & {P}_{port , 4} & 0 \\ 0 & 0 & 0 & {P}_{port , 5}\end{matrix}\right]$. Therefore, the channel **Ĥ**_{A} of the k₁ ports is obtained, where ${\hat{H}}_{A} = H ⋅ {P}_{port , A} ⋅ {P}_{A}^{+} = H ⋅ \left[\begin{matrix}{P}_{port , 2} & 0 & 0 & 0 \\ 0 & {P}_{port , 3} & 0 & 0 \\ 0 & 0 & {P}_{port , 4} & 0 \\ 0 & 0 & 0 & {P}_{port , 5}\end{matrix}\right] \left[\begin{matrix}{P}_{2}^{+} & 0 & 0 & 0 \\ 0 & {P}_{3}^{+} & 0 & 0 \\ 0 & 0 & {P}_{4}^{+} & 0 \\ 0 & 0 & 0 & {P}_{5}^{+}\end{matrix}\right] .$

**Ĥ**₂, **Ĥ**₃, **Ĥ**₄, and **Ĥ**₅ are channels estimated based on the first reference signal received on the second, third, fourth, and fifth reference signal resource units.

It should be understood that the concatenation rule listed above is merely an example, and should not constitute any limitation on this application. Specific content of the concatenation rule is not limited in this application. For example, the concatenation rule may alternatively be: sequentially concatenating, from left to right in ascending order of port numbers, channels respectively corresponding to a plurality of reference signal resource units.

To achieve higher estimation accuracy and reduce an error, when configuring a reference signal resource unit, the network device may configure some same resources for two or more reference signal resource units, that is, configure one or more reference ports. When performing channel concatenation, the terminal may perform concatenation according to the foregoing concatenation rule, using the reference port as a reference.

For ease of understanding and description, FIG. 7a and FIG. 7b are another diagram of channel concatenation according to an embodiment of this application. FIG. 7a and FIG. 7b separately show a process of performing channel concatenation when different ports are used as reference ports.

As shown in FIG. 7a, each reference port is shared by two reference signal resource units, and the two reference signal resource units are reference signal resource units with adjacent identifiers. For example, in the figure, a second reference signal resource unit and a third reference signal resource unit share a same reference port (for example, denoted as a reference port 1), the third reference signal resource unit and a fourth reference signal resource unit share a same reference port (for example, denoted as a reference port 2), and the fourth reference signal resource unit and a fifth reference signal resource unit share a same reference port (for example, denoted as a reference port 3). A total of three reference ports are shown in the figure. Each reference port may be a last port of a former reference signal resource unit of two reference signal resource units and a first port of a latter reference signal resource unit of the two reference signal resource units.

Herein, a first or last port of each reference signal resource unit may be determined according to a sequence of ports in configuration information of each reference signal resource unit. For example, a resource pattern of each reference signal resource unit may be used for a mapping relationship between a reference signal of each port and a time-frequency resource. In the resource pattern, a port positioned first is a first port, and a port positioned last is a last port. For another example, channel estimation assistance information of each reference signal resource unit includes a plurality of row vectors whose quantity is the same as a quantity of ports for reference signals. In the channel estimation assistance information, a port in a first row is a first port, and a port in a last row is a last port.

In this specification, for ease of description, the first or last port included in each reference signal resource unit is referred to as a boundary port. In other words, the reference port may be a common boundary port included in two reference signal resource units with adjacent identifiers.

The following describes in detail a specific process in which the terminal concatenates channels according to the foregoing concatenation rule, using the reference port as a reference.

The terminal may respectively determine, from channels corresponding to the second reference signal resource unit and the third reference signal resource unit, sub-channels corresponding to the reference port 1, and correct, using one of the sub-channels as a reference, the other sub-channel. For example, using the sub-channel corresponding to the reference port 1 in the channel corresponding to the second reference signal resource unit as a reference (for example, denoted as a reference 1), the terminal calculates a deviation (for example, denoted as a deviation 1) of the sub-channel corresponding to the reference port 1 in the channel corresponding to the third reference signal resource unit relative to the reference 1, and superimposes the deviation 1 onto the channel corresponding to the third reference signal resource unit.

The terminal may perform a similar operation on the third reference signal resource unit and the fourth reference signal resource unit. For example, using a sub-channel corresponding to the reference port 2 in the third reference signal resource unit after deviation correction as a reference (for example, denoted as a reference 2), the terminal calculates a deviation (for example, denoted as a deviation 2) of a sub-channel corresponding to the reference port 2 in a channel corresponding to the fourth reference signal resource unit relative to the reference 2, and superimposes the deviation 2 onto the channel corresponding to the fourth reference signal resource unit.

The terminal may perform a similar operation on the fourth reference signal resource unit and the fifth reference signal resource unit. For example, using a sub-channel corresponding to the reference port 3 in the fourth reference signal resource unit after deviation correction as a reference (for example, denoted as a reference 3), the terminal calculates a deviation (for example, denoted as a deviation 3) of a sub-channel corresponding to the reference port 3 in a channel corresponding to the fifth reference signal resource unit relative to the base 3, and superimposes the deviation 3 onto the channel corresponding to the fifth reference signal resource unit.

The terminal may concatenate, according to the concatenation rule, the channel corresponding to the second reference signal resource unit, the channel corresponding to the third reference signal resource unit obtained after deviation correction, the channel corresponding to the fourth reference signal resource unit obtained after deviation correction, and a channel corresponding to the fifth reference signal resource unit obtained after deviation correction, to obtain a channel of the k₁ ports. The channel of the k₁ ports thus obtained may be considered as a channel with deviations between a plurality of reference signal resource units corrected. Therefore, the estimated channel of the k₁ ports has higher accuracy.

It is not difficult to learn that, that the terminal concatenates the channels using the reference port as the reference described above is substantially equivalent to concatenating the channels using the channel corresponding to one of the reference signal resource units as the reference. In the foregoing example process, the channel corresponding to the second reference signal resource unit is used as a reference to describe the process of concatenation. The terminal may alternatively perform concatenation by using channels corresponding to different reference signal resource units as references, for example, perform concatenation by using a channel corresponding to the fifth reference signal resource unit as a reference. A specific process is similar to the foregoing process, and details are not described again.

As shown in FIG. 7b, a plurality of reference signal resource units share a same reference port. The figure shows a same reference port shared by the second, third, fourth, and fifth reference signal resource units.

The following describes in detail a specific process in which the terminal concatenates channels according to the foregoing concatenation rule, using the reference port as a reference.

The terminal may select any one of the four reference signal resource units as a reference, and correct channels corresponding to the other three reference signal resource units. For example, using the channel corresponding to the second reference signal resource unit as a reference, the terminal may use a sub-channel corresponding to the reference port in the channel corresponding to the second reference signal resource unit as a reference value (for example, denoted as a reference value 1), calculate deviations of sub-channels corresponding to the reference port in channels corresponding to the third, fourth, and fifth reference signal resource units, respectively, relative to the reference value 1, to obtain deviations corresponding to the third, fourth, and fifth reference signal resource units, and correspondingly superimpose these deviations onto the channels corresponding to the reference signal resource units, to obtain channels corresponding to the third, fourth, and fifth reference signal resource units after deviation superimposition.

The terminal may concatenate, according to the concatenation rule, the channel corresponding to the second reference signal resource unit and the channels corresponding to the third, fourth, and fifth reference signal resource units obtained after deviation superimposition, to obtain a channel of the k₁ ports. The channel of the k₁ ports thus obtained may be considered as a channel with respect to the reference 1. Therefore, the estimated channel of the k₁ ports has higher accuracy.

It should be understood that, in the foregoing example process, the channel corresponding to the second reference signal resource unit is used as a reference to describe the process of concatenation. The terminal may alternatively perform concatenation by using channels corresponding to different reference signal resource units as references, for example, perform concatenation by using the channel corresponding to any one of the third, fourth, and fifth reference signal resource units as a reference. A specific process is similar to the foregoing process, and details are not described again.

Further, the reference port may be determined based on a preset rule (denoted as a first rule for ease of distinction and description). The first rule may be predefined in a protocol, or may be indicated by the network device to the terminal. Alternatively, the reference port may be determined by the network device and then indicated to the terminal.

Optionally, the method further includes: The network device sends seventh information to the terminal, where the seventh information indicates a reference port or indicates a first rule. Correspondingly, the terminal receives the seventh information from the network device.

For example, when the seventh information indicates the reference port, the seventh information may specifically indicate a port number, or indicate an identifier of a reference signal resource unit to which the reference port belongs, an index of the reference port in ports included in the reference signal resource unit to which the reference port belongs, or the like. This is not limited in this application.

For example, the first rule for determining the reference port may be: The reference port is a first port of ports included in the S reference signal resource units, or the reference port is a last port of ports included in the S reference signal resource units, or the reference port is a common boundary port of every two adjacent reference signal resource units of the S reference signal resource units, and so on.

The terminal and the network device may pre-store a correspondence between a plurality of rules and a plurality of indexes. The network device selects one of the plurality of rules as the first rule, and then indicates an index of the first rule to the terminal via the seventh information, so that the terminal determines the first rule based on the seventh information, and then determines the reference port.

In step 560, the terminal sends first CSI to the network device. Correspondingly, the network device receives the first CSI from the terminal.

For a specific process of step 560 and a specific implementation of step 560 in a RAN in which a CU, a DU, and an RU are deployed and in an ORAN, refer to related descriptions of step 440 in the method 400. Details are not described again.

It may be understood that operations of step 520 to step 560 may be repeatedly performed, to implement a plurality of rounds of channel estimation. In a process of a plurality of rounds of channel estimation, reference signal resource units used by the network device to send reference signals may be the same or may be different. For example, the network device may send a reference signal by using one or more of the R reference signal resource units, or may select another base reference signal resource from the T base reference signal resources, and send a reference signal by using one or more reference signal resource units in the base reference signal resource. This is not limited in this application.

Because a process of each round of channel estimation is similar to the process described above with reference to step 520 to step 560, reference may be made to the foregoing related descriptions, and the process of each round of channel estimation is not described herein again.

Based on the technical solution provided above, the network device configures one or more base reference signal resources for the terminal by using a reference signal resource unit as a granularity, and transmits a reference signal by using one or more reference signal resource units in the base reference signal resource. Each reference signal resource unit may be used to transmit a reference signal of one or more ports, and support channel estimation for one or more ports. In this way, the network device may flexibly select, based on service requirements, some or all resources from the base reference signal resource to transmit the reference signal. Because the channel estimation assistance information corresponding to each reference signal resource unit may be used to estimate the channel corresponding to each reference signal resource unit, the terminal may estimate, based on a reference signal received on each reference signal resource unit, the channel corresponding to each reference signal resource unit, and then perform concatenation to obtain a channel of more ports. Therefore, flexible changes in a quantity of ports can be supported when RF channels are dynamically disabled, and air interface resource overhead of reference signals is reduced accordingly. In addition, because the one or more base reference signal resources are preconfigured, the network device does not need to indicate the reference signal resource via signaling before initiating channel estimation each time, thereby avoiding huge signaling overhead that may be introduced by dynamic changes in the reference signal resource.

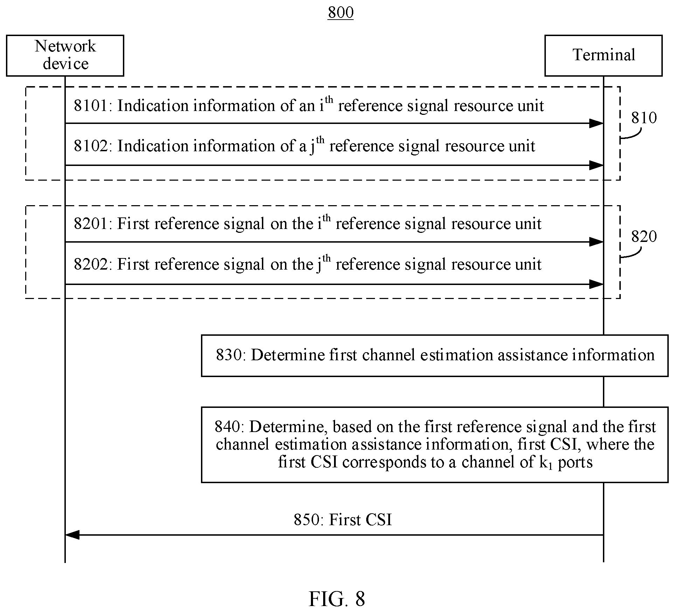

FIG. 8 is still another schematic flowchart of a communication method according to an embodiment of this application. In the method shown in FIG. 8, a first base reference signal resource is still divided into R reference signal resource units of a finer granularity. Different from the method shown in FIG. 5, a network device does not need to preconfigure the first base reference signal resource for a terminal via signaling, but indicates, via signaling before channel estimation needs to be initiated, a reference signal resource used for current channel estimation. For ease of description, in the following, it is still assumed that a first resource on which the network device sends a first reference signal includes S reference signal resource units, and the S reference signal resource units are two reference signal resource units, which are an i^{th} reference signal resource unit and a j^{th} reference signal resource unit in the first base reference signal resource, where i and j are identifiers of the two reference signal resource units in the R reference signal resource units.

The method 800 shown in FIG. 8 includes step 810 to step 850. The following describes in detail steps in the method 800.

In step 810, the network device sends indication information of each of the S reference signal resource units, where the indication information of each reference signal resource unit is used to configure one reference signal resource unit. Correspondingly, the terminal receives indication information of the S reference signal resource units.

In step 820, the network device sends, on the S reference signal resource units, the first reference signal. Correspondingly, the terminal receives, on the S reference signal resources, the first reference signal.

Specific implementations of step 810 and step 820 in a RAN in which a CU, a DU, and an RU are deployed and in an ORAN are similar to step 510 and step 520 in the method 500. For details, refer to the foregoing related descriptions. Details are not described again.

The S reference signal resource units are one or more reference signal resource units used to transmit the first reference signal. The network device may indicate a corresponding resource before sending a reference signal each time.

For example, in this embodiment, S is 2, and step 810 may include:
step 8101, the network device sends indication information of the i^{th} reference signal resource unit to the terminal; and
step 8102, the network device sends indication information of the j^{th} reference signal resource unit to the terminal.

Correspondingly, the terminal receives the indication information of the i^{th} reference signal resource unit from the network device in step 8101, and receives the indication information of the j^{th} reference signal resource unit from the network device in step 8102.

Step 820 may include:
step 8201, the network device sends, on the i^{th} reference signal resource unit, the first reference signal; and
step 8202: the network device sends, on the j^{th} reference signal resource unit, the first reference signal.

Correspondingly, the terminal receives, on the i^{th} reference signal resource unit, the first reference signal in step 8101, and receives, on the j^{th} reference signal resource unit, the second reference signal in step 8102, respectively.

It should be understood that steps shown in the figure are merely an example. Step 8101 may be performed before step 8201, step 8102 may be performed before step 8202, step 8201 may be performed before step 8102, or may be performed after step 8102, or may be performed synchronously with step 8102. This is not limited in this application.

Considering a time-varying characteristic of a channel and high mobility of the terminal, a maximum interval between the S reference signal resource units in time domain is not greater than a preset threshold. In other words, in the S reference signal resources, an interval between a first reference signal resource unit and a last reference signal resource unit is not greater than a preset threshold. That is, a time interval between sending the first reference signal for the first time and sending the first reference signal for the last time is not greater than the preset threshold, or a time interval between receiving the first reference signal for the first time and receiving the first reference signal for the last time is not greater than the preset threshold. For example, in the foregoing example, a time interval between the i^{th} reference signal resource unit and the j^{th} reference signal resource unit is not greater than a preset threshold.

Through the constraint on the time interval, a channel estimated by the terminal based on the received first reference signal can more accurately reflect a current channel state.

It is not difficult to learn that, in the method 800, the network device does not need to preconfigure the R reference signal resource units via first information, but configures a reference signal resource unit used for each transmission of a reference signal.

The network device may configure one or more of the following for each of the S reference signal resource units: a resource pattern, a port pattern, a quantity of ports supported for channel estimation, channel estimation assistance information, or an identifier of a base reference signal resource to which the reference signal resource unit belongs. Alternatively, the indication information of each reference signal resource unit may indicate one or more of the following: a resource pattern, a port pattern, a quantity of ports supported for channel estimation, channel estimation assistance information, or a concatenation identifier.

Because the S reference signal resource units are from the first base reference signal resource, and the first base reference signal resource is divided into the R reference signal resource units, the S reference signal resource units are from the R reference signal resource units. An *s*^{th} reference signal resource unit of the S reference signal resource units may correspond to an *rₛ*^{th} reference signal resource unit of the R reference signal resource units, and *rₛ* represents an identifier of the *s*^{th} reference signal resource unit in the R reference signal resource units. If identifiers of the R reference signal resource units are sequentially numbered from 1 to R, *rₛ* may be any positive integer from 1 to R. For example, in this embodiment, identifiers, in the R reference signal resource units, of two reference signal resource units used to transmit the first reference signal are respectively i and j, where i and j may be any positive integers from 1 to R, and i ≠ j. It should be understood that how to identify the R reference signal resource units is not limited in this application, and therefore, a value of *rₛ* is not limited either.

In the S reference signal resource units, the *rₛ*^{th} reference signal resource unit includes N*_{rₛ}* ports, may be used to transmit a reference signal of L*_{rₛ}* ports, and support channel estimation for the N*_{rₛ}* ports. It may be understood that L*_{rₛ}* may be any value in L₁ to L_{R}. N*_{rₛ}* may be any value in N₁ to N_{R}, and the L*_{rₛ}* ports are included in the N*_{rₛ}* ports. L₁ to L_{R} are quantities of ports for transmitting reference signals by a first to an R^{th} reference signal resource units of the R reference signal resource units, respectively, and N₁ to N_{R} are quantities of ports respectively included in the first to the R^{th} reference signal resource units of the R reference signal resource units, or in other words, quantities of ports supported for channel estimation by the first to the R^{th} reference signal resource units, respectively.

A resource pattern of the *rₛ*^{th} reference signal resource unit indicates a mapping relationship between a reference signal of each of the L*ᵣₛ* ports and a time-frequency resource, a port pattern of the *rₛ*^{th} reference signal resource unit indicates indexes of the L*_{rₛ}* ports in the N*_{rₛ}* ports, and channel estimation assistance information of the *rₛ*^{th} reference signal resource unit may be used to estimate, based on a channel measurement result of the L*_{rₛ}* ports, a channel of the N*_{rₛ}* ports.

Related content of the resource pattern, the port pattern, the quantity of ports supported for channel estimation, and the channel estimation assistance information of each reference signal resource has been described in detail in step 510 in the method 500, and may be understood with reference to related descriptions in the method 500. Details are not described again.

In this embodiment, the network device may further indicate the concatenation identifier via the indication information of each reference signal resource unit. The concatenation identifier may indicate that the S reference signal resource units are used to transmit the first reference signal, or may indicate that the S reference signal resource units belong to the first resource, or the S reference signal resource units may be combined for use, to perform channel estimation, or reference signals transmitted on the S reference signal resource units are used for same channel estimation, or channel matrices estimated based on reference signals transmitted on the S reference signal resource units support concatenation.

By including a same concatenation identifier in the indication information of the S reference signal resource units, the network device may implicitly notify the terminal that reference signals sent on the S reference signal resource units are sent based on a same sending parameter, that is, implicitly prompt the terminal to receive, on the S reference signal resource units, the reference signals using a same receiving parameter, that is, implicitly notify the terminal that the first reference signal received on the S reference signal resource units is used for same channel estimation, or in other words, channel matrices estimated based on the first reference signal received on the S reference signal resource units support concatenation. The concatenation identifier may be, for example, a value or a letter. For example, the indication information of the S reference signal resources may carry a same value or a same letter. In addition, the concatenation identifier is merely a possible name, for example, may also be referred to as a combination identifier, a concatenation support identifier, a combination support identifier, or the like. This is not limited in this application.

In this embodiment, the network device may send, on the i^{th} reference signal resource unit and the j^{th} reference signal resource unit, the first reference signal, and the first reference signal received by the terminal on the i^{th} reference signal resource unit and the j^{th} reference signal resource unit is a signal that has passed through a channel **H** ' , where the channel **H** ' satisfies: $H ′ = H ⋅ {P}_{port , A} = H ⋅ \left[\begin{matrix}{P}_{port , i} \\ {P}_{port , j}\end{matrix}\right] . {P}_{port , i}$ represents a port pattern of the i^{th} reference signal resource unit, and **P**_{port,j} represents a port pattern of the j^{th} reference signal resource unit. It may be understood that the channel **H'** is a channel of m₁ ports.

In this embodiment, a quantity m₁ of ports for the first reference signal also satisfies: being less than or equal to a sum of quantities of ports for transmitting reference signals by the S reference signal resource units. That is, in the foregoing example in which S = 2, m₁ is less than or equal to a sum of a quantity of ports for transmitting reference signals by the i^{th} reference signal resource unit and a quantity of ports for transmitting reference signals by the j^{th} reference signal resource unit.

In step 830, the terminal determines first channel estimation assistance information.

For related descriptions of the first channel estimation assistance information, refer to related descriptions in step 420 in the method 400 and step 540 in the method 500. Details are not described again.

In this embodiment, the terminal may determine, based on channel estimation assistance information respectively corresponding to the S reference signal resource units, the first channel estimation assistance information. For example, if S = 2, and the S reference signal resource units include the i^{th} reference signal resource unit and the j^{th} reference signal resource unit of the R reference signal resource units, the first channel estimation assistance information ${P}_{A}^{+}$ may be obtained, satisfying: ${P}_{A}^{+} = \left[\begin{matrix}{P}_{i}^{+} & 0 \\ 0 & {P}_{j}^{+}\end{matrix}\right] .$

It may be understood that the first channel estimation assistance information includes the channel estimation assistance information respectively corresponding to the S reference signal resource units. The channel estimation assistance information corresponding to each reference signal resource unit is from the base channel estimation assistance information corresponding to the first base reference signal resource. Therefore, the first channel estimation assistance information is determined based on channel estimation assistance information respectively corresponding to some reference signal resource units, which may also be referred to as determining the first channel estimation assistance information based on the base channel estimation assistance information corresponding to the first base reference signal resource.

In addition, the first channel estimation assistance information may be represented in a form of a matrix ${P}_{A}^{+}$, or may be represented in a form of a submatrix (for example, ${P}_{i}^{+}$ and ${P}_{j}^{+}$) included in the matrix. This is not limited in this application.

In step 840, the terminal determines, based on the first reference signal and the first channel estimation assistance information, first CSI, where the first CSI corresponds to k₁ ports.

The terminal may estimate, based on the first reference signal received on each of the S reference signal resource units, a channel corresponding to each reference signal resource unit. The terminal may concatenate channels respectively corresponding to the S reference signal resource units, to obtain a channel of the k₁ ports.

For example, in this embodiment, a channel **Ĥ**ᵢ of Nᵢ ports may be estimated based on the first reference signal received on the i^{th} reference signal resource unit and channel estimation assistance information corresponding to the i^{th} reference signal resource unit. The **Ĥ**ᵢ may satisfy ${\hat{H}}_{i} = {HP}_{port , i} {P}_{i}^{+}$.

A channel **Ĥ**ⱼ of Nⱼ ports may be estimated based on the first reference signal received on the j^{th} reference signal resource unit and channel estimation assistance information corresponding to the j^{th} reference signal resource unit. The **Ĥ**ⱼ may satisfy ${\hat{H}}_{j} = {HP}_{port , j} {P}_{j}^{+}$.

The terminal may concatenate, according to a concatenation rule, the channel Ĥᵢ of the Nᵢ ports and the channel **Ĥ**ⱼ of the Nⱼ ports, to obtain a channel **Ĥ**_{A} of the k₁ ports as follows: **Ĥ**_{A} =[**Ĥ**ᵢ **Ĥ**ⱼ].

In another implementation, the terminal may first concatenate, according to a concatenation rule, port patterns and the channel estimation assistance information that respectively correspond to the S reference signal resource units, to obtain a channel **Ĥ**_{A} of the k₁ ports as follows: ${\hat{H}}_{A} = H \left[\begin{matrix}{P}_{port , i} \\ {P}_{port , j}\end{matrix}\right] \left[\begin{matrix}{P}_{i}^{+} & 0 \\ 0 & {P}_{j}^{+}\end{matrix}\right] .$

The concatenation rule is described in detail with reference to FIG. 6, FIG. 7a, and FIG. 7b in step 550 of the method 500. For details, refer to the foregoing related descriptions. Details are not described again.

For more detailed content of step 840, refer to step 550 in the method 500. Details are not described again. It may be understood that, in this embodiment, a quantity k₁ of ports supported for estimation based on the first reference signal also satisfies: being less than or equal to a sum of quantities of ports respectively supported by the S reference signal resource units. In other words, in the foregoing example in which S = 2, k₁ is less than or equal to a sum of a quantity of ports supported for channel estimation by the i^{th} reference signal resource unit and a quantity of ports supported for channel estimation by the j^{th} reference signal resource unit.

In step 850, the terminal sends the first CSI to the network device. Correspondingly, the network device receives the first CSI from the terminal.

For a specific process of step 850 and a specific implementation of step 850 in a RAN in which a CU, a DU, and an RU are deployed and in an ORAN, refer to related descriptions of step 440 in the method 400. Details are not described again.

Based on the technical solution provided above, using a reference signal resource unit as a granularity, the network device configures, for the terminal before sending a reference signal each time, one or more reference signal resource units used to transmit the reference signal. Each reference signal resource unit is used to transmit a reference signal of one or more ports, and supports channel estimation for one or more ports. In this way, the network device may select, based on service requirements, any quantity of reference signal resource units to transmit the reference signal. Because the channel estimation assistance information corresponding to each reference signal resource unit may be used to estimate the channel corresponding to each reference signal resource unit, the terminal may estimate, based on a reference signal received on each reference signal resource unit, the channel corresponding to each reference signal resource unit, and then perform concatenation to obtain a channel of more ports. Therefore, flexible changes in a quantity of ports can be supported when RF channels are dynamically disabled, and air interface resource overhead of reference signals is reduced accordingly.

In another implementation, the terminal may alternatively determine a channel of m₁ ports after receiving the first reference signal in step 820, and send the channel of the m₁ ports as a channel measurement result through the first CSI to the network device. The network device may estimate a channel of the k₁ ports based on the received first CSI. In this case, the network device may not need to indicate the channel estimation assistance information of each reference signal resource unit to the terminal. The network device may determine the first channel estimation assistance information, determine, based on the first CSI, the channel of the m₁ ports, and then determine, based on the first channel estimation assistance information, the channel of the k₁ ports.

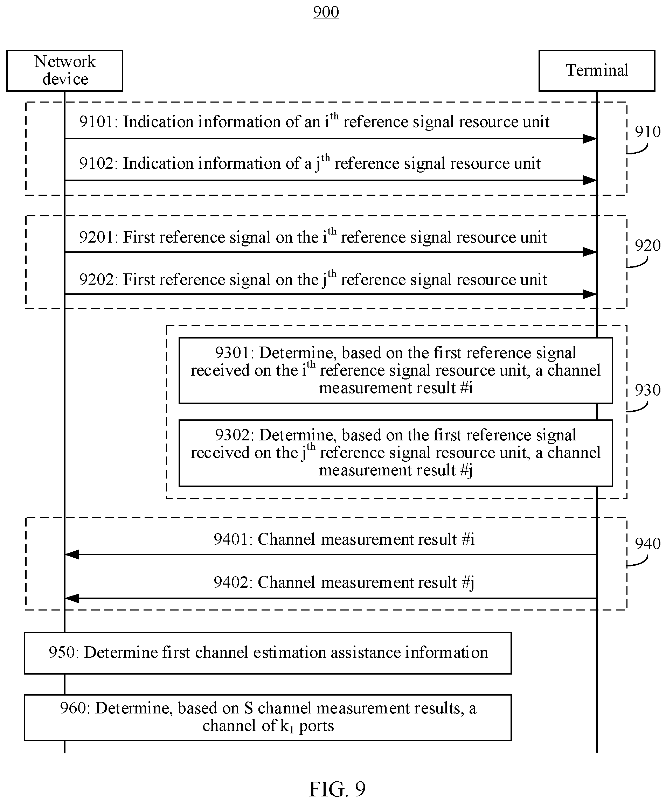

FIG. 9 is yet another schematic flowchart of a communication method according to an embodiment of this application. The method shown in FIG. 9 is similar to the method shown in FIG. 8, except that channel estimation performed by the terminal for the k₁ ports in FIG. 8 is performed by the network device in FIG. 9. For ease of description, in the following, it is still assumed that a first resource on which the network device sends a first reference signal includes S reference signal resource units, and the S reference signal resource units are two reference signal resource units, which are an i^{th} reference signal resource unit and a j^{th} reference signal resource unit in the first base reference signal resource, where i and j are identifiers of the two reference signal resource units in the R reference signal resource units.

The method 900 shown in FIG. 9 includes step 910 to step 960. The following describes in detail steps in the method 900.

In step 910, the network device sends indication information of each of the S reference signal resource units, where the indication information of each reference signal resource unit is used to configure one reference signal resource unit. Correspondingly, the terminal receives indication information of the S reference signal resource units.

In step 920, the network device sends, on the S reference signal resource units, the first reference signal. Correspondingly, the terminal receives, on the S reference signal resources, the first reference signal.

Specific implementations of step 810 and step 820 in a RAN in which a CU, a DU, and an RU are deployed and in an ORAN are similar to step 510 and step 520 in the method 500. For details, refer to the foregoing related descriptions. Details are not described again.

Similar to the method 800, the network device may indicate a corresponding resource before sending a reference signal each time.

For example, in this embodiment, S is 2, and step 910 may include:
step 9101, the network device sends indication information of the i^{th} reference signal resource unit to the terminal; and
step 9102, the network device sends indication information of the j^{th} reference signal resource unit to the terminal.

Correspondingly, the terminal receives the indication information of the i^{th} reference signal resource unit from the network device in step 9101, and receives the indication information of the j^{th} reference signal resource unit from the network device in step 9102.

Step 920 may include:
step 9201, the network device sends, on the i^{th} reference signal resource unit, the first reference signal; and
step 9202: the network device sends, on the j^{th} reference signal resource unit, the first reference signal.

Correspondingly, the terminal receives, on the i^{th} reference signal resource unit, the first reference signal in step 9101, and receives, on the j^{th} reference signal resource unit, the second reference signal in step 9102, respectively.

It should be understood that steps shown in the figure are merely an example. Step 9101 may be performed before step 9201, step 9102 may be performed before step 9202, step 9201 may be performed before step 9102, or may be performed after step 9102, or may be performed synchronously with step 9102. This is not limited in this application.

Considering a time-varying characteristic of a channel and high mobility of the terminal, a maximum interval between the S reference signal resource units in time domain is not greater than a preset threshold. In other words, in the S reference signal resources, an interval between a first reference signal resource unit and a last reference signal resource unit is not greater than a preset threshold. That is, a time interval between sending the first reference signal for the first time and sending the first reference signal for the last time is not greater than the preset threshold, or a time interval between receiving the first reference signal for the first time and receiving the first reference signal for the last time is not greater than the preset threshold. For example, in the foregoing example, a time interval between the i^{th} reference signal resource unit and the j^{th} reference signal resource unit is not greater than a preset threshold.

Through the constraint on the time interval, a channel estimated by the terminal based on the received first reference signal can more accurately reflect a current channel state.

In step 930, the terminal determines, based on the first reference signal, first CSI.

In this embodiment, the terminal may determine, based on the first reference signal received on each reference signal resource unit, a channel measurement result corresponding to each reference signal resource unit. The channel measurement result corresponding to each reference signal resource unit indicates a measured channel. In this embodiment, the first CSI includes S channel measurement results that are in one-to-one correspondence with the S reference signal resource units.

For example, in this embodiment, the S reference signal resource units are the i^{th} reference signal resource unit and the j^{th} reference signal resource unit in the first base reference signal resource, and the first CSI includes a channel measurement result #i corresponding to the i^{th} reference signal resource unit and a channel measurement result #j corresponding to the j^{th} reference signal resource unit. The channel measurement result #i indicates a channel of Lᵢ ports, where the Lᵢ ports are ports for a reference signal transmitted on the i^{th} reference signal resource unit, and the channel of the Lᵢ ports is obtained by measuring the first reference signal received on the i^{th} reference signal resource unit. The channel measurement result #j indicates a channel of Lⱼ ports, where the Lⱼ ports are ports for a reference signal transmitted on the j^{th} reference signal resource unit, and the channel of the Lⱼ ports is obtained by measuring the first reference signal received on the j^{th} reference signal resource unit.

Accordingly, step 930 may include:
step 9301, the terminal determines, based on the first reference signal received on the i^{th} reference signal resource unit, a channel measurement result #i; and
step 9302, the terminal determines, based on the first reference signal received on the j^{th} reference signal resource unit, a channel measurement result #j.

It should be understood that step 9301 and step 9302 may be performed simultaneously, or may not be performed simultaneously. For example, step 9301 is performed before step 9302. Actually, step 9301 may be performed after step 9201, and step 9302 may be performed after step 9202. An execution sequence of step 9301 and step 9302 is not limited in this application.

In step 940, the terminal sends the first CSI to the network device. Correspondingly, the network device receives the first CSI from the terminal.

For a specific implementation of step 940 in a RAN in which a CU, a DU, and an RU are deployed and in an ORAN, refer to related descriptions of step 440 in the method 400. Details are not described again.

As described above, the first CSI includes S channel measurement results corresponding to the S reference signal resource units. The terminal may send the S channel measurement results to the network device. For example, in this embodiment, the S reference signal resource units are the i^{th} reference signal resource unit and the j^{th} reference signal resource unit in the first base reference signal resource. The terminal may send the channel measurement result #i and the channel measurement result #j to the network device.

Accordingly, step 940 may include:
step 9401, the terminal sends the channel measurement result #i to the network device; and
step 9402, the terminal sends the channel measurement result #j to the network device.

Correspondingly, the network device receives the channel measurement result #i from the terminal in step 9401, and receives the channel measurement result #j from the terminal in step 9402.

In a possible implementation, the terminal sends the S channel measurement results as a whole, for example, sends the S channel measurement results through same CSI (for example, the first CSI). In this case, step 9401 and step 9402 may be combined into one step. For the terminal, the step may be implemented through one sending operation, and for the network device, the step may be implemented through one receiving operation.

In another possible implementation, the terminal separately sends the S channel measurement results, for example, sends the S channel measurement results through S pieces of CSI. In this case, the first CSI may be S pieces of CSI. In this case, step 9401 and step 9402 may be S independent steps. For the terminal, the steps may be implemented through S sending operations, and for the network device, the steps may be implemented through S receiving operations.

In step 950, the network device determines first channel estimation assistance information.

For example, in the RAN in which the CU, the DU, and the RU are deployed, a specific implementation of step 950 may be: The DU determines the first channel estimation assistance information. In the ORAN, a specific implementation of step 950 may be: An O-DU determines the first channel estimation assistance information.

For related descriptions of the first channel estimation assistance information, refer to related descriptions in step 420 in the method 400 and step 540 in the method 500. Details are not described again.

Because the terminal sends the S channel measurement results corresponding to the S reference signal resource units to the network device, the network device may estimate, based on the S channel measurement results, a channel of k₁ ports. To estimate the channel of the k₁ ports, the first channel estimation assistance information may be first determined.

A specific process in which the network device determines the first channel estimation assistance information is similar to a specific process in which the terminal determines the first channel estimation assistance information. For details, refer to related descriptions of step 830 in the method 800. Details are not described again.

In step 960, the network device determines, based on the first channel estimation assistance information and the first CSI, a channel of k₁ ports.

For example, in the RAN in which the CU, the DU, and the RU are deployed, a specific implementation of step 960 may be: The DU determines, based on the first channel estimation assistance information and the first CSI, the channel of the k₁ ports. In the ORAN, a specific implementation of step 960 may be: The O-DU determines, based on the first channel estimation assistance information and the first CSI, the channel of the k₁ ports.

In this embodiment, the first CSI includes the S channel measurement results. The network device may separately determine, based on the S channel measurement results, channels corresponding to the S reference signal resource units.

For example, in this embodiment, the network device may obtain, based on the channel measurement result #i, the channel of the Lᵢ ports, and then may estimate, based on channel estimation assistance information of the i^{th} reference signal resource unit, a channel **Ĥ**ᵢ of Nᵢ ports, where the **Ĥ**ᵢ may satisfy: ${\hat{H}}_{i} = {HP}_{port , i} {P}_{i}^{+}$.

Similarly, the network device may obtain, based on the channel measurement result #j, the channel of the Lⱼ ports, and then may estimate, based on channel estimation assistance information of the j^{th} reference signal resource unit, a channel ${\hat{H}}_{j} = {HP}_{port , j} {P}_{j}^{+}$ of Nⱼ ports.

The network device may concatenate, according to a concatenation rule, the channel **Ĥ**ᵢ of the Nᵢ ports and the channel **Ĥ**ⱼ of the Nⱼ ports, to obtain a channel **Ĥ**_{A} of the k₁ ports as follows: **Ĥ**_{A} = [**Ĥ**ᵢ **Ĥ**ⱼ].

In another implementation, the network device may first concatenate, according to a concatenation rule, port patterns and channel estimation assistance information that respectively correspond to the S reference signal resource units, to obtain a channel **Ĥ**_{A} of the k₁ ports as follows: ${\hat{H}}_{A} = H \left[\begin{matrix}{P}_{port , i} \\ {P}_{port , j}\end{matrix}\right] \left[\begin{matrix}{P}_{i}^{+} & 0 \\ 0 & {P}_{j}^{+}\end{matrix}\right] .$

The concatenation rule is described in detail with reference to FIG. 6, FIG. 7a, and FIG. 7b in step 550 of the method 500. For details, refer to the foregoing related descriptions. Details are not described again.

For more detailed content of step 960, refer to step 550 in the method 500. Details are not described again. It may be understood that, in this embodiment, a quantity k₁ of ports supported for estimation based on the first reference signal also satisfies: being less than or equal to a sum of quantities of ports respectively supported by the S reference signal resource units. In other words, in the foregoing example in which S = 2, k₁ is less than or equal to a sum of a quantity of ports supported for channel estimation by the i^{th} reference signal resource unit and a quantity of ports supported for channel estimation by the j^{th} reference signal resource unit.

Based on the technical solution provided above, using a reference signal resource unit as a granularity, the network device configures, for the terminal before sending a reference signal each time, one or more reference signal resource units used to transmit the reference signal. Each reference signal resource unit is used to transmit a reference signal of one or more ports, and supports channel estimation for the one or more ports. In this way, the network device may select, based on service requirements, any quantity of reference signal resource units to transmit the reference signal. The terminal may feed back, to the network device, a channel measurement result obtained by measuring a reference signal, so that the network device estimates, based on channel estimation assistance information corresponding to each reference signal resource unit, a channel corresponding to each reference signal resource unit, and then concatenates channels to obtain a channel of more ports. Therefore, flexible changes in a quantity of ports can be supported when RF channels are dynamically disabled, and air interface resource overhead of reference signals is reduced accordingly. In addition, the network device completes channel concatenation by itself, without a need for the terminal to perform concatenation, thereby reducing a computational burden on the terminal. In addition, the network device does not need to send the channel estimation assistance information corresponding to each reference signal resource unit to the terminal, thereby reducing signaling overhead.

It should be understood that, in the embodiments described above with reference to FIG. 5, FIG. 8, and FIG. 9, a reference signal is transmitted and channel estimation is performed using a reference signal resource unit as a granularity, and the estimated channels corresponding to the reference signal resource units are characterized by supporting concatenation. Based on a same concept, FIG. 5, FIG. 8, and FIG. 9 respectively provide three different implementations. It may be understood that, for these embodiments, for brevity, the embodiment shown in FIG. 5 is described in detail, and the embodiments shown in FIG. 8 and FIG. 9 focus on differences from the embodiment in FIG. 5. Therefore, in the embodiments shown in FIG. 8 and FIG. 9, for same or similar steps and same terms, refer to related descriptions in the method 500. Details are not described again.

FIG. 10 is yet another schematic flowchart of a communication method according to an embodiment of this application. In the method shown in FIG. 10, a first base reference signal resource is configured as a whole. A network device may select some or all ports from the first base reference signal resource to send a reference signal, and a time-frequency resource used to transmit the reference signal does not change with a quantity of ports.

The method 1000 shown in FIG. 10 may include step 1010 to step 1090. The following describes in detail steps in the method 1000.

In step 1010, the network device sends third information to a terminal, where the third information is used to configure T base reference signal resources. Correspondingly, the terminal receives the third information from the network device.

For example, in a RAN in which a CU, a DU, and an RU are deployed, a specific implementation of step 1010 may be: A CU-CP generates third information, and sends the third information to the terminal through the DU and the RU. In an ORAN, a specific implementation of step 1010 may be: An O-CU-CP generates third information, and sends the third information to the terminal through an O-DU and an O-RU.

In this embodiment, T may be a positive integer greater than or equal to 1. In other words, the third information may be used to configure one or more base reference signal resources, and the third information may also be referred to as configuration information for the one or more base reference signal resources.

In an implementation process, the network device may send configuration information of the T base reference signal resources as a whole, that is, the third information is configuration information used to configure the T base reference signal resources. In this case, the third information is one piece of information, and the network device may configure the T base reference signal resources through one sending operation. Alternatively, the network device may separately configure the T base reference signal resources, that is, separately configure the T base reference signal resources via T pieces of configuration information. In this case, the third information is T pieces of information, and the network device may configure the T base reference signal resources through T sending operations.

For ease of understanding, the following describes the base reference signal resource by using a *t*^{th} base reference signal resource as an example. It should be understood that the *t*^{th} base reference signal resource may be one of at least one base reference signal resources, where *t* may be any integer from 1 to T. The *t*^{th} base reference signal resource may be used to transmit a reference signal of a maximum of M*ₜ* ports. In other words, a quantity of ports for a reference signal transmitted using the *t*^{th} base reference signal resource may be less than or equal to M*ₜ*. In addition, the reference signal of the M*ₜ* ports may support channel estimation for a maximum of K*ₜ* ports. In other words, the reference signal of the M*ₜ* ports may be used to obtain a channel of a maximum of K*ₜ* ports, or a quantity of ports for a channel that may be obtained using the reference signal of the M*ₜ* ports may be less than or equal to K*ₜ*, or a maximum quantity of ports supported for channel estimation by the first base reference signal is K*ₜ*.

In conclusion, it can be learned that each base reference signal resource involves two quantities of ports: a maximum quantity of ports for transmitting reference signals (for ease of description, denoted as a maximum quantity of ports for reference signals, for example, M*ₜ*) and a maximum quantity of ports for an estimated channel (for ease of description, denoted as a maximum quantity of ports supported for channel estimation, or briefly referred to as a maximum quantity of supported ports, for example, K*ₜ*). In this application, for each base reference signal resource, a quantity of ports for transmitting reference signals may be less than or equal to the maximum quantity of supported ports, and a quantity of ports for an estimated channel matrix may be less than or equal to the maximum quantity of ports for reference signals.

It should be noted that, different from the method 500, the method 800, and the method 900, in this embodiment, the maximum quantity of ports for transmitting reference signals and the maximum quantity of ports supported for channel estimation by the base reference signal resource are defined.

For example, the *t*^{th} base reference signal resource is used to transmit a reference signal of a maximum of M*ₜ* ports. In other words, reference signals transmitted through the *t*^{th} base reference signal resource may be a reference signal of less than or equal to M*ₜ* ports. In other words, when channel estimation is performed using reference signals transmitted through the *t*^{th} base reference signal resource, a quantity of ports for the used reference signals may be less than or equal to M*ₜ*.

For another example, the *t*^{th} base reference signal resource supports channel estimation for a maximum of K*ₜ* ports. In other words, reference signals transmitted through the *t*^{th} base reference signal resource may be used to estimate a channel of less than or equal to K*ₜ* ports. It may be understood that a maximum quantity of ports supported for channel estimation by the *t*^{th} base reference signal resource is a quantity of ports included in the *t*^{th} base reference signal resource. For example, the *t*^{th} base reference signal resource includes K*ₜ* ports. The *t*^{th} base reference signal resource supports channel estimation for a maximum of K*ₜ* ports, that is, the *t*^{th} base reference signal resource supports channel estimation for some or all of ports included in the *t*^{th} base reference signal resource.

For "the maximum quantity of ports for transmitting reference signals" by the base reference signal resource and "the maximum quantity of ports supported" by the base reference signal resource, refer to detailed descriptions in the method 400. Details are not described again. Herein, the *t*^{th} base reference signal resource is used as an example to help understand that the maximum quantity of ports for transmitting reference signals by the *t*^{th} base reference signal resource is M*ₜ*, that is, a matrix indicating a port pattern of a reference signal includes M*ₜ* columns. However, this does not mean that the network device can only send reference signals through M*ₜ* ports. The network device may alternatively send reference signals through more than M*ₜ* ports, which achieves a small gain, and may introduce air interface overhead, making it unnecessary. The maximum quantity of ports supported for channel estimation by the *t*^{th} base reference signal resource is K*ₜ*, that is, the *t*^{th} base reference signal resource includes K*ₜ* ports.

When T is greater than 1, any two of the T base reference signal resources may satisfy: Maximum quantities of ports for transmitting reference signals are different, and/or maximum quantities of supported ports are different.

For example, for a base reference signal resource #1, a maximum quantity of ports for transmitting reference signals is 100, and a maximum quantity of supported ports is 1024; for a base reference signal resource #2, a maximum quantity of ports for transmitting reference signals is 200, and a maximum quantity of supported ports is 1024; for a base reference signal resource #3, a maximum quantity of ports for transmitting reference signals is 50, and a maximum quantity of supported ports is 256; and for a base reference signal resource #4, a maximum quantity of ports for transmitting reference signals is 50, and a maximum quantity of supported ports is 128. Further examples are not listed.

It can be learned that, for the base reference signal resource #1 and the base reference signal resource #2, maximum quantities of supported ports are the same, but maximum quantities of ports for reference signals are different. The base reference signal resource #1 is more efficient in reducing air interface overhead, and the base reference signal resource #2 provides more accurate channel estimation due to a larger quantity of observed ports for reference signals. A similar relationship exists between the base reference signal resource #3 and the base reference signal resource #4. Details are not described again. The network device may select, based on service requirements, an appropriate base reference signal resource for use.

Optionally, the third information indicates one or more of the following of each of the T base reference signal resources: an identifier, a resource pattern, a port pattern, and base channel estimation assistance information.

The following still uses the *t*^{th} base reference signal resource as an example for description.

**Identifier**: Different identifiers may be used to identify different base reference signal resources. Each identifier corresponds to one base reference signal resource. Different from the identifier indicated via the first information in the method 500, the identifier may be referred to as an identifier of a base reference signal resource, and the identifier indicated via the first information in the method 500 may be referred to as an identifier of a reference signal resource unit.

**Resource pattern**: Because the *t*^{th} base reference signal resource may be used to transmit a reference signal of a maximum of M*ₜ* ports, a resource pattern of the *t*^{th} base reference signal resource may indicate a mapping relationship between a reference signal of each of the M*ₜ* ports and a time-frequency resource. That is, time-frequency resources (more specifically, REs) to which the reference signal of each port is mapped may be determined based on the resource pattern, so that the terminal receives the reference signal at corresponding positions.

**Port pattern**: Because the *t*^{th} base reference signal resource may be used to transmit a reference signal of a maximum of M*ₜ* ports and estimate a channel matrix of a maximum of K*ₜ* ports, and the M*ₜ* ports are included in the K*ₜ* ports, a port pattern may indicate indexes of the M*ₜ* ports in the K*ₜ* ports. It may be understood that the port pattern implicitly indicates a maximum quantity of ports for transmitting reference signals and a maximum quantity of ports supported for channel estimation of the *t*^{th} base reference signal resource.

When the third information indicates the resource pattern and the port pattern, in a possible implementation, the resource pattern and the port pattern are indicated by indicating a matrix **P***ₜ* . The matrix **P***ₜ* satisfies: **P***ₜ* = **P**_{port,*t*} ⊗ **P**_{RE,*t*} , where **P**_{port,*t*} represents a port pattern of the *t*^{th} base reference signal resource, and **P**_{RE,*t*} represents a resource pattern of the *t*^{th} base reference signal resource.

The following describes the matrix **P**_{port,*t*} and the matrix **P**_{RE,*t*} in detail.

For example, a quantity of REs included in the *t*^{th} base reference signal resource is N_{RE,*t*}, and a maximum quantity of supported ports is K*ₜ*. For each receive port, a channel matrix **H***ₜ* that can be observed is a matrix of dimensions N_{RE,*t*} × K*ₜ*. The matrix **P**_{port,*t*} and the matrix **P**_{RE,*t*} may be obtained by performing spatial domain processing and time-frequency domain processing on a channel, respectively.

### (1) Spatial domain processing

The network device may perform spatial domain QR decomposition on the channel matrix **H***ₜ*, to obtain the matrix **P**_{port,*t*} . The matrix **P**_{port,*t*} has dimensions of K*ₜ* × M*ₜ*, and includes M*ₜ* non-zero elements, and all other elements are zero. The M*ₜ* non-zero elements are located in M*ₜ* columns of the matrix **P**_{port,*t*} , that is, each non-zero element is located in one column of the matrix **P**_{port,*t*} . The M*ₜ* non-zero elements correspond to M*ₜ* ports, and a position of each non-zero element in a column in which the non-zero element is located may indicate an index of a corresponding port in K*ₜ* ports. This indicates that M*ₜ* important ports are selected from the K*ₜ* ports. For example, if a non-zero element is in a first row of a column in which the non-zero element is located, it indicates that a port corresponding to the non-zero element is a first port of the K*ₜ* ports, that is, an index of the port can be determined. It should be understood that the matrix **P**_{port,*t*} is equivalent to the matrix **P**_{aug} in the foregoing term description of the channel estimation assistance information.

The channel matrix **H***ₜ* may be right multiplied by the matrix **P**_{port,*t*} , to obtain a matrix **H*ₜ*'**, where **H***ₜ '* = **H***ₜ***P**_{port,*t*}. The matrix **H*ₜ*'** has dimensions of N_{RE,*t*} × M*ₜ*, that is, a quantity of ports is reduced from K*ₜ* to M*ₜ*, which is analogous to achieving port dimensionality reduction in spatial domain through precoding.

### (2) Time-frequency domain processing

Time-frequency domain QR decomposition may be further performed on a transpose of the matrix **H *ₜ* '** , to obtain the matrix **P**_{RE,*t*} . The matrix **P**_{RE,*t*} has dimensions of M*ₜ* × N'_{RE,*t*}, where N'_{RE,*t*} is less than N_{RE,*t*}. The matrix **P**_{RE,*t*} includes N'_{RE,*t*} non-zero elements, and all other elements are zero. The N'_{RE,*t*} non-zero elements are located in N'_{RE,*t*} columns of the matrix **P**_{RE,*t*} , that is, each non-zero element is located in one column of the matrix **P**_{RE,*t*} . The N'_{RE,*t*} non-zero elements correspond to N'_{RE,*t*} REs, and a position of each non-zero element in a column in which the non-zero element is located may indicate an index of a corresponding RE in N_{RE,*t*} REs. This indicates that N'_{RE,*t*} important REs are selected from the N_{RE,*t*} REs. In this way, resource overhead of reference signals in time-frequency domain can be reduced.

It should be understood that the foregoing describes a process of obtaining the matrix **P**_{port,*t*} and the matrix **P**_{RE,*t*} (or the port pattern and the resource pattern) by using an example in which spatial domain processing is performed before time-frequency domain processing. However, this should not constitute any limitation on this application. In an actual processing process, the network device may perform time-frequency domain QR decomposition on the channel matrix **H***ₜ*, followed by spatial domain QR decomposition, to obtain the **P**_{port,*t*} and the **P**_{RE,*t*} , and then obtain the **P***ₜ* . Alternatively, the network device may obtain the port pattern and the resource pattern in another manner. This is not limited in this application. The network device may obtain, based on the foregoing process, a matrix { **P***ₜ* } corresponding to each base reference signal resource, and indicate the matrix to the terminal via the third information.

It should be further understood that the port pattern and the resource pattern may alternatively be indicated by indicating the matrix **P**_{port,*t*} and the matrix **P**_{RE,*t*} , and are not necessarily indicated by indicating the matrix **P***ₜ* .

In another implementation, the network device may not indicate the resource pattern and the port pattern of each base reference signal resource via the third information, but the terminal determines the resource pattern and the port pattern of each base reference signal resource. The terminal may obtain, based on the foregoing process, a matrix { **P***ₜ* } corresponding to each base reference signal resource, obtain matrices { **P**_{port,*t*} } and { **P**_{RE,*t*} } corresponding to each base reference signal resource, or obtain a resource pattern and a port pattern corresponding to each base reference signal resource. Alternatively, the terminal may obtain a historical port pattern and resource pattern of a reference signal resource that occupies a same position as each base reference signal resource. This is not limited in this application.

Alternatively, the network device may indicate the **P**_{port,*t*} or the **P**_{RE,*t*} to the terminal via the third information, and the terminal determines, based on the received third information, the other matrix.

It should be noted that subscripts port and RE of the **P**_{port,*t*} and the **P**_{RE,*t*} herein are merely used to distinguish between a spatial domain resource (namely, a port) and a time-frequency domain resource (for example, a time-frequency unit). The time-frequency unit includes but is not limited to an RE. For example, one time-frequency unit may include a plurality of REs, and the plurality of REs may be used by a plurality of ports to send reference signals. In other words, the plurality of ports may multiplex the plurality of REs (for example, time division multiplexing or frequency division multiplexing), or the plurality of REs may be multiplexed by the plurality of ports.

**Base channel estimation assistance information**: The channel estimation assistance information has been described in the foregoing term description. In this embodiment, the base channel estimation assistance information is named merely to be distinguished from the following first channel estimation assistance information and second channel estimation assistance information. The base channel estimation assistance information corresponds to the base reference signal resource. Base channel estimation assistance information corresponding to the *t*^{th} base reference signal resource is used to estimate, based on a channel measurement result of the M*ₜ* ports, a channel matrix of the K*ₜ* ports. That the channel matrix of the K*ₜ* ports is estimated based on the channel measurement result of the M*ₜ* ports may specifically mean that a channel measurement result obtained by measuring the reference signal of the M*ₜ* ports is a channel of the M*ₜ* ports, and then the channel matrix of the K*ₜ* ports is reconstructed based on the channel of the M*ₜ* ports and the base channel estimation assistance information.

The network device may indicate, to the terminal via the third information, base channel estimation assistance information corresponding to each base reference signal resource. The base channel estimation assistance information corresponding to each base reference signal resource may alternatively be determined by the terminal rather than being indicated via the third information. Alternatively, the terminal may compute, based on the method provided in the foregoing term description, the base channel estimation assistance information corresponding to each base reference signal resource. Alternatively, the terminal may obtain historical channel estimation assistance information of a reference signal resource that occupies a same position as each base reference signal resource.

**Maximum quantity of ports supported for channel estimation**: a maximum quantity of ports for a channel matrix that can be estimated via a reference signal transmitted using the base reference signal resource. For example, a maximum quantity of ports supported for channel estimation by the *t*^{th} base reference signal resource is K*ₜ*. In other words, the *t*^{th} base reference signal resource may be used to estimate a channel of less than or equal to K*ₜ* ports.

Dimensions of the base channel estimation assistance information are related to the maximum quantity of ports supported for channel estimation, and a quantity of columns of the base channel estimation assistance information may be the maximum quantity of ports supported for channel estimation. Therefore, the base channel estimation assistance information may indicate the maximum quantity of ports supported for channel estimation. In other words, the base channel estimation assistance information is a possible form of indicating the maximum quantity of ports supported for channel estimation.

It should be understood that the T base reference signal resources may be predefined, for example, resource patterns, port patterns, base channel estimation assistance information, and the like of the T base reference signal resources are pre-stored in a device before delivery, so there is no need for the network device to indicate the T base reference signal resources to the terminal via the third information. In other words, step 1010 is an optional step.

In step 1020, the network device sends, on a first resource, a first reference signal. Correspondingly, the terminal receives, on the first resource, the first reference signal.

Specific implementations of step 1020 in a RAN in which a CU, a DU, and an RU are deployed and in an ORAN are similar to step 410 in the method 400. For details, refer to the foregoing related descriptions. Details are not described again.

It should be understood that the first resource is from the first base reference signal resource, and the first base reference signal resource may be any one of the T base reference signal resources. A base reference signal resource selected by the network device to transmit a reference signal is not limited in this application.

Because the first base reference signal resource is one of the T base reference signal resources, a maximum quantity M of ports for transmitting reference signals by the first base reference signal resource may be one of M₁ to M_{T}, and a maximum quantity K of supported ports may be one of K₁ to K_{T}. In the following, this embodiment is described mainly by using the first base reference signal resource as an example. Therefore, for ease of description, subscripts used to distinguish base reference signal resources in parameters are omitted, that is, the channel matrix is **H**, and has dimensions of N_{RE} × K, where N_{RE} is a quantity of REs included in the first base reference signal resource.

The first resource is from the first base reference signal resource. In this embodiment, it is assumed that the first resource may be used to transmit a reference signal of m₁ ports (m₁ is a positive integer less than or equal to M). In other words, the first reference signal transmitted on the first resource is a reference signal of m₁ ports. It may be understood that the m₁ ports are from the M ports. In other words, the m₁ ports are included in the M ports, or the m₁ ports are some or all of the M ports. The first base reference signal resource includes K ports, where K is any one of K₁ to K_{T}, and the M ports are from the K ports. Therefore, the first resource is some or all resources in the first base reference signal resource.

In conclusion, the following relationships may be obtained: k₁ ≤ K, m₁ < M, m₁ ≤ k₁, and M ≤ K.

It should be understood that, in this application, for ease of distinction and description, the base reference signal resource is defined as a time-frequency resource, to be distinguished from a spatial domain resource (for example, a port). In another implementation, the base reference signal resource may alternatively be defined as a resource in three dimensions: time domain, frequency domain, and spatial domain. In this case, a resource for transmitting the first reference signal may be some resources in the first base reference signal resource. Step 402 may also be described as: receiving, on a first resource, a first reference signal, where the first resource is from a first base reference signal resource. Correspondingly, the terminal receives, on the first resource, the first reference signal.

It may be understood that because the first base reference signal resource is one of the T base reference signal resources, a maximum quantity M of ports for reference signals corresponding to the first base reference signal resource may be one of M₁ to MT, and a maximum quantity K of supported ports may be one of K₁ to K_{T}. In the following, this embodiment is described mainly by using a reference signal received on the first base reference signal resource as an example. Therefore, for ease of description, subscripts used to distinguish base reference signal resources in parameters are omitted. In other words, the channel matrix **H** includes K column vectors, a maximum quantity of ports for reference signals corresponding to the first base reference signal resource is M, and a maximum quantity of supported ports is K.

The first reference signal transmitted by the network device using the first resource is a reference signal of m₁ ports, and a channel through which the first reference signal passes may be expressed by using the following formula: **H · P**_{#1}. In other words, the terminal may obtain, based on the received first reference signal, a channel **H**' , satisfying: **H**'=**H** · **P**_{#1}. **H** is a channel matrix. **P**_{#1} is a matrix of dimensions K × m₁, and may be used to reduce dimensions of a channel matrix from K ports to m₁ ports, or to select m₁ ports from K ports, where m₁ is a positive integer less than or equal to M. Right multiplying the channel **H** by **P**_{#1} is analogous to achieving port dimensionality reduction in spatial domain through precoding.

Optionally, m₁ is equal to M. In this case, the **P**_{#1} satisfies: **P**_{#1}=**P**ₚₒᵣₜ. Therefore, **H** · **P**_{#1} =**H** · **P**ₚₒᵣₜ · **P**ₚₒᵣₜ is a matrix of dimensions K × M, represents a port pattern corresponding to the first base reference signal resource, and indicates indexes of M ports in K ports.

Optionally, m₁ is less than M. In this case, the **P**_{#1} satisfies: ${P}_{# 1} = {P}_{port} ⋅ {P}_{sub}^{+}$. Therefore, $H ⋅ {P}_{# 1} = H ⋅ {P}_{port} ⋅ {P}_{sub}^{+} . {P}_{port} ⋅ {P}_{sub}^{+}$ represents performing weighted dimensionality reduction on the matrix **P**ₚₒᵣₜ by using ${P}_{sub}^{+}$. ${P}_{sub}^{+}$ is a weighted dimensionality reduction matrix obtained according to an extraction rule, has dimensions of M × m₁, and is used to reduce dimensionality of the first reference signal from M ports to m₁ ports, or to select m₁ ports from M ports. That is, a quantity of ports may be reduced from M to m₁ by right multiplying **P**ₚₒᵣₜ by ${P}_{sub}^{+}$.

An extraction rule for performing extraction on channel estimation assistance information **P**⁺ may be, for example, obtaining a maximal linearly independent set of row vectors of the **P**⁺, or may be extracting several rows that reach a preset threshold in descending order of 2-norms of the row vectors of the **P**⁺. This is not limited in this application.

Optionally, the method further includes: The network device sends fourth information, where the fourth information indicates an identifier of the first base reference signal resource of the T base reference signal resources. Correspondingly, the terminal receives the fourth information.

When T is greater than 1, base reference signal resources may be distinguished by different identifiers. The network device may indicate, via the fourth information, an identifier of an actually used base reference signal resource (for example, the first base reference signal resource). The terminal may determine, based on the fourth information, the first base reference signal resource, and then receive, on the first base reference signal resource, the first reference signal.

It may be understood that, when T is equal to 1, even if the network device does not indicate the identifier of the base reference signal resource, the terminal may determine, based on configuration information, the first base reference signal resource. Therefore, the network device does not necessarily send the fourth information.

In addition, the network device may indicate to the terminal through signaling when the base reference signal resource is switched, or may not indicate to the terminal additionally through signaling when the base reference signal resource does not need to be switched. For example, if a resource used when the network device sends a reference signal last time is from the first base reference signal resource, and a resource needed when the network device sends a reference signal next time is also from the first base reference signal resource, the network device may not need to send the fourth information. For another example, if a resource used when the network device sends a reference signal last time is from the first base reference signal resource, and a resource needed when the network device sends a reference signal next time is from a second base reference signal resource, the network device may indicate an identifier of the second base reference signal resource via the fourth information. In this way, unnecessary signaling overhead can be reduced.

In step 1030, the terminal determines, based on base channel estimation assistance information corresponding to the first base reference signal resource, first channel estimation assistance information.

As described above, the base channel estimation assistance information corresponding to the first base reference signal resource is used to estimate, based on a channel measurement result of M ports, a channel matrix of K ports, and in this embodiment, the m₁ ports for the first reference signal are from the M ports. Therefore, the terminal may determine, based on the base channel estimation assistance information corresponding to the first base reference signal resource, channel estimation assistance information used to obtain a channel corresponding to a port for which channel estimation needs to be performed.

In step 1040, the terminal determines, based on the first reference signal and the first channel estimation assistance information, first CSI.

The terminal may obtain a channel of the m₁ ports by measuring the first reference signal, and then determine, based on the first channel estimation assistance information, k₁ ports, to determine the first CSI. The first CSI may be a PMI corresponding to a channel of the k₁ ports, or may be a channel estimation result that may indicate a channel corresponding to the k₁ ports.

The following describes a specific process of performing step 1030 and step 1040 by the terminal with reference to two cases in which m₁ is equal to M (case 1) and m₂ is less than M (case 2).

### Case 1: m₁ is equal to M.

As described above, the first reference signal received by the terminal on the first resource may be used to obtain a channel **H** · **P**ₚₒᵣₜ of M ports.

In step 1030, the terminal may determine, based on indexes of k₁ ports for a channel that needs to be estimated in K ports, first channel estimation assistance information from base channel estimation assistance information corresponding to the first base reference signal resource.

For example, the terminal may perform, based on the indexes of the k₁ ports in the K ports, column extraction on the base channel estimation assistance information **P⁺,** to extract columns corresponding to the k₁ ports from K columns, to form a matrix **P**⁺ (: ,{k₁}). **P**⁺ (: , {k₁}) represents a matrix of dimensions M × k₁, which is obtained by extracting k₁ columns from the K columns of the matrix **P⁺** and combining the k₁ columns in an order of the k₁ columns in the base channel estimation assistance information **P⁺.** In this way, the first channel estimation assistance information ${P}_{A}^{+}$ may be obtained, and the ${P}_{A}^{+}$ satisfies: ${P}_{A}^{+} = {P}^{+} \left(:,\left\{{k}_{1}\right\}\right)$.

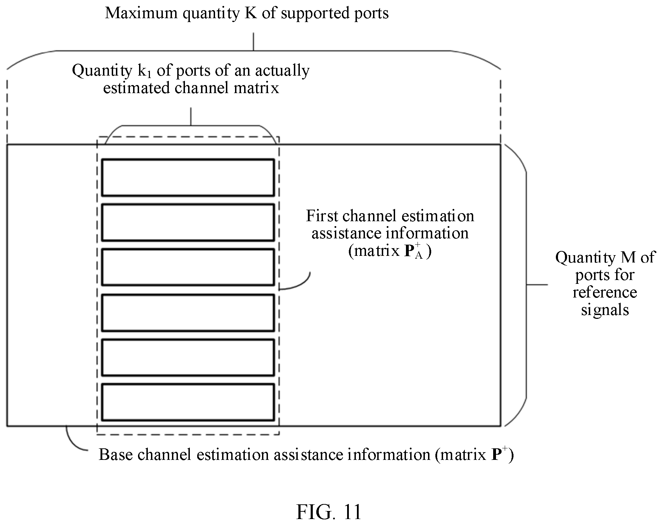

To better understand a relationship between the base channel estimation assistance information and the first channel estimation assistance information, FIG. 11 shows an example of the base channel estimation assistance information and the first channel estimation assistance information. As shown in the figure, the base channel estimation assistance information may be represented as a matrix of dimensions M (the maximum quantity of ports for reference signals) × K (the maximum quantity of supported ports), and may be used to estimate, based on the channel measurement result of the M ports, a channel matrix of the K ports. It may be understood that the M ports are included in the K ports, that is, a channel of the K ports is estimated based on a channel measurement result of some of the K ports. The first channel estimation assistance information is a matrix obtained by combining the k₁ columns extracted from the K columns of the base channel estimation assistance information. Therefore, the k₁ ports are included in the K ports. In addition, because a reference signal of the M ports is used to estimate a reference signal of the k₁ ports, the M ports are further included in the k₁ ports.

Optionally, a port for a channel matrix that needs to be estimated by the terminal may be indicated by the network device.

In a possible implementation, the network device may determine a port for a channel matrix that needs to be estimated, and indicate the port to the terminal via sixth information.

Optionally, the method further includes: The network device sends sixth information to the terminal, where the sixth information indicates the indexes of the k₁ ports in the K ports. Correspondingly, the terminal receives the sixth information from the network device.

In a possible design, the indexes of the k₁ ports in the K ports may be indicated via a bitmap (bitmap) of K bits. For example, in ascending order of port numbers of the K ports, the K ports are in one-to-one correspondence with the K bits in the bitmap, and a value of each bit indicates whether a port corresponding to the bit is selected. In an example, it is assumed that a value of a bit corresponding to a selected port is set to "1", a value of a bit corresponding to an unselected port is set to "0", K is 12, and k₁ is 4. The bitmap may be represented as "001111000000". The bitmap may be considered as an explicit indication of the indexes of the k₁ ports in the K ports.

In another possible design, the indexes of the k₁ ports in the K ports may alternatively be indicated via a value k₁. For example, the network device and the terminal may pre-agree on a rule for selecting, from the K ports, a port for a channel matrix to be estimated. For example, the rule may be that several ports are selected in ascending order of port numbers. In this case, the network device only needs to indicate, to the terminal, a quantity k₁ of ports that need to be estimated, and the terminal may determine the indexes of the k₁ ports in the K ports. Therefore, the value k₁ may also be considered as an implicit indication of the indexes of the k₁ ports in the K ports.

It should be understood indicating the indexes of the k₁ ports in the K ports via the sixth information is not limited to the two manners listed above. A specific manner of indicating the indexes of the k₁ ports in the K ports via the sixth information is not limited in this application.

In step 1040, the terminal determines, based on the first reference signal and the first channel estimation assistance information, a channel of the k₁ ports, and then determines first CSI.

As described above, the first channel estimation assistance information is **P**⁺ (:,{k₁}), and the channel of the M ports that is measured by the terminal based on the first reference signal is **H** · **P**ₚₒᵣₜ. Therefore, the channel **Ĥ**_{A} of the k₁ ports may be obtained, and the **Ĥ**_{A} satisfies: **Ĥ**_{A} **=H**· **P**ₚₒᵣₜ · **P**⁺ (:, {k₁}).

The terminal may quantize the channel **Ĥ**_{A} of the k₁ ports based on a channel estimation result, and the channel estimation result indicates the channel of the k₁ ports. Alternatively, the terminal may continue to determine, based on the channel **Ĥ**_{A} of the k₁ ports, a precoding matrix adapted to the channel of the k₁ ports, and then quantize the precoding matrix via the PMI. Because the two implementations of determining the channel estimation result and determining the PMI have been described in step 430 in the method 400, reference may be made to the foregoing related descriptions. Details are not described again.

### Case 2: m₁ is less than M.

In step 1030, the terminal may determine, based on indexes of k₁ ports for a channel that needs to be estimated in K ports and indexes of m₁ ports in M ports, first channel estimation assistance information from base channel estimation assistance information corresponding to the first base reference signal resource.

For example, the terminal may perform, based on the indexes of the k₁ ports in the K ports, column extraction on the base channel estimation assistance information **P⁺,** to extract columns corresponding to the k₁ ports from K columns, to form a matrix **P**⁺(:,{k₁}). **P**⁺ (: , {k₁}) represents a matrix of dimensions M × k₁, which is obtained by extracting k₁ columns from the K columns of the matrix **P⁺** and combining the k₁ columns in an order of the k₁ columns in the matrix **P⁺.**

The terminal may perform, based on the indexes of the m₁ ports in the M ports, row extraction on a port pattern **P**ₚₒᵣₜ, and combine extracted row vectors in an order of the extracted row vectors in the matrix **P**ₚₒᵣₜ, to obtain a matrix **P**_{sub} of dimensions m₁ × M. The matrix **P**_{sub} includes m₁ non-zero elements (for example, "1"), and positions (namely, column indexes) of the m₁ non-zero elements in M columns may be determined based on the indexes of the m₁ ports in the M ports. For example, if the indexes of the m₁ ports in the M ports are 1 and 3, the matrix **P**_{sub} includes two non-zero elements, which are respectively located in a first row and a first column and a second row and a third column.

The terminal may obtain, based on the **P**_{sub} , a matrix ${P}_{A}^{+}$, where ${P}_{A}^{+} = {P}_{sub} ⋅ {P}^{+} \left(:,\left\{{k}_{1}\right\}\right)$. The formula represents performing row extraction on the **P**⁺ (:,{k₁}) by using the **P**_{sub}, and the matrix ${P}_{A}^{+}$ obtained through extraction has dimensions of m₁ × k₁. The matrix ${P}_{A}^{+}$ is a matrix obtained by extracting m₁ row vectors from M row vectors of the matrix **P**⁺ (: , {k₁}) and combining the m₁ row vectors in an order of the m₁ row vectors in the matrix **P**⁺ (: , {k₁}). It may be understood that the column indexes of the m₁ non-zero elements in the matrix **P**_{sub} are row indexes of the m₁ row vectors from the matrix ${P}_{A}^{+}$ in the matrix **P**⁺ (:,{k₁})).

Therefore, the first channel estimation assistance information ${P}_{A}^{+}$ may be obtained, and the ${P}_{A}^{+}$ satisfies: ${P}_{A}^{+} = {P}_{sub} ⋅ {P}^{+} \left(:,\left\{{k}_{1}\right\}\right)$.

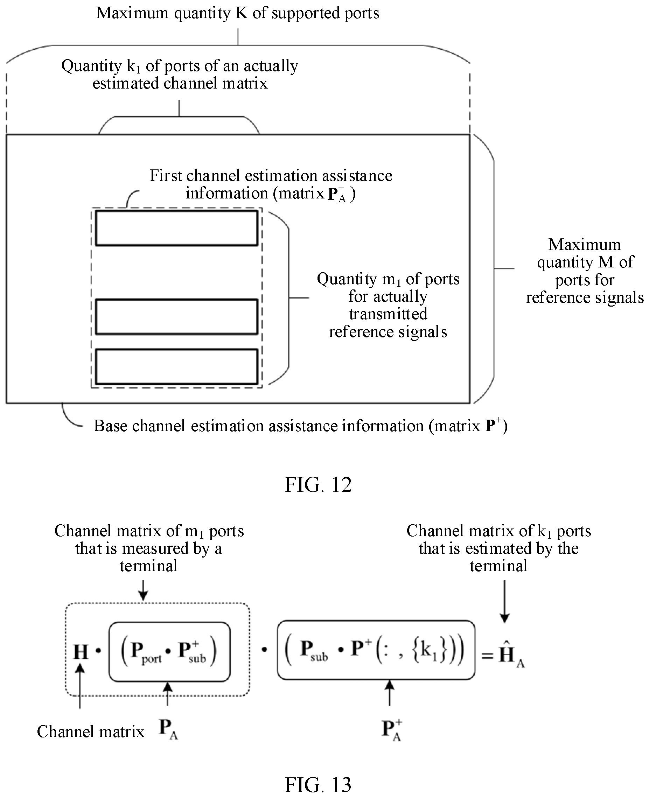

To better understand a relationship between the base channel estimation assistance information and the first channel estimation assistance information, FIG. 12 shows an example of the base channel estimation assistance information and the first channel estimation assistance information. As shown in the figure, the base channel estimation assistance information may be represented as a matrix of dimensions M (the maximum quantity of ports for reference signals) × K (the maximum quantity of supported ports), and may be used to estimate, based on the channel measurement result of the M ports, a channel matrix of the K ports. It may be understood that the M ports are included in the K ports, that is, the channel matrix of the K ports is estimated based on a channel measurement result of some of the K ports. The first channel estimation assistance information is k₁ columns and m₁ rows extracted from the base channel estimation assistance information, that is, the first channel estimation assistance information is obtained by performing column extraction and row extraction in sequence. Because the k₁ columns are extracted from the K columns, the k₁ ports are included in the K ports; because the m₁ rows are extracted from the M rows, the m₁ ports are included in the M ports; and because the M ports are included in the K ports, the m₁ ports are also included in the K ports. In addition, because the reference signal of the m₁ ports is used to estimate a reference signal of the k₁ ports, the m₁ ports are further included in the k₁ ports.

For determining the indexes of the k₁ ports in the K ports, refer to descriptions in Case 1. Details are not described again. Similarly, the indexes of the m₁ ports in the M ports may be indicated by the network device, or may be determined by the terminal.

In a possible implementation, the network device sends fifth information to the terminal, where the fifth information indicates the indexes of the m₁ ports in the M ports. Correspondingly, the terminal receives the fifth information from the network device.

In other words, the network device may determine, from the M ports, m₁ important ports to send reference signals, and indicate the m₁ ports to the terminal. The network device may determine, based on a predefined extraction rule, the m₁ important ports from the M ports, and indicate the indexes of the m₁ ports in the M ports to the terminal. A possible manner in which the network device indicates the indexes of the m₁ ports in the M ports to the terminal is indicating the matrix **P**_{sub} to the terminal. For descriptions of the matrix **P**_{sub} , refer to the foregoing descriptions about determining the first channel estimation assistance information. Details are not described again.

It should be understood that a specific process in which the network device determines the m₁ ports from the M ports is described in detail in step 1020. For details, refer to the foregoing related descriptions. Details are not described again.

In another possible implementation, the network device sends fifth information to the terminal, where the fifth information indicates an extraction rule for extracting the m₁ ports from the M ports. Correspondingly, the terminal receives the fifth information from the network device.

In other words, the network device may alternatively delegate an extraction task to the terminal. The network device may indicate the terminal to perform extraction based on a specific extraction rule. The extraction rule may be, for example, extracting rows that reach a preset threshold in descending order of 2-norms of row vectors of a matrix, or may be performing extraction based on a maximal linearly independent set of the row vectors of the matrix, or may be another rule. This is not limited in this application.

For example, the terminal may obtain, based on an extraction rule indicated by the network device, the matrix **P**_{sub}. For example, the extraction rule is performing extraction based on a maximal linearly independent set of row vectors of the matrix **P**⁺ (:, {k₁}) . The terminal may compute, based on the row vector of the **P**⁺ (: ,{k₁}), the maximal linearly independent set, to obtain the matrix **P**_{sub}.

The matrix **P**_{sub} includes the m₁ non-zero elements, and the column indexes of the m₁ non-zero elements are the indexes of the m₁ ports in the M ports.

It should be understood that the foregoing extraction rule is merely an example. For example, the extraction rule may alternatively be extracting several rows that reach a preset threshold in descending order of 2-norms of row vectors of the matrix **P**⁺ (: , {k₁}). This application includes but is not limited thereto.

It should be further understood that an extraction rule for extracting m₁ row vectors from M row vectors by the terminal should be the same as the extraction rule for extracting the m₁ ports from the M ports by the network device. For example, both extraction rules may be obtaining the maximal linearly independent set, or may be performing extraction in descending order of 2-norms of vectors.

It is not difficult to learn that the fifth information may be used to explicitly or implicitly indicate the indexes of the m₁ ports in the M ports.

In step 1040, the terminal determines, based on the first reference signal and the first channel estimation assistance information, a channel of the k₁ ports, and then determines first CSI.

As described above, the first channel estimation assistance information is ${P}_{A}^{+}$, and the channel of the M ports that is measured by the terminal based on the first reference signal is $H ⋅ {P}_{port} ⋅ {P}_{sub}^{+}$. Therefore, the channel **Ĥ**_{A} of the k₁ ports may be obtained, and the **Ĥ**_{A} satisfies: ${\hat{H}}_{A} = H ⋅ {P}_{port} ⋅ {P}_{sub}^{+} ⋅ {P}_{A}^{+}$. Substituting ${P}_{A}^{+}$ into the formula yields **Ĥ**_{A}, satisfying: ${\hat{H}}_{A} = H ⋅ {P}_{port} ⋅ {P}_{sub}^{+} ⋅ \left({P}_{sub}⋅{P}^{+}\left(:,\left\{{k}_{1}\right\}\right)\right) .$

For ease of understanding, FIG. 13 is a diagram of a relationship between a channel measurement result of m₁ ports that is measured by the terminal and a channel matrix of k₁ ports that is estimated by the terminal. As shown in FIG. 13, a channel of the m₁ ports that is measured by the terminal based on a reference signal of the m₁ ports is $H ⋅ \left({P}_{port}⋅{P}_{sub}^{+}\right)$, and a channel **Ĥ**_{A} of the k₁ ports may be estimated based on the first channel estimation assistance information **P**_{sub} · **P**⁺(:,{k₁}).

The terminal may quantize the channel **Ĥ**_{A} of the k₁ ports based on a channel estimation result, and the channel estimation result indicates the channel of the k₁ ports. Alternatively, the terminal may continue to determine, based on the channel **Ĥ**_{A} of the k₁ ports, a precoding matrix adapted to the channel of the k₁ ports, and then quantize the precoding matrix via the PMI. Because the two implementations of determining the channel estimation result and determining the PMI have been described in step 430 in the method 400, reference may be made to the foregoing related descriptions. Details are not described again.

Based on the foregoing solution, the first base reference signal resource is preconfigured for the terminal, and the first base reference signal resource may be used to estimate, based on a reference signal of a maximum of M ports, a channel of a maximum of K (K ≥ M) ports. The network device may select, based on requirements, some or all ports from the M ports to transmit reference signals, to estimate a channel of some or all of the K ports. In this way, the network device may flexibly select, based on the base reference signal resource and service requirements, a reference signal of any quantity of ports of the M ports to perform channel estimation, to estimate a channel of any quantity of ports of the K ports, thereby supporting flexible changes in a quantity of ports when RF channels are dynamically disabled. In addition, the network device does not need to configure, for the terminal, a transmission resource for a reference signal each time the reference signal is sent, for example, including a time-frequency pattern, a port pattern, and channel estimation assistance information of the resource, thereby reducing signaling overhead introduced by resource configuration.

In addition, a plurality of base reference signal resources including the first base reference signal resource may be preconfigured for the terminal. Maximum quantities of ports for transmitting reference signals by different base reference signal resources are different, and/or maximum quantities of ports supported for channel estimation by different base reference signal resources are different. The network device may select, based on requirements, an appropriate base reference signal resource to transmit a reference signal. For example, when a quantity of ports that need to be estimated is small, a base reference signal resource having a small maximum quantity of supported ports may be selected. When a quantity of ports that need to be estimated is small but high estimation accuracy is required, a base reference signal resource having a small maximum quantity of supported ports and a large maximum quantity of ports for transmitting reference signals may be selected. Further examples are not listed. It can be learned that the network device may flexibly select, based on requirements, a base reference signal resource to transmit a reference signal, thereby achieving high resource utilization.

In step 1050, the terminal sends the first CSI to the network device. Correspondingly, the network device receives the first CSI from the terminal.

Specific implementations of step 1050 in the RAN in which the CU, the DU, and the RU are deployed and in the ORAN are similar to step 440 in the method 400. For details, refer to the foregoing related descriptions. Details are not described again.

For a specific process of step 1050, refer to related descriptions of step 440 in the method 400. Details are not described again.

One round of channel estimation may be completed by performing step 1020 to step 1050.

It should be understood that the T base reference signal resources configured by the network device in step 1010 may be used for one or more rounds of channel estimation. Therefore, a plurality of rounds of channel estimation may be completed by repeatedly performing step 1020 to step 1050. To better understand this embodiment, the following describes a process of a next round of channel estimation through step 1060 to step 1090. It may be understood that the process of step 1060 to step 1090 is similar to the process of step 1020 to step 1050.

In step 1060, the network device sends, on a second resource, a second reference signal. Correspondingly, the terminal receives, on the second resource, the second reference signal.

Specific implementations of step 1060 in a RAN in which a CU, a DU, and an RU are deployed and in an ORAN are similar to step 410 in the method 400. For details, refer to the foregoing related descriptions. Details are not described again.

The second resource may be a resource from the first base reference signal resource. In this embodiment, it is assumed that the second resource may be used to transmit a reference signal of m₂ ports. In other words, the second reference signal is a reference signal of m₂ ports. In a possible design, the m₂ ports are from the m₁ ports, where m₂ is a positive integer less than or equal to m₁. In other words, the reference signal of the m₂ ports is a reference signal corresponding to some or all of the m₁ ports, or the reference signal of the m₂ ports is a reuse of a reference signal of some or all ports from a reference signal of the m₁ ports. Because m₁ is less than or equal to M, m₂ is also less than or equal to M. The reference signal of the m₂ ports is a reference signal of some or all of the M ports.

Certainly, the network device may not reuse the m₁ ports, but reselects m₂ ports from the M ports to transmit the second reference signal. This is not limited in this application. In this case, the terminal may perform processing based on operations of step 1030 to step 1050. Details are not described herein again. The following mainly discusses a case in which the m₂ ports are from the m₁ ports.

In step 1070, the terminal determines, based on the first channel estimation assistance information, second channel estimation assistance information.

Similar to the first channel estimation assistance information, the second channel estimation assistance information may be used to estimate, based on a channel of the m₂ ports, a channel of k₂ ports. In this embodiment, the k₂ ports are from the k₁ ports, and the m₂ ports are from the k₂ ports, where k₂ is a positive integer less than or equal to k₁ and greater than or equal to m₂. Because the m₂ ports are from the m₁ ports, and the k₂ ports are from the k₁ ports, the second channel estimation assistance information may be determined from the first channel estimation assistance information.

In conclusion, the following relationships may be obtained: m₂ ≤ m₁, k₂ ≤ k₁, and k₂ ≥ m₂. It is not difficult to learn that there is also a nesting relationship between the m₂ ports and the m₁ ports, and between the k₂ ports and the k₁ ports. The nesting relationship may be applied between the second channel estimation assistance information and the first channel estimation assistance information. Therefore, based on the nesting relationship, the second channel estimation assistance information may be obtained from the first channel estimation assistance information.

The following provides detailed descriptions still with reference to two cases in which m₂ is equal to m₁ (case A) and m₂ is less than m₁ (case B).

### Case A: m₂ is equal to m₁.

If m₂ is equal to m₁, that is, the network device reuses the m₁ ports, which are used last time, to transmit the second reference signal, or in other words, the first resource is the same as the second resource, the k₂ ports may be some or all of the k₁ ports. If the k₂ ports are all of the k₁ ports, the second channel estimation assistance information is the same as the first channel estimation assistance information, and the first channel estimation assistance information may be directly determined as the second channel estimation assistance information. If the k₂ ports are some of the k₁ ports, the second channel estimation assistance information may be obtained by extracting, based on indexes of the k₂ ports in the k₁ ports, k₂ columns from k₁ columns of the first channel estimation assistance information ${P}_{A}^{+}$, and combining the k₂ columns in an order of the k₂ columns in the first channel estimation assistance information ${P}_{A}^{+}$, to obtain a matrix ${P}_{B}^{+}$, where the PB satisfies ${P}_{B}^{+} = {P}_{A}^{+} \left(:,\left\{{k}_{2}\right\}\right) = {P}^{+} \left(:,\left\{{k}_{1}\right\}\right) \left(:,\left\{{k}_{2}\right\}\right)$, and has dimensions of M × k₂. The matrix ${P}_{B}^{+}$ is the second channel estimation assistance information.

### Case B: m₂ is less than m₁.

If m₂ is less than m₁, that is, the network device reuses some of the m₁ ports, which are used last time, to transmit the second reference signal, or in other words, the second resource is a part of the first resource, the k₂ ports may be some or all of the k₁ ports.

The terminal may determine, based on indexes of the m₂ ports in the m₁ ports and indexes of the k₂ ports in the k₁ ports, the second channel estimation assistance information from the first channel estimation assistance information.

For example, the terminal may perform, based on the indexes of the k₂ ports in the k₁ ports, column extraction on the first channel estimation assistance information ${P}_{A}^{+}$, to extract columns corresponding to the k₂ ports from k₁ columns, to form a matrix (**P**_{sub} · **P**⁺ (: , {k₁}))(:,{k₂}). (**P**_{sub} · **P**⁺(: , {k₁}))(: ,{k₂}) represents a matrix of dimensions m₁ × k₂, which is obtained by extracting k₂ columns from the k₁ columns of the first channel estimation assistance information ${P}_{A}^{+}$ and combining the k₂ columns in an order of the k₁ columns in the matrix ${P}_{A}^{+}$.

The terminal may obtain, based on the indexes of the m₂ ports in the m₁ ports, a matrix **P**_{sub,A→B} of dimensions m₂ × m₁. The process in which the terminal obtains, based on the indexes of the m₂ ports in the m₁ ports, the matrix **P**_{sub,A→B} is similar to the process in which the terminal obtains, based on the indexes of the m₁ ports in the M ports, the matrix **P**_{sub} in step 1030. For details, refer to the foregoing related descriptions. Details are not described again.

The terminal may obtain, based on the **P**_{sub,A→B} , a matrix ${P}_{B}^{+}$, where ${P}_{B}^{+} = {P}_{sub , A \to B} ⋅ \left({P}_{sub}⋅{P}^{+}\left(:,\left\{{k}_{1}\right\}\right)\right) \left(:,\left\{{k}_{2}\right\}\right)$. The formula represents performing row extraction on the (**P**_{sub} · **P**⁺ (: , {k₁})) (: , {k₂}) by using the **P**_{sub,A→B}, and the matrix ${P}_{B}^{+}$ obtained through extraction has dimensions of m₂ × k₂. The matrix PB is a matrix obtained by extracting m₂ row vectors from m₁ row vectors of the matrix (**P**_{sub} · **P**⁺ (:,{k₁})) (: , {k₂}) and combining the m₂ row vectors in an order of the m₂ row vectors in the matrix (**P**_{sub} **·P**⁺ (:,{k₁))(:,{k₂}).

Therefore, the first channel estimation assistance information ${P}_{B}^{+}$ may be obtained, and the PB satisfies: ${P}_{B}^{+} = {P}_{sub , A \to B} ⋅ \left({P}_{sub}⋅{P}^{+}\left(:,\left\{{k}_{1}\right\}\right)\right) \left(:,\left\{{k}_{2}\right\}\right)$.

The process in which the terminal determines the second channel estimation assistance information from the first channel estimation assistance information is similar to the process in which the terminal determines the first channel estimation assistance information from the base channel estimation assistance information in step 1030. For details, refer to related descriptions in step 1030. Details are not described again.

The indexes of the m₂ ports in the m₁ ports and the indexes of the k₂ ports in the k₁ ports may be indicated by the network device through signaling, or may be determined by the terminal according to an extraction rule indicated by the network device. For details, refer to the foregoing related descriptions with reference to the fifth information and the sixth information. Details are not described again.

In addition, because there is the nesting relationship between the m₁ ports and the M ports, and between the k₁ ports and the K ports, there is also a nesting relationship between the m₂ ports and the M ports, and between the k₂ ports and the K ports. The nesting relationship may be applied between the second channel estimation assistance information and the base channel estimation assistance information. Therefore, based on the nesting relationship, the second channel estimation assistance information may alternatively be obtained from the base channel estimation assistance information. The terminal may determine, based on indexes of the k₂ ports in the K ports and indexes of the m₂ ports in the M ports, the second channel estimation assistance information from the base channel estimation assistance information. The specific process is similar to the process of determining the first channel estimation assistance information from the base channel estimation assistance information. For brevity, details are not described herein again.

In step 1080, the terminal determines, based on the second reference signal and the second channel estimation assistance information, second CSI, where the second CSI is used to determine a precoding matrix corresponding to a channel of the k₂ ports.

Similar to the first CSI, the second CSI may be a channel estimation result indicating the channel of the k₂ ports, or may be a PMI corresponding to the channel of the k₂ ports.

The process in which the terminal determines, based on the second reference signal and the second channel estimation assistance information, the second CSI is similar to the process in which the terminal determines, based on the first reference signal and the first channel estimation assistance information, the first CSI in step 1040. For details, refer to the foregoing related descriptions in step 1040. Details are not described again.

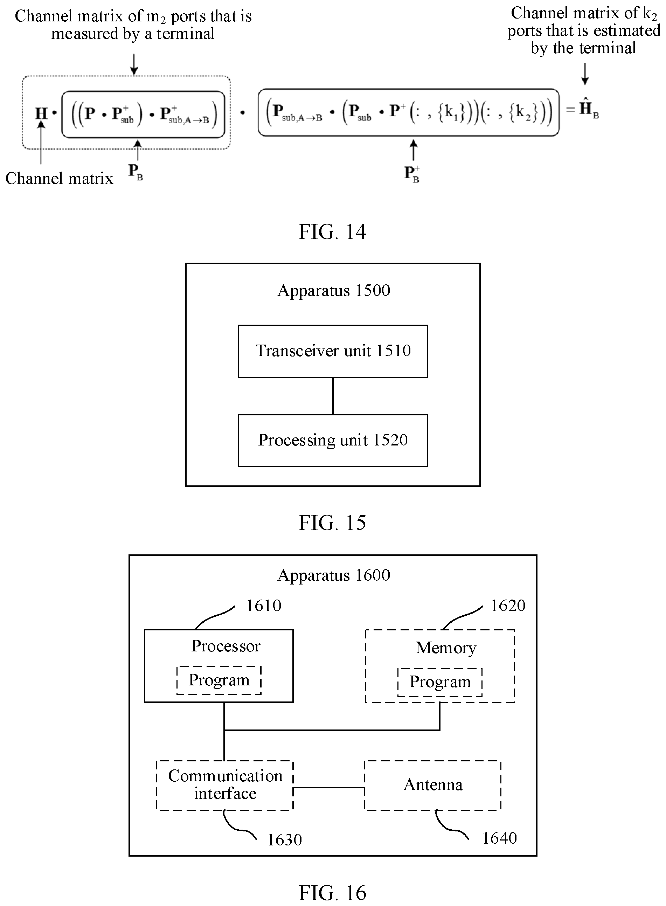

For ease of understanding, FIG. 14 is a diagram of a relationship between a channel matrix of the m₂ ports that is measured by the terminal and a channel matrix of the k₂ ports that is estimated by the terminal. As shown in FIG. 14, a channel of the m₂ ports that is measured by the terminal based on the reference signal of the m₂ ports is $H ⋅ \left(\left(P⋅{P}_{sub}^{+}\right)⋅{P}_{sub , A \to B}^{+}\right)$, and the channel **Ĥ**_{B} of the k₂ ports may be estimated based on the second channel estimation assistance information **P**_{sub,A→B} ·(**P**_{sub} · **P**⁺ (: ,{k₁}))(:,{k₂}) .

The process in which the terminal determines the second CSI is similar to the process in which the terminal determines, based on the first reference signal and the first channel estimation assistance information, the first CSI in step 1040. For details, refer to the foregoing descriptions of step 1040 with reference to Case 1 and Case 2. Details are not described again.

In step 1090, the terminal sends the second CSI to the network device. Correspondingly, the network device receives the second CSI from the terminal.

A specific process of step 1090 and specific implementations of step 1090 in the RAN in which the CU, the DU, and the RU are deployed and in the ORAN are similar to step 440 in the method 400. For details, refer to the foregoing related descriptions. Details are not described again.

In this way, another round of channel estimation is completed.

In the two rounds of channel estimation, the network device uses a resource in a same base reference signal resource to transmit a reference signal, and a mapping relationship between a port for a reference signal transmitted each time and a time-frequency resource remains unchanged. Therefore, the network device does not need to indicate a transmission resource for a reference signal for each round of channel estimation. In other words, the network device may use a resource in a same base reference signal resource to perform a plurality of rounds of channel estimation, without indicating a transmission resource for a reference signal transmitted each time, thereby reducing signaling overhead. In addition, because a port for a reference signal transmitted in a next round is a subset of ports for a reference signal transmitted in a previous round, the terminal may use the previous round of channel estimation as a reference for the next round of channel estimation. For example, the second channel estimation assistance information is determined based on the first channel estimation assistance information determined in the previous channel estimation process. This reduces a computation amount and improves execution efficiency compared with directly determining, based on the base channel estimation assistance information, the second channel estimation assistance information.

It should be noted that the first channel estimation assistance information is used to determine the first CSI, and the second channel estimation assistance information is used to determine the second CSI. Therefore, in some implementations, the steps of determining the first channel estimation assistance information and determining the first CSI (for example, step 420 and step 430 in the method 400, step 540 and step 550 in the method 500, step 830 and step 840 in the method 800, and step 1030 and step 1040 in the method 1000) may be considered as a process of determining the first CSI, and the steps of determining the second channel estimation assistance information and determining the second CSI (for example, step 1070 and step 1080 in the method 1000) may be considered as a process of determining the second CSI. In this specification, determining of the first channel estimation assistance information and determining of the first CSI, and determining of the second channel estimation assistance information and determining of the second CSI are separately described merely for ease of understanding and description. Similarly, step 950 and step 960 in the method 900 may be considered as a process in which the network device determines the channel of the k₁ ports, or may be considered as a part of a process in which the network device determines the precoding matrix. In this specification, step 950 and step 960 are separately described merely for ease of understanding and description.

The foregoing describes in detail the communication method provided in embodiments of this application with reference to the accompanying drawings. The following describes in detail apparatuses provided in embodiments of this application with reference to the accompanying drawings.

FIG. 15 to FIG. 18 are block diagrams of possible communication apparatuses according to embodiments of this application. These communication apparatuses may be configured to implement functions of the terminal or the network device in the foregoing method embodiments. Therefore, beneficial effect of the foregoing method embodiments can also be implemented. In embodiments of this application, the communication apparatus may be the terminal or the network device in the method embodiment shown in FIG. 4, FIG. 5, FIG. 8, FIG. 9, or FIG. 10, may be a component (for example, a chip, a chip system, or a processor) configured in the terminal or the network device, or may be a logical module or software that can implement some or all functions of the terminal or the network device.

FIG. 15 shows a communication apparatus provided in this application. The communication apparatus 1500 includes a transceiver unit 1510 and a processing unit 1520.

In a possible design, the apparatus 1500 is configured to implement functions of the terminal in the method embodiment shown in FIG. 4, FIG. 5, FIG. 8, FIG. 9, or FIG. 10.

For example, the transceiver unit 1510 is configured to receive, on a first resource, a first reference signal. The first resource is from a first base reference signal resource. The first base reference signal resource is used to transmit a reference signal of a maximum of M ports, and the reference signal of the M ports supports channel estimation for a maximum of K ports. The first reference signal is a reference signal of m₁ ports, and the m₁ ports are from the M ports. m₁ is less than or equal to M. M is less than or equal to K. m₁, M, and K are positive integers. The processing unit 1520 is configured to determine, based on the first reference signal and first channel estimation assistance information, first CSI. The first CSI corresponds to a channel of k₁ ports. The first channel estimation assistance information is determined based on base channel estimation assistance information corresponding to the first base reference signal resource. The base channel estimation assistance information is used to estimate, based on a channel measurement result of the M ports, a channel of the K ports. The first channel estimation assistance information is used to estimate, based on a channel measurement result of the m₁ ports, the channel of the k₁ ports. The k₁ ports are from the K ports. k₁ is a positive integer greater than or equal to m₁ and less than or equal to K. The transceiver unit 1510 is further configured to send the first CSI.

Optionally, the first base reference signal resource includes R reference signal resource units, K is less than or equal to a sum of quantities of ports supported for channel estimation by the R reference signal resource units, respectively, and is greater than a quantity of ports supported for channel estimation by any one of the R reference signal resource units, and R is a positive integer.

Optionally, the first resource includes S reference signal resource units of the R reference signal resource units. k₁ is a quantity of ports supported for channel estimation by the S reference signal resource units, and k₁ is greater than a quantity of ports supported for channel estimation by any one of the S reference signal resource units. S is a positive integer less than or equal to R. The transceiver unit 1510 is further configured to receive, on the S reference signal resource units, the first reference signal.

Optionally, the transceiver unit 1510 is further configured to receive first information. The first information indicates one or more of the following of each of the R reference signal resource units: a resource pattern, a port pattern, a quantity of ports supported for channel estimation, or channel estimation assistance information. An *r*^{th} reference signal resource unit of the R reference signal resource units is used to transmit a reference signal of L*ᵣ* ports. The reference signal of the L*ᵣ* ports supports channel estimation for N*ᵣ* ports. N*ᵣ* is a quantity of ports supported for channel estimation by the *r*^{th} reference signal resource unit. L*ᵣ* is a positive integer less than or equal to M. N*ᵣ* is a positive integer less than or equal to K and greater than or equal to L*ᵣ*. *r* is a positive integer from 1 to R. The resource pattern of the *r*^{th} reference signal resource unit indicates a mapping relationship between a reference signal of each of the L*ᵣ* ports and a time-frequency resource. The port pattern of the *r*^{th} reference signal resource unit indicates indexes of the L*ᵣ* ports in the N*ᵣ* ports. The channel estimation assistance information of the *r*^{th} reference signal resource unit is used to estimate, based on a channel measurement result of the L*ᵣ* ports, a channel of the N*ᵣ* ports. The base channel estimation assistance information is determined based on the channel estimation assistance information respectively corresponding to the R reference signal resources.

Optionally, the transceiver unit 1510 is further configured to receive second information. The second information indicates the S reference signal resource units of the R reference signal resource units.

Optionally, the transceiver unit 1510 is further configured to receive indication information of each of the S reference signal resource units. Indication information of an *s*^{th} reference signal resource unit of the S reference signal resource units indicates one or more of the following of the *s*^{th} reference signal resource unit: a resource pattern, a quantity of ports supported for channel estimation, channel estimation assistance information, or a concatenation identifier. The S reference signal resource units are from the R reference signal resource units. An *rₛ*^{th} reference signal resource unit of the S reference signal resource units is used to transmit a reference signal of L*_{rₛ}* ports. The reference signal of the L*_{rₛ}* ports supports channel estimation for N*_{rₛ}* ports. N*_{rₛ}* is a quantity of ports supported for channel estimation by the *rₛ*^{th} reference signal resource unit. L*_{r**ₛ**}* is a positive integer less than or equal to M. N*_{rₛ}* is a positive integer less than or equal to K and greater than or equal to L*_{r**ₛ**}* . *rₛ* represents an identifier, in the R reference signal resource units, of the *s*^{th} reference signal resource unit of the S reference signal resource units. The resource pattern of the *rₛ*^{th} reference signal resource unit indicates a mapping relationship between a reference signal of each of the L*_{r**ₛ**}* ports and a time-frequency resource. The port pattern of the *rₛ*^{th} reference signal resource unit indicates indexes of the L*_{r**ₛ**}* ports in the N*_{rₛ}* ports. The channel estimation assistance information of the *rₛ*^{th} reference signal resource unit is used to estimate, based on a channel measurement result of the L*_{r**ₛ**}* ports, a channel of the N*_{rₛ}* ports. The base channel estimation assistance information is determined based on the channel estimation assistance information respectively corresponding to the R reference signal resource units. The S reference signal resource units have a same concatenation identifier to indicate that channel matrices estimated based on the first reference signal transmitted on the S reference signal resource units support concatenation.

Optionally, the first CSI includes a PMI corresponding to the channel of the k₁ ports, or indicates a channel estimation result corresponding to the channel of the k₁ ports. The first channel estimation assistance information includes channel estimation assistance information respectively corresponding to the S reference signal resource units in the base channel estimation assistance information. The processing unit 1520 is further configured to perform channel estimation based on the first reference signal received on each of the S reference signal resource units and channel estimation assistance information corresponding to each reference signal resource unit in the base channel estimation assistance information, to obtain channels respectively corresponding to the S reference signal resource units. The processing unit 1520 is further configured to obtain, based on the channels respectively corresponding to the S reference signal resource units, the channel of the k₁ ports. The processing unit 1520 is further configured to determine, based on the channel of the k₁ ports, the first CSI.

Optionally, the k₁ ports include at least one reference port, and a time-frequency resource corresponding to each of the at least one reference port is included in at least two of the S reference signal resource units. The processing unit 1520 is further configured to concatenate, by using each of the at least one reference port as a reference and according to a concatenation rule, the channels respectively corresponding to the S reference signal resource units.

Optionally, the at least one reference port is determined according to a first rule, where the first rule is predefined in a protocol, or is indicated by the network device; or the at least one reference port is indicated by the network device.

Optionally, the concatenation rule includes: horizontally concatenating, from left to right in ascending order of identifiers corresponding to a plurality of reference signal resource units, channels respectively corresponding to the plurality of reference signal resource units.

Optionally, the transceiver unit 1510 is further configured to receive, on the first base reference signal resource, the first reference signal.

Optionally, the transceiver unit 1510 is further configured to receive third information. The third information indicates one or more of the following of each of the T base reference signal resources: a resource pattern, a maximum quantity of ports supported for channel estimation, and base channel estimation assistance information. A *t*^{th} base reference signal resource of the T base reference signal resources is used to transmit a reference signal of a maximum of M*ₜ* ports. The reference signal transmitted using the *t*^{th} base reference signal resource supports channel estimation for a maximum of K*ₜ* ports. K*ₜ* is a maximum quantity of ports supported for channel estimation by the *t*^{th} base reference signal resource. M*ₜ* is a positive integer less than or equal to M. K*ₜ* is a positive integer greater than or equal to M*ₜ*. *t* is a positive integer from 1 to T. The resource pattern of the *t*^{th} base reference signal resource indicates a mapping relationship between a reference signal of each of the M*ₜ* ports and a time-frequency resource. The base channel estimation assistance information of the *t*^{th} base reference signal resource is used to estimate, based on a channel measurement result of the M*ₜ* ports, a channel of the K*ₜ* ports.

Optionally, T is a positive integer greater than 1, and at least two of the T base reference signal resources satisfy: Maximum quantities of ports for transmitting reference signals are different, and/or maximum quantities of ports supported for channel estimation are different.

Optionally, the transceiver unit 1510 is further configured to receive fourth information. The fourth information indicates an identifier of the first base reference signal resource of the T base reference signal resources.

Optionally, the first CSI is a PMI corresponding to the channel of the k₁ ports, or the first CSI is a channel estimation result indicating the channel of the k₁ ports. m₁ is equal to M, and k₁ is less than K. The processing unit 1520 is further configured to determine, based on indexes of the k₁ ports in the K ports, the first channel estimation assistance information from the base channel estimation assistance information corresponding to the first base reference signal resource.

Optionally, the first CSI is a PMI corresponding to the channel of the k₁ ports, or the first CSI is a channel estimation result indicating the channel of the k₁ ports. m₁ is equal to M, and k₁ is less than K. The processing unit 1520 is further configured to determine, based on indexes of the m₁ ports in the M ports and indexes of the k₁ ports in the K ports, the first channel estimation assistance information from the base channel estimation assistance information corresponding to the first base reference signal resource.

Optionally, the transceiver unit 1510 is further configured to receive fifth information. The fifth information indicates the indexes of the m₁ ports in the M ports or an extraction rule for extracting the m₁ ports from the M ports.

Optionally, the transceiver unit 1510 is further configured to receive sixth information. The sixth information indicates the indexes of the k₁ ports in the K ports.

Optionally, the transceiver unit 1510 is further configured to receive, on a second resource, a second reference signal. The second resource is from the first base reference signal resource. The second reference signal is a reference signal of m₂ ports. The m₂ ports are from the m₁ ports. m₂ is a positive integer less than or equal to m₁. The processing unit 1520 is further configured to determine, based on the first channel estimation assistance information, second channel estimation assistance information. The second channel estimation assistance information is used to estimate, based on a channel measurement result of the m₂ ports, a channel of k₂ ports. The k₂ ports are from the k₁ ports. k₂ is a positive integer greater than or equal to m₂ and less than or equal to k₁. The processing unit 1520 is further configured to determine, based on the second reference signal and the second channel estimation assistance information, second CSI. The second CSI corresponds to the channel of the k₂ ports. The transceiver unit 1510 is further configured to send the second CSI.

For more detailed descriptions of the transceiver unit 1510 and the processing unit 1520, directly refer to related descriptions in the embodiment shown in FIG. 4, FIG. 5, FIG. 8, FIG. 9, or FIG. 10. Details are not described herein again.

In another possible design, the apparatus 1500 is configured to implement functions of the network device in the method embodiment shown in FIG. 4, FIG. 5, FIG. 8, FIG. 9, or FIG. 10.

For example, the transceiver unit 1510 is configured to send, on a first resource, a first reference signal. The first resource is from a first base reference signal resource. The first base reference signal resource includes R reference signal resource units for transmitting a reference signal of M ports. The reference signal of the M ports supports channel estimation for K ports. K is less than or equal to a sum of quantities of ports supported for channel estimation by the R reference signal resource units, respectively, and is greater than a quantity of ports supported for channel estimation by any one of the R reference signal resource units. The first reference signal is a reference signal of m₁ ports. The m₁ ports are from the M ports. m₁ is less than or equal to M. M is less than or equal to K. m₁, R, M, and K are positive integers. The transceiver unit 1510 is configured to receive first CSI. The first CSI corresponds to a channel of k₁ ports. The k₁ ports are from the K ports. k₁ is a positive integer greater than or equal to m₁ and less than or equal to K.

Optionally, the first base reference signal resource includes R reference signal resource units, K is less than or equal to a sum of quantities of ports supported for channel estimation by the R reference signal resource units, respectively, and is greater than a quantity of ports supported for channel estimation by any one of the R reference signal resource units, and R is a positive integer.

Optionally, the first resource includes S reference signal resource units of the R reference signal resource units. k₁ is a quantity of ports supported for channel estimation by the S reference signal resource units, and k₁ is greater than a quantity of ports supported for channel estimation by any one of the S reference signal resource units. S is a positive integer less than or equal to R. The transceiver unit 1510 is further configured to send, on the S reference signal resource units, the first reference signal.

Optionally, the transceiver unit 1510 is further configured to send first information. The first information indicates one or more of the following of each of the R reference signal resource units: a resource pattern, a port pattern, a quantity of ports supported for channel estimation, or channel estimation assistance information. An *r*^{th} reference signal resource unit of the R reference signal resource units is used to transmit a reference signal of L*ᵣ* ports. The reference signal of the L*ᵣ* ports supports channel estimation for N*ᵣ* ports. N*ᵣ* is a quantity of ports supported for channel estimation by the *r*^{th} reference signal resource unit. L*ᵣ* is a positive integer less than or equal to M. N*ᵣ* is a positive integer less than or equal to K and greater than or equal to L*ᵣ*. *r* is a positive integer from 1 to R. The resource pattern of the *r*^{th} reference signal resource unit indicates a mapping relationship between a reference signal of each of the L*ᵣ* ports and a time-frequency resource. The port pattern of the *r*^{th} reference signal resource unit indicates indexes of the L*ᵣ* ports in the N*ᵣ* ports. The channel estimation assistance information of the *r*^{th} reference signal resource unit is used to estimate, based on a channel measurement result of the L*ᵣ* ports, a channel of the N*ᵣ* ports. The base channel estimation assistance information is determined based on the channel estimation assistance information respectively corresponding to the R reference signal resources.

Optionally, the transceiver unit 1510 is further configured to send second information. The second information indicates the S reference signal resource units of the R reference signal resource units.

Optionally, the transceiver unit 1510 is further configured to send indication information of each of the S reference signal resource units. Indication information of an *s*^{th} reference signal resource unit of the S reference signal resource units indicates one or more of the following of the *s*^{th} reference signal resource unit: a resource pattern, a quantity of ports supported for channel estimation, channel estimation assistance information, or an identifier of the first base reference signal resource. The S reference signal resource units are from the R reference signal resource units. An *rₛ*^{th} reference signal resource unit of the S reference signal resource units is used to transmit a reference signal of L *_{rₛ}* ports. The reference signal of the L*_{rₛ}* ports supports channel estimation for N *_{rₛ}* ports. N*_{rₛ}* is a quantity of ports supported for channel estimation by the *rₛ*^{th} reference signal resource unit. L*_{rₛ}* is a positive integer less than or equal to M. is a positive integer less than or equal to K and greater than or equal to L*_{rₛ}* . *rₛ* represents an identifier, in the R reference signal resource units, of the *s*^{th} reference signal resource unit of the S reference signal resource units. The resource pattern of the *rₛ*^{th} reference signal resource unit indicates a mapping relationship between a reference signal of each of the L*_{rₛ}* ports and a time-frequency resource. The port pattern of the *rₛ*^{th} reference signal resource unit indicates indexes of the L*_{rₛ}* ports in the N*_{rₛ}* ports. The channel estimation assistance information of the *rₛ*^{th} reference signal resource unit is used to estimate, based on a channel measurement result of the L*ᵣₛ* ports, a channel of the N*_{rₛ}* ports. The base channel estimation assistance information is determined based on the channel estimation assistance information respectively corresponding to the R reference signal resource units. The S reference signal resource units have a same concatenation identifier to indicate that channel matrices estimated based on the first reference signal transmitted on the S reference signal resource units support concatenation.

Optionally, the first CSI includes a PMI corresponding to the channel of the k₁ ports, or indicates a channel estimation result corresponding to the channel of the k₁ ports. The first channel estimation assistance information includes channel estimation assistance information respectively corresponding to the S reference signal resource units in the base channel estimation assistance information. The first reference signal and the first channel estimation assistance information are used to determine the first CSI.

Optionally, the k₁ ports include at least one reference port, and a time-frequency resource corresponding to each of the at least one reference port is included in at least two of the S reference signal resource units. The S reference signal resource units are used to concatenate, by using each of the at least one reference port as a reference and according to a concatenation rule, channels respectively corresponding to the S reference signal resource units, to obtain the channel of the k₁ ports.

Optionally, the at least one reference port is determined according to a first rule, where the first rule is predefined in a protocol, or is indicated by the network device; or the at least one reference port is indicated by the network device.

Optionally, the concatenation rule includes: horizontally concatenating, from left to right in ascending order of identifiers corresponding to a plurality of reference signal resource units, channels respectively corresponding to the plurality of reference signal resource units.

Optionally, the transceiver unit 1510 is further configured to send, on the first base reference signal resource, the first reference signal.

Optionally, the transceiver unit 1510 is further configured to send third information. The third information indicates one or more of the following of each of the T base reference signal resources: a resource pattern, a maximum quantity of ports supported for channel estimation, and base channel estimation assistance information.

A *t*^{th} base reference signal resource of the T base reference signal resources is used to transmit a reference signal of a maximum of M*ₜ* ports. The reference signal transmitted using the *t*^{th} base reference signal resource supports channel estimation for a maximum of K*ₜ* ports. K*ₜ* is a maximum quantity of ports supported for channel estimation by the *t*^{th} base reference signal resource. M*ₜ* is a positive integer less than or equal to M. K*ₜ* is a positive integer greater than or equal to M*ₜ*. *t* is a positive integer from 1 to T. The resource pattern of the *t*^{th} base reference signal resource indicates a mapping relationship between a reference signal of each of the Mt ports and a time-frequency resource. The base channel estimation assistance information of the *t*^{th} base reference signal resource is used to estimate, based on a channel measurement result of the M*ₜ* ports, a channel of the K*ₜ* ports.

Optionally, T is a positive integer greater than 1, and at least two of the T base reference signal resources satisfy: Maximum quantities of ports for transmitting reference signals are different, and/or maximum quantities of ports supported for channel estimation are different.

Optionally, the transceiver unit 1510 is further configured to send fourth information. The fourth information indicates an identifier of the first base reference signal resource of the T base reference signal resources.

Optionally, the first CSI is a PMI corresponding to the channel of the k₁ ports, or the first CSI is a channel estimation result indicating the channel of the k₁ ports. m₁ is equal to M, and k₁ is less than K. The base channel estimation assistance information of the first base reference signal resource is used to determine the first channel estimation assistance information.

Optionally, the transceiver unit 1510 is further configured to send fifth information. The fifth information indicates the indexes of the m₁ ports in the M ports or an extraction rule for extracting the m₁ ports from the M ports.

Optionally, the transceiver unit 1510 is further configured to send sixth information. The sixth information indicates the indexes of the k₁ ports in the K ports.

Optionally, the transceiver unit 1510 is further configured to send, on a second resource, a second reference signal. The second resource is from the first base reference signal resource. The second reference signal is a reference signal of m₂ ports. The m₂ ports are from the m₁ ports. m₂ is a positive integer less than or equal to m₁. The transceiver unit 1510 is further configured to receive the second CSI. The second CSI corresponds to a channel of k₂ ports. The k₂ ports are from the k₁ ports. k₂ is a positive integer greater than or equal to m₂ and less than or equal to k₁.

For more detailed descriptions of the transceiver unit 1510 and the processing unit 1520, directly refer to related descriptions in the method embodiment shown in FIG. 4, FIG. 5, FIG. 8, FIG. 9, or FIG. 10. Details are not described herein again.

In still another possible design, the apparatus 1500 may be configured to implement functions of the network device in the method embodiment shown in FIG. 4, FIG. 5, FIG. 8, FIG. 9, or FIG. 10.

For example, the transceiver unit 1510 is configured to send, on a first base reference signal resource, a first reference signal. The first base reference signal resource is used to transmit a reference signal of a maximum of M ports. The reference signal of the M ports supports channel estimation for a maximum of K ports. The first reference signal is a reference signal of m₁ ports. The m₁ ports are from the M ports. m₁ is less than or equal to M. M is less than or equal to K. m₁, M, and K are positive integers. The transceiver unit 1510 is further configured to receive first channel state information CSI. The first CSI corresponds to a channel of k₁ ports. The k₁ ports are from the K ports. k₁ is a positive integer greater than or equal to m₁ and less than or equal to K.

It should be noted that the transceiver unit may also be referred to as a transceiver module, a transceiver, a transceiver machine, a transceiver apparatus, or the like. The processing unit may also be referred to as a processor, a processing board, a processing module, a processing apparatus, or the like. Optionally, the transceiver unit is configured to perform a sending operation and a receiving operation performed by the terminal or the network device in the foregoing methods. A component that is in the communication module and that is configured to implement a receiving function may be considered as a receiving unit, and a component that is in the communication module and that is configured to implement a sending function may be considered as a sending unit. In other words, the transceiver unit includes a receiving unit and a sending unit.

It should be further noted that in a possible design, the transceiver unit and/or the processing unit may be implemented via a virtual module. For example, the processing unit may be implemented via a software functional unit or a virtual apparatus, and the transceiver unit may be implemented via a software function or a virtual apparatus. In another possible design, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

In this embodiment of this application, division into the units is an example, and is merely a logical function division. In actual implementation, another division manner may be used. In addition, functional modules in the examples in embodiments of this application may be integrated into one processor, or each of the modules may exist alone physically, or two or more modules are integrated into one module. The integrated module may be implemented in a form of hardware, or may be implemented in a form of a software functional module.

FIG. 16 shows another communication apparatus provided in this application. The communication apparatus 1600 includes a processor 1610. The processor 1210 may be configured to execute a computer program or instructions in a memory, to implement steps performed by the terminal or steps performed by the network device in the foregoing method embodiment shown in FIG. 4, FIG. 5, FIG. 8, FIG. 9, or FIG. 10.

Optionally, the apparatus 1600 further includes a communication interface 1630. The processor 1610 and the communication interface 1630 are coupled to each other. It may be understood that the communication interface 1630 may be a transceiver or an input/output interface. Optionally, the apparatus 1600 further includes an antenna 1640, and the communication interface 1630 may implement a transceiver function of the communication apparatus 1600 by using the antenna 1640.

Optionally, the communication apparatus 1600 may further include a memory 1620, configured to store instructions executed by the processor 1610, or store input data required by the processor 1610 to run instructions, or store data generated after the processor 1610 runs instructions.

When the communication apparatus 1600 is configured to implement the method shown in FIG. 4, FIG. 5, FIG. 8, FIG. 9, or FIG. 10, the processor 1610 is configured to perform a function of the processing unit, and the communication interface 1630 is configured to perform a function of the transceiver unit. Whether the communication interface 1630 and the antenna 1640 are configured to perform sending or receiving may be specifically determined based on whether the communication interface 1630 and the antenna 1640 are configured to perform a sending action or a receiving action in a solution performed by the communication apparatus 1600.

When the communication apparatus 1600 is a chip used in a terminal, the chip implements a function of the terminal in the foregoing method embodiment. The chip of the terminal receives a signal from another module (for example, a radio frequency module or an antenna) in the terminal, where the signal may be sent by a network device to the terminal; or the chip of the terminal sends a signal to another module (for example, a radio frequency module or an antenna) in the terminal, where the signal may be sent by the terminal to a network device.

When the communication apparatus 1600 is a chip used in a network device, the chip implements a function of the network device in the foregoing method embodiment. The chip of the network device receives a signal from another module (for example, a radio frequency module or an antenna) in the network device, where the signal may be sent by a terminal to the network device; or the chip of the network device sends a signal to another module (for example, a radio frequency module or an antenna) in the network device, where the signal may be sent by the network device to a terminal.

It may be understood that when the communication apparatus 1600 is a terminal or a network device, the communication interface 1630 may be a transceiver, and may specifically include a transmitter and a receiver. The transmitter is configured to send a signal, and the receiver is configured to receive a signal. When the communication apparatus 1600 is a chip used in a terminal or a network device, the communication interface 1630 may be an input/output circuit, a bus, a module, a pin, or another type of communication interface. An input circuit in the input/output circuit may be configured to perform receiving, and an output interface may be configured to perform sending.

It should be understood that, in the communication apparatus 1600 shown in FIG. 16, the processor 1610 may correspond to the processing unit 1520 in the communication apparatus 1500, and the communication interface 1630 and the antenna 1640 may correspond to the transceiver unit 1510 in the communication apparatus 1500.

It should be further understood that the coupling in embodiments of this application is an indirect coupling or a communication connection between apparatuses, units, or modules, may be in an electrical, mechanical, or another form, and is used for information exchange between the apparatuses, the units, or the modules. The processor 1610 may operate in collaboration with the memory 1620, the communication interface 1630, and the antenna 1640. In this embodiment of this application, a specific connection medium between the processor 1610 and the communication interface 1630, between the processor 1610 and the memory 1620, and between the communication interface 1630 and the antenna 1640 is not limited.

Optionally, the processor 1610, the communication interface 1630, and the memory 1620 are connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

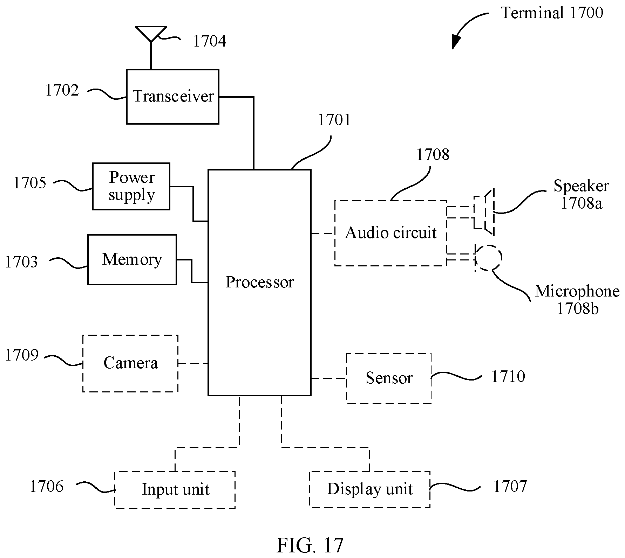

FIG. 17 is a diagram of a structure of a terminal according to an embodiment of this application. As shown in FIG. 17, the terminal 1700 may be used in the system shown in FIG. 1, to perform a function of the terminal in the foregoing method embodiments. As shown in the figure, the terminal 1700 includes a processor 1701 and a transceiver 1702. Optionally, the terminal 1700 further includes a memory 1703. The processor 1701, the transceiver 1702, and the memory 1703 may communicate with each other through an internal connection path, to transfer a control signal and/or a data signal. The memory 1703 is configured to store a computer program. The processor 1701 is configured to invoke and run the computer program in the memory 1703, to control the transceiver 1702 to receive or send a signal. Optionally, the terminal 1700 may further include an antenna 1704, configured to send, via a radio signal, uplink data or uplink control signaling output by the transceiver 1702.

The processor 1701 and the memory 1703 may be integrated into one processing apparatus. The processor 1701 is configured to execute program code stored in the memory 1703, to implement the foregoing functions. During specific implementation, the memory 1703 may alternatively be integrated into the processor 1701, or may be independent of the processor 1701. The processor 1701 may correspond to the processing unit in FIG. 11 or the processor in FIG. 12.

The transceiver 1702 may correspond to the transceiver unit in FIG. 11 or the communication interface in FIG. 12, and may also be referred to as a transceiver unit. The transceiver 1702 may include a receiver (which is also referred to as a receiver machine or a receiver circuit) and a transmitter (which is also referred to as a transmitter machine or a transmitter circuit). The receiver is configured to receive a signal, and the transmitter machine is configured to transmit a signal.

It should be understood that the terminal 1700 shown in FIG. 17 can implement processes related to the terminal in the method embodiment shown in FIG. 4, FIG. 5, FIG. 8, FIG. 9, or FIG. 10. Operations and/or functions of modules in the terminal 1700 are respectively used to implement corresponding procedures in the foregoing method embodiments. For details, refer to the descriptions in the foregoing method embodiments. To avoid repetition, detailed descriptions are properly omitted herein.

The processor 1701 may be configured to perform an action that is implemented inside the terminal and that is described in the foregoing method embodiments. The transceiver 1702 may be configured to perform actions of the terminal sending to or receiving from the network device as described in the foregoing method embodiments. For details, refer to the descriptions in the foregoing method embodiments. Details are not described herein again.

Optionally, the terminal 1700 may further include a power supply 1705, configured to supply power to various components or circuits in the terminal. In this embodiment of this application, a rectifier may be connected between the power supply 1705 and the antenna 1704. After an electromagnetic wave signal is received by the antenna 1704 and converted into an alternating current signal, the alternating current signal may be further converted into a direct current signal by using the rectifier, and then the direct current signal is output to the power supply 1705.

In addition, to improve functions of the terminal, the terminal 1700 may further include one or more of an input unit 1706, a display unit 1707, an audio circuit 1708, a camera 1709, a sensor 1710, and the like. The audio circuit may further include a speaker 1708a, a microphone 1708b, and the like.

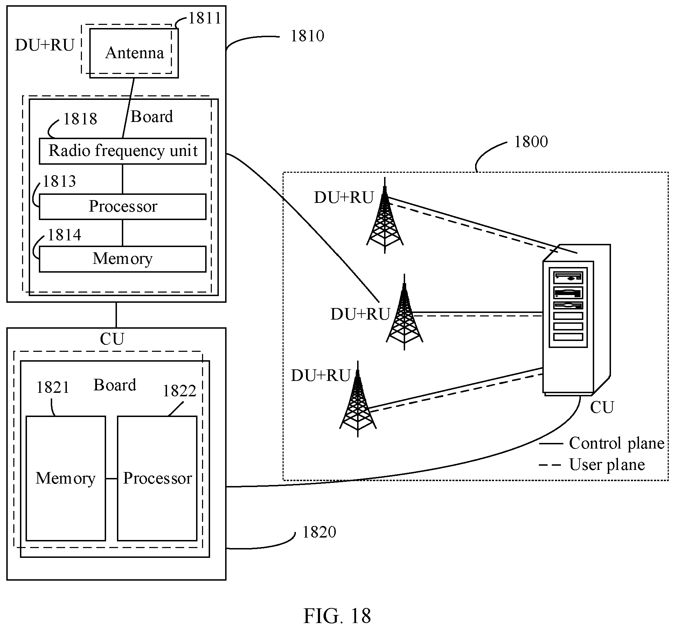

FIG. 18 is a diagram of a structure of a network device according to an embodiment of this application. For example, FIG. 18 may be a diagram of a structure of a base station. The base station 1800 shown in FIG. 18 may be used in the system shown in FIG. 1, to perform a function of the network device in the foregoing method embodiments. As shown in the figure, the base station 1800 may include one or more of the following: one or more (DU+RU)s 1810 and one or more CUs 1820. The CU 1820 may communicate with a next generation core network (next generation core, NG core). The DU may include at least one antenna 1811, at least one radio frequency unit 1812, at least one processor 1813, and at least one memory 1818. The DU is mainly configured to receive and send radio frequency signals, convert a radio frequency signal and a baseband signal, and perform some baseband processing. The CU 1820 may include at least one processor 1822 and at least one memory 1821. The CU 1820 and the DU may communicate with each other through an interface. A control plane (control plane, CP) interface may be Fs-C, for example, F1-C, and a user plane (user plane, UP) interface may be Fs-U, for example, F1-U. The DU and the RU may cooperate to jointly implement a function of a physical (physical, PHY) layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function and a radio frequency function of the PHY layer. The higher-layer function of the PHY layer may include a part of functions of the PHY layer, and the part of functions is closer to a MAC layer. The lower-layer function of the PHY layer may include another part of functions of the PHY layer, and the part of functions is closer to an intermediate radio frequency side.

The CU 1820 is mainly configured to perform baseband processing, control a base station, and the like. The DU and the CU 1820 may be physically disposed together, or may be physically disposed separately. That is, the base station is a distributed base station. The CU 1820 is a control center of the base station, may correspond to the processing unit in FIG. 11 or the processor in FIG. 12, may also be referred to as a processing unit, and is mainly configured to complete a baseband processing function. For example, the CU 1820 may be configured to control the base station to perform an operation procedure related to the access network device in the foregoing method embodiments.

Specifically, baseband processing on the CU and the DU may be divided based on a protocol layer of a wireless network. For example, functions of a packet data convergence protocol (packet data convergence protocol, PDCP) layer and a protocol layer above the PDCP layer are set on the CU, and functions of a protocol layer, for example, an RLC layer and a MAC layer, below the PDCP layer are set on the DU. For another example, the CU implements functions of an RRC layer and a PDCP layer, and the DU implements functions of an RLC layer, a MAC layer, and a PHY layer.

In addition, optionally, the base station 1800 may include one or more radio frequency units (RU), one or more DUs, and one or more CUs. The DU may include at least one processor 1813 and at least one memory 1818, the RU may include at least one antenna 1811 and at least one radio frequency unit 1812, and the CU may include at least one processor 1822 and at least one memory 1821.

In an instance, the CU 1820 may include one or more boards. A plurality of boards may jointly support a radio access network (for example, a 5G network) with a single access standard, or may separately support radio access networks (for example, an LTE network, a 5G network, or another network) with different access standards. The memory 1821 and the processor 1822 may serve the one or more boards. In other words, a memory and a processor may be disposed on each board. Alternatively, a plurality of boards may share a same memory and a same processor. In addition, a necessary circuit may be further disposed on each board. The DU may include one or more boards. A plurality of boards may jointly support a radio access network (for example, a 5G network) with a single access standard, or may separately support radio access networks (for example, an LTE network, a 5G network, or another network) with different access standards. The memory 1818 and the processor 1813 may serve the one or more boards. In other words, a memory and a processor may be disposed on each board. Alternatively, a plurality of boards may share a same memory and a same processor. In addition, a necessary circuit may be further disposed on each board.

It should be understood that the base station 1800 shown in FIG. 18 can implement processes related to the network device in the method embodiment shown in FIG. 4, FIG. 5, FIG. 8, FIG. 9, or FIG. 10. Operations and/or functions of modules in the base station 1800 are respectively used to implement corresponding procedures in the foregoing method embodiments. For details, refer to the descriptions in the foregoing method embodiments. To avoid repetition, detailed descriptions are properly omitted herein.

The BBU 1820 may be configured to perform an action that is implemented inside the network device and that is described in the foregoing method embodiments. The RRU 1810 may be configured to perform actions of the network device sending to or receiving from the terminal as described in the foregoing method embodiments. For details, refer to the descriptions in the foregoing method embodiments. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM). It should be noted that the memory of the systems and methods described in this specification includes but is not limited to these and any other proper types of memories.

This application further provides a communication system. The communication system includes the foregoing network device and terminal.

This application further provides a computer program product. The computer program product includes a computer program (which may also be referred to as code or instructions). When the computer program is run, a computer is caused to perform the method performed by the terminal or the method performed by the network device in the embodiment shown in FIG. 4, FIG. 5, FIG. 8, FIG. 9, or FIG. 10.

This application further provides a computer-readable storage medium. The computer-readable storage medium stores a computer program (which may also be referred to as code or instructions). When the computer program is run, a computer is caused to perform the method performed by the terminal or the method performed by the network device in the embodiment shown in FIG. 4, FIG. 5, FIG. 8, FIG. 9, or FIG. 10.

Terms such as "unit" and "module" used in this specification may represent computerrelated entities, hardware, firmware, combinations of hardware and software, software, or software being executed.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the function units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

When functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in the form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, on a first resource, a first reference signal, wherein the first resource is from a first base reference signal resource, the first base reference signal resource is used to transmit a reference signal of a maximum of M ports, the reference signal of the M ports supports channel estimation for a maximum of K ports, the first reference signal is a reference signal of m₁ ports, the m₁ ports are from the M ports, m₁ is less than or equal to M, M is less than or equal to K, and m₁, M, and K are positive integers;
determining, based on the first reference signal and first channel estimation assistance information, first channel state information CSI, wherein the first CSI corresponds to a channel of k₁ ports, the first channel estimation assistance information is determined based on base channel estimation assistance information corresponding to the first base reference signal resource, the base channel estimation assistance information is used to estimate, based on a channel measurement result of the M ports, a channel of the K ports, the first channel estimation assistance information is used to estimate, based on a channel measurement result of the m₁ ports, the channel of the k₁ ports, the k₁ ports are from the K ports, and k₁ is a positive integer greater than or equal to m₁ and less than or equal to K; and
sending the first CSI.

2. The method according to claim 1, wherein the first base reference signal resource comprises R reference signal resource units, K is less than or equal to a sum of quantities of ports supported for channel estimation by the R reference signal resource units, respectively, and is greater than a quantity of ports supported for channel estimation by any one of the R reference signal resource units, and R is a positive integer.

3. The method according to claim 2, wherein the first resource comprises S reference signal resource units of the R reference signal resource units, k₁ is a quantity of ports supported for channel estimation by the S reference signal resource units, k₁ is greater than a quantity of ports supported for channel estimation by any one of the S reference signal resource units, and S is a positive integer less than or equal to R; and
the receiving, on the first resource, the first reference signal comprises:
receiving, on the S reference signal resource units, the first reference signal.

4. The method according to claim 3, wherein before receiving, on the first resource, the first reference signal, the method further comprises:
receiving first information, wherein the first information indicates one or more of the following of each of the R reference signal resource units: a resource pattern, a port pattern, a quantity of ports supported for channel estimation, or channel estimation assistance information; and
an *r*^{th} reference signal resource unit of the R reference signal resource units is used to transmit a reference signal of L*ᵣ* ports, the reference signal of the L*ᵣ* ports supports channel estimation for N*ᵣ* ports, N*ᵣ* is a quantity of ports supported for channel estimation by the *r*^{th} reference signal resource unit, L*ᵣ* is a positive integer less than or equal to M, N*ᵣ* is a positive integer less than or equal to K and greater than or equal to L*ᵣ*, and *r* is a positive integer from 1 to R; the resource pattern of the *r*^{th} reference signal resource unit indicates a mapping relationship between a reference signal of each of the L*ᵣ* ports and a time-frequency resource, the port pattern of the *r*^{th} reference signal resource unit indicates indexes of the L*ᵣ* ports in the N*ᵣ* ports, the channel estimation assistance information of the *r*^{th} reference signal resource unit is used to estimate, based on a channel measurement result of the L*ᵣ* ports, a channel of the N*ᵣ* ports, and the base channel estimation assistance information is determined based on the channel estimation assistance information respectively corresponding to the R reference signal resources.

5. The method according to claim 4, wherein the method further comprises:
receiving second information, wherein the second information indicates the S reference signal resource units of the R reference signal resource units.

6. The method according to claim 3, wherein the method further comprises:
receiving indication information of each of the S reference signal resource units, wherein indication information of an *s*^{th} reference signal resource unit of the S reference signal resource units indicates one or more of the following of the *s*^{th} reference signal resource unit: a resource pattern, a quantity of ports supported for channel estimation, channel estimation assistance information, or a concatenation identifier; and
the S reference signal resource units are from the R reference signal resource units, an *rₛ*^{th} reference signal resource unit of the S reference signal resource units is used to transmit a reference signal of L*_{rₛ}* ports, the reference signal of the L*_{rₛ}* ports supports channel estimation for N*_{rₛ}* ports, N*ᵣₛ* is a quantity of ports supported for channel estimation by the *rₛ*^{th} reference signal resource unit, L*_{rₛ}* is a positive integer less than or equal to M, N*_{rₛ}* is a positive integer less than or equal to K and greater than or equal to L*_{rₛ}*, and *rₛ* represents an identifier of the *s*^{th} reference signal resource unit of the S reference signal resource units in the R reference signal resource units; the resource pattern of the *rₛ*^{th} reference signal resource unit indicates a mapping relationship between a reference signal of each of the L*_{rₛ}* ports and a time-frequency resource, the port pattern of the *rₛ*^{th} reference signal resource unit indicates indexes of the L*_{rₛ}* ports in the N*_{rₛ}* ports, the channel estimation assistance information of the *rₛ*^{th} reference signal resource unit is used to estimate, based on a channel measurement result of the L*_{rₛ}* ports, a channel of the N*_{rₛ}* ports, the base channel estimation assistance information is determined based on the channel estimation assistance information respectively corresponding to the R reference signal resource units, and the S reference signal resource units have a same concatenation identifier to indicate that channel matrices estimated based on the first reference signal transmitted on the S reference signal resource units support concatenation.

7. The method according to any one of claims 4 to 6, wherein the first CSI comprises a PMI corresponding to the channel of the k₁ ports, or indicates a channel estimation result corresponding to the channel of the k₁ ports, and the first channel estimation assistance information comprises channel estimation assistance information that is in the base channel estimation assistance information and that respectively corresponds to the S reference signal resource units; and
the determining, based on the first reference signal and the first channel estimation assistance information, the first CSI comprises:
performing channel estimation based on the first reference signal received on each of the S reference signal resource units and channel estimation assistance information that is in the base channel estimation assistance information and that corresponds to each reference signal resource unit, to obtain channels respectively corresponding to the S reference signal resource units;
obtaining, based on the channels respectively corresponding to the S reference signal resource units, the channel of the k₁ ports; and
determining, based on the channel of the k₁ ports, the first CSI.

8. The method according to claim 1, wherein the first base reference signal resource is one of T base reference signal resources, and before receiving, on the first resource, the reference signal, the method further comprises:
receiving third information, wherein the third information indicates one or more of the following of each of the T base reference signal resources: a resource pattern, a maximum quantity of ports supported for channel estimation, and base channel estimation assistance information; and
a *t*^{th} base reference signal resource of the T base reference signal resources is used to transmit a reference signal of a maximum of M*ₜ* ports, the reference signal transmitted using the *t*^{th} base reference signal resource supports channel estimation for a maximum of K*ₜ* ports, K*ₜ* is a maximum quantity of ports supported for channel estimation by the *t*^{th} base reference signal resource, M*ₜ* is a positive integer less than or equal to M, K*ₜ* is a positive integer greater than or equal to M*ₜ*, and *t* is a positive integer from 1 to T; the resource pattern of the *t*^{th} base reference signal resource indicates a mapping relationship between a reference signal of each of the M*ₜ* ports and a time-frequency resource, and the base channel estimation assistance information of the *t*^{th} base reference signal resource is used to estimate, based on a channel measurement result of the M*ₜ* ports, a channel of the K*ₜ* ports.

9. The method according to claim 8, wherein T is a positive integer greater than 1, and at least two of the T base reference signal resources satisfy: Maximum quantities of ports for transmitting reference signals are different, and/or maximum quantities of ports supported for channel estimation are different.

10. The method according to claim 8 or 9, wherein before receiving, on the first resource, the first reference signal, the method further comprises:
receiving fourth information, wherein the fourth information indicates an identifier of the first base reference signal resource of the T base reference signal resources.

11. The method according to any one of claims 8 to 10, wherein the first CSI is a PMI corresponding to the channel of the k₁ ports, or the first CSI is a channel estimation result indicating the channel of the k₁ ports, m₁ is equal to M, and k₁ is less than K; and
determining, based on the base channel estimation assistance information corresponding to the first base reference signal resource, the first channel estimation assistance information comprises:
determining, based on indexes of the k₁ ports in the K ports, the first channel estimation assistance information from the base channel estimation assistance information corresponding to the first base reference signal resource.

12. The method according to claim 11, wherein the first CSI is the PMI corresponding to the channel of the k₁ ports, or the first CSI is the channel estimation result indicating the channel of the k1 ports, m₁ is less than M, and k₁ is less than K; and
determining, based on the base channel estimation assistance information corresponding to the first base reference signal resource, the first channel estimation assistance information comprises:
determining, based on indexes of the m₁ ports in the M ports and the indexes of the k₁ ports in the K ports, the first channel estimation assistance information from the base channel estimation assistance information corresponding to the first base reference signal resource.

13. The method according to any one of claims 8 to 12, wherein the method further comprises:
receiving fifth information, wherein the fifth information indicates the indexes of the m₁ ports in the M ports, or an extraction rule for extracting the m₁ ports from the M ports.

14. The method according to any one of claims 8 to 13, wherein the method further comprises:
receiving sixth information, wherein the sixth information indicates the indexes of the k₁ ports in the K ports.

15. The method according to any one of claims 8 to 14, wherein the method further comprises:
receiving, on a second resource, a second reference signal, wherein the second resource is from the first base reference signal resource, the second reference signal is a reference signal of m₂ ports, the m₂ ports are from the m₁ ports, and m₂ is a positive integer less than or equal to m₁;
determining, based on the first channel estimation assistance information, second channel estimation assistance information, wherein the second channel estimation assistance information is used to estimate, based on a channel measurement result of the m₂ ports, a channel of k₂ ports, the k₂ ports are from the k₁ ports, and k₂ is a positive integer greater than or equal to m₂ and less than or equal to k₁;
determining, based on the second reference signal and the second channel estimation assistance information, second CSI, wherein the second CSI corresponds to the channel of the k₂ ports; and
sending the second CSI.

16. A communication method, comprising:
sending, on a first resource, a first reference signal, wherein the first resource is from a first base reference signal resource, the first base reference signal resource is used to transmit a reference signal of a maximum of M ports, the reference signal of the M ports supports channel estimation for a maximum of K ports, the first reference signal is a reference signal of m₁ ports, the m₁ ports are from the M ports, m₁ is less than or equal to M, M is less than or equal to K, and m₁, M, and K are positive integers; and
receiving first channel state information CSI, wherein the first CSI corresponds to a channel of k₁ ports, the k₁ ports are from the K ports, and k₁ is a positive integer greater than or equal to m₁ and less than or equal to K.

17. The method according to claim 16, wherein the first base reference signal resource comprises R reference signal resource units, K is less than or equal to a sum of quantities of ports supported for channel estimation by the R reference signal resource units, respectively, and is greater than a quantity of ports supported for channel estimation by any one of the R reference signal resource units, and R is a positive integer.

18. The method according to claim 17, wherein the first resource comprises S reference signal resource units of the R reference signal resource units, k₁ is a quantity of ports supported for channel estimation by the S reference signal resource units, k₁ is greater than a quantity of ports supported for channel estimation by any one of the S reference signal resource units, and S is a positive integer less than or equal to R; and
the sending, on the first resource, the first reference signal comprises:
sending, on the S reference signal resource units, the first reference signal.

19. The method according to claim 18, wherein before sending, on the first resource, the first reference signal, the method further comprises:
sending first information, wherein the first information indicates one or more of the following of each of the R reference signal resource units: a resource pattern, a port pattern, a quantity of ports supported for channel estimation, or channel estimation assistance information; and
an *r*^{th} reference signal resource unit of the R reference signal resource units is used to transmit a reference signal of L*ᵣ* ports, the reference signal of the L*ᵣ* ports supports channel estimation for N*ᵣ* ports, N*ᵣ* is a quantity of ports supported for channel estimation by the *r*^{th} reference signal resource unit, L*ᵣ* is a positive integer less than or equal to M, N*ᵣ* is a positive integer less than or equal to K and greater than or equal to L*ᵣ*, and *r* is a positive integer from 1 to R; the resource pattern of the *r*^{th} reference signal resource unit indicates a mapping relationship between a reference signal of each of the L*ᵣ* ports and a time-frequency resource, the port pattern of the *r*^{th} reference signal resource unit indicates indexes of the L*ᵣ* ports in the N*ᵣ* ports, and the channel estimation assistance information of the *r*^{th} reference signal resource unit is used to estimate, based on a channel measurement result of the L*ᵣ* ports, a channel of the N*ᵣ* ports.

20. The method according to claim 19, wherein before sending, on the first resource, the first reference signal, the method further comprises:
sending second information, wherein the second information indicates the S reference signal resource units of the R reference signal resource units.

21. The method according to claim 18, wherein before sending, on the first resource, the first reference signal, the method further comprises:
sending indication information of each of the S reference signal resource units, wherein indication information of an *s*^{th} reference signal resource unit of the S reference signal resource units indicates one or more of the following of the *s*^{th} reference signal resource unit: a resource pattern, a port pattern, a quantity of ports supported for channel estimation, channel estimation assistance information, or a concatenation identifier; and
an *rₛ*^{th} reference signal resource unit of the S reference signal resource units is used to transmit a reference signal of L*_{rₛ}* ports, the reference signal of the L*_{rₛ}* ports supports channel estimation for N*_{rₛ}* ports, *rₛ* represents an identifier of the *s*^{th} reference signal resource unit of the S reference signal resource units in the R reference signal resource units, N*_{rₛ}* is a quantity of ports supported for channel estimation by the *rₛ*^{th} reference signal resource unit, L*_{rₛ}* is a positive integer less than or equal to M, and N*_{rₛ}* is a positive integer less than or equal to K and greater than or equal to L*_{rₛ}* ; the resource pattern of the *rₛ*^{th} reference signal resource unit indicates a mapping relationship between a reference signal of each of the L*_{rₛ}* ports and a time-frequency resource, the port pattern of the *rₛ*^{th} reference signal resource unit indicates indexes of the L*_{rₛ}* ports in the N*_{rₛ}* ports, the channel estimation assistance information of the *rₛ*^{th} reference signal resource unit is used to estimate, based on a channel measurement result of the L*_{rₛ}* ports, a channel of the N*_{rₛ}* ports, and the S reference signal resource units have a same concatenation identifier to indicate that channel matrices estimated based on the first reference signal transmitted on the S reference signal resource units support concatenation.

22. The method according to claim 16, wherein the first base reference signal resource is one of T base reference signal resources, and before sending, on the first resource, the reference signal, the method further comprises:
sending third information, wherein the third information indicates one or more of the following of each of the T base reference signal resources: a resource pattern, a port pattern, a maximum quantity of ports supported for channel estimation, and base channel estimation assistance information; and
a *t*^{th} base reference signal resource of the T base reference signal resources is used to transmit a reference signal of a maximum of M*ₜ* ports, the reference signal transmitted using the *t*^{th} base reference signal resource supports channel estimation for a maximum of K*ₜ* ports, K*ₜ* is a maximum quantity of ports supported for channel estimation by the *t*^{th} base reference signal resource, M*ₜ* is a positive integer less than or equal to K*ₜ*, and *t* is a positive integer from 1 to T; the resource pattern of the *t*^{th} base reference signal resource indicates a mapping relationship between a reference signal of each of the M*ₜ* ports and a time-frequency resource, the port pattern of the *t*^{th} base reference signal resource indicates indexes of the M*ₜ* ports in the K*ₜ* ports, and the base channel estimation assistance information of the *t*^{th} base reference signal resource is used to estimate, based on a channel measurement result of the M*ₜ* ports, a channel of the K*ₜ* ports.

23. The method according to claim 22, wherein T is a positive integer greater than 1, and at least two of the T base reference signal resources satisfy: Maximum quantities of ports for transmitting reference signals are different, and/or maximum quantities of ports supported for channel estimation are different.

24. The method according to claim 22 or 23, wherein before sending, on the first resource, the first reference signal, the method further comprises:
sending fourth information, wherein the fourth information indicates the first base reference signal resource of the T base reference signal resources.

25. The method according to any one of claims 22 to 24, wherein the method further comprises:
sending fifth information, wherein the fifth information indicates indexes of the m₁ ports in the M ports, or an extraction rule for extracting the m₁ ports from the M ports.

26. The method according to any one of claims 22 to 25, wherein the method further comprises:
sending sixth information, wherein the sixth information indicates indexes of the k₁ ports in the K ports.

27. The method according to any one of claims 22 to 26, wherein the method further comprises:
sending, on a second resource, a second reference signal, wherein the second resource is from the first base reference signal resource, the second reference signal is a reference signal of m₂ ports, the m₂ ports are from the m₁ ports, and m₂ is a positive integer less than or equal to m₁; and
receiving second CSI, wherein the second CSI corresponds to a channel of k₂ ports, the k₂ ports are from the k₁ ports, and k₂ is a positive integer greater than or equal to m₂ and less than or equal to k₁.

28. The method according to any one of claims 16 to 27, wherein the first CSI comprises a PMI corresponding to the channel of the k₁ ports, or indicates a channel estimation result corresponding to the channel of the k₁ ports.

29. A communication apparatus, comprising a unit configured to implement the method according to any one of claims 1 to 15, or a unit configured to implement the method according to any one of claims 16 to 28.

30. A communication apparatus, comprising a processor, wherein the processor is configured to execute program code, to cause the communication apparatus to implement the method according to any one of claims 1 to 15 or the method according to any one of claims 16 to 28.

31. A computer-readable storage medium, wherein the computer-readable storage medium stores a computer program, and when the computer program is executed by a processor, the method according to any one of claims 1 to 15 is performed, or the method according to any one of claims 16 to 28 is performed.

32. A computer program product, comprising a computer program, wherein when the computer program is run, the method according to any one of claims 1 to 15 is performed, or the method according to any one of claims 16 to 28 is performed.
